(19) Europäisches Patentamt
European Patent Office
Office européen des brevets

(11) **EP 1 686 746 B1**

(12) **FASCICULE DE BREVET EUROPEEN**

(45) Date de publication et mention de la délivrance du brevet:
**16.04.2008 Bulletin 2008/16**

(51) Int Cl.:
***H04L 12/56*** *(2006.01)*

(21) Numéro de dépôt: **06290178.0**

(22) Date de dépôt: **30.01.2006**

(54) **Transmission de données par paquets à travers un canal de transmission partagé par plusieurs utilisateurs**

Paketedatenübertragung über einen gemeinsam genutzten Übertragungskanal

Packet data transmssion over a shared transmission channel

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **31.01.2005 FR 0500934**

(43) Date de publication de la demande:
**02.08.2006 Bulletin 2006/31**

(73) Titulaire: **AGENCE SPATIALE EUROPEENNE**
**F-75738 Paris Cedex 15 (FR)**

(72) Inventeurs:
• **Casini, Enrico**
**2317 BD Leiden (NL)**
• **Del Rio Herrero, Oscar**
**2314 GD Leiden (NL)**
• **De Gaudenzi, Riccardo**
**2313 ER Leiden (NL)**
• **Delaruelle, Daniel Maurice Eliane**
**9100 Sint-Niklaas (BE)**
• **Choffray, Jean-Pierre Georges Joseph Ghislain**
**6671 Bovigny (BE)**

(74) Mandataire: **Jacquard, Philippe Jean-Luc et al**
**Cabinet ORES**
**36, rue de St Pétersbourg**
**75008 Paris (FR)**

(56) Documents cités:
**WO-A-01/17171      GB-A- 2 309 849**
**US-A1- 2002 089 959**

• **DILLON D: "Differentiated quality of service slotted ALOHA" COMPUTER COMMUNICATIONS AND NETWORKS, 2004. ICCCN 2004. PROCEEDINGS. 13TH INTERNATIONAL CONFERENCE ON CHICAGO, IL, USA 11-13 OCT. 2004, PISCATAWAY, NJ, USA,IEEE, 11 octobre 2004 (2004-10-11), pages 343-346, XP010774541 ISBN: 0-7803-8814-3**

**Description**

L'invention porte sur un procédé de communication numérique par paquets à travers un canal de transmission partagé par une pluralité d'utilisateurs. En particulier, elle vise à résoudre en large partie les conflits d'accès qui se vérifient lorsque deux utilisateurs ou plus cherchent à transmettre simultanément à travers ledit canal.
L'invention se prête à des applications variées, mais elle a été développée plus particulièrement dans le cadre de la télédiffusion numérique avec canal de retour par satellite ou des systèmes d'accès a bande large par satellite (comme par exemple ceux qui utilisent la norme ETSI DVB-RCS ou bien la norme TIA IPoS).

L'arrivée sur le marché de terminaux satellite interactifs à bas coût requiert le développement de protocoles d'accès multiples capables de supporter une grande variété de profils de trafic caractérisant les différentes classes d'utilisateurs. En particulier, les utilisateurs domestiques (« residential users » dans la littérature en langue anglaise) génèrent un grand volume de trafic par rafales (« bursty traffic ») à faible coefficient d'utilisation, pour lequel les protocoles d'assignation en fonction de la demande (DA), couramment utilisés dans les systèmes de communications par satellite, ne sont pas très efficaces car ils introduisent des retards de transmission importants ou bien des inefficacités liées a la signalisation requise par les systèmes a allocation de ressources. Ce problème est connu par l'homme du métier : voir à ce propos l'ouvrage « Digital Video Broadcasting Return Channel via Satellite (DVB-RCS) Background Book », 15 novembre 2002, distribué par la société Nera Broadband Satellites AS, Bergerveien 12 PO Box 91 N-1375 Billingstad, Norvège, par le site Internet http://www.nera.no. Le paragraphe 1.4.3 de cet ouvrage explique que le seul procédé d'accès pratiquement utilisable dans ces conditions est le protocole Aloha à segmentation temporelle (« slotted Aloha », SA), qui cependant n'a qu'une faible efficacité d'utilisation réelle de la capacité du canal pour avoir une probabilité de pertes de paquets acceptable, c'est à dire suffisamment faible. Le document « ETSI TR 101 790 v1.2.1 (2003-01) - Digital Video Broadcasting (DVB) ; Interaction Channel for Satellite Distribution Systems ; Guidelines for the use of EN 301 790 » paragraphe 10.3.3.3, divulgue également l'utilisation du protocole Aloha pour le canal de retour dans un système de télédiffusion numérique par satellite. Ce document, ainsi que le document ETSI EN 301 790 V.1.3.1, mars 2003, définissant les normes pour le canal d'interaction dans le cadre de la norme DVB par satellite, sont disponibles auprès de l'« European Telecommunications Standard Institute » (ETSI), 650 Route des Lucioles, F-06921 Sophia Antipolis Cedex, France.

Dans la pratique, le protocole Aloha est essentiellement utilisé pour des fonctions de signalisation, de requête d'allocation de capacité de transmission et parfois pour la transmission de petits paquets de données.

Le protocole ou procédé « Aloha » est un protocole d'accès aléatoire (RA) développé en 1970 : voir N. Abramson, « The Aloha System - another Alternative for Computer Communications », AFIPS Conf. Proc. Vol. 37, pp. 281 - 285, 1970. Son principe est extrêmement simple : chaque utilisateur transmet ses données indépendamment des autres et attend un accusé de réception. S'il ne le reçoit pas, il retransmet les mêmes données avec un retard aléatoire, et ainsi de suite, jusqu'à qu'elles aient été reçues correctement. Evidemment, si deux ou plusieurs utilisateurs transmettent simultanément, il se vérifie un conflit d'accès, c'est à dire une collision, qui peut comporter la perte des données transmises (collision dite « destructive »). Pour cette raison, le système ne peut fonctionner que si le coefficient d'utilisation de chaque utilisateur (fraction du temps effectivement utilisée pour la transmission) est faible. Une analyse statistique permet de démontrer que le débit normalisé maximal qui peut être obtenu est de seulement 18%. Ce débit maximal est obtenu lorsque le nombre tentatives de transmission de paquets de durée unitaire par unité de temps est égal à 0,5.

Le protocole Aloha à segmentation temporelle (« slotted Aloha », SA) est une variante du procédé Aloha « pure » permettant de doubler le débit maximal par rapport au cas précédent. Un débit normalisé de l'ordre de 36% est ainsi obtenu lorsque le nombre de tentatives de transmission de paquets de durée unitaire par unité de temps est égal à 1. Cette amélioration des prestations est obtenue en synchronisant les utilisateurs, en découpant le temps en intervalles d'une durée prédéterminée (par exemple égale au temps de transmission d'un paquet de données) et en effectuant la transmission des paquets en correspondance desdites intervalles. Voir à ce propos L. G. Roberts « ALOHA Packet Systems with and without Slots and Capture » ARPANET System note 8 (NIC11290), juin 1972.

L'article de Gagan L. Chouldhury et Stephen S. Rappaport « Diversity ALOHA - A Random Access Scheme for Satellite Communications », IEEE Transactions on Communications, vol. COM-31, No. 3, mars 1983, décrit un perfectionnement du protocole SA dit « Aloha avec diversité » (« diversity slotted Aloha », DSA). Le principe de ce procédé consiste à transmettre k>1 répliques de chaque paquet, soit avec un décalage temporel aléatoire (dans les systèmes TDMA), soit simultanément sur des canaux de fréquence différents (dans les systèmes FDMA). L'article cité démontre que, en choisissant opportunément la valeur de k, il est possible d'améliorer les performances du protocole SA, aussi bien en termes de capacité que de délai de transmission, notamment lorsque le système est faiblement chargé (moins d'une tentative de transmission par unité de temps). Les avantages de cette variante étant relativement limités, le protocole SA reste le plus utilisé. Un des rares exemples d'application du protocole DSA est la norme IPoS, développée par la Telecommunication Industry Association (TIA), décrite dans le document TIA-1008 « IP over Satellite », octobre 2003.

En réalité, pour que les retards de transmission et le taux de perte de paquets restent dans des limites acceptables, les protocoles de la famille « Aloha » doivent être utilisés avec un chargement normalisé moyen (nombre de paquets transmis par segment temporel, ou nombre de paquets de durée unitaire par unité de temps, dans le cas du procédé SA pure) de l'ordre de seulement 2 à 5 %, ce qui donne des débits moyens beaucoup plus faibles que les valeurs maximales théoriques citées ci-dessus, avec des différences limitées entre les protocoles Aloha « pur », SA et DSA. Voir à ce propos l'article de D. Raychaudhuri et K. Joseph « Channel Access Protocols for Ku-band VSAT networks : A Comparative Evaluation », IEEE Comm. Magazine, Vol. 26, No. 5, pages 34-44, mai 1998.

Le document WO 01/17171 décrit un procédé de transmission de données TCP/IP d'une station pivot vers une pluralité de terminaux via une liaison satellite utilisant la norme DVB. Un champ dans l'entête de chaque trame DVB est utilisé pour localiser le début d'un nouveau paquet TCP/IP à l'intérieur de la trame. Cela permet une localisation variable des paquets TCP/IP dans la trame DVB, dont il résulte une meilleure utilisation de la bande passante.

Il existe donc un besoin pour un procédé de contrôle d'accès aléatoire au support présentant des performances meilleures que celles du procédé SA et pouvant être utilisé dans le cadre d'un système de communications par satellites ou de télévision interactive. Le procédé s'applique a des systèmes propriétaires et aussi bien a des systèmes standardisées, entre autres ceux qui utilisent la norme DVB-RCS ou la norme IpoS. Avantageusement, un tel procédé devrait rendre nécessaire un nombre limité de modifications au niveau de la couche physique des systèmes TDMA-FM (accès multiple à répartition du temps à fréquences multiples) actuels. Avantageusement, un tel procédé devrait aussi pouvoir se combiner facilement avec des procédés à assignation en fonction de la demande (AD) de manière à pouvoir gérer efficacement une grande diversité de profils de trafic. Ce besoin est accentué par le développement des terminaux satellite interactifs « grand public », qui réduisent l'agrégation du traffic au niveau du terminal satellite et, par conséquent, poussent vers une utilisation accrue des protocoles d'accès aléatoire.

Un premier objet de la présente invention consiste à fournir un procédé de transmission de paquets de données basé sur un perfectionnement de protocole « Aloha avec diversité » et permettant, lorsqu'une des répliques d'un paquet est reçue, de localiser temporellement et/ou en fréquence la ou les autres répliques du même paquet, même si cette ou ces dernières ont été corrompues par des collisions au point de ne pas pouvoir été décodée correctement. Un tel procédé peut être utilisé dans un but de diagnostic du canal de transmission, mais il est surtout intéressant en ce qu'il permet la mise en oeuvre, au niveau du récepteur, d'un procédé de récupération des paquets transmis.

Un tel procédé de récupération de paquets constitue un deuxième objet de l'invention.

La mise en oeuvre simultanée d'un tel procédé de transmission et d'un tel procédé de récupération de paquets au niveau du récepteur constitue un nouveau protocole de communication avec contrôle d'accès aléatoire au support qui a été dénommé par ses inventeurs « Aloha à segmentation temporelle avec diversité avec résolution des conflits d'accès », ou CRDSA (depuis l'anglais : « Contention Resolution Diversity Slotted Aloha »).

Un autre objet de l'invention consiste à combiner ledit procédé CRDSA avec un procédé DA conventionnel pour obtenir un protocole permettant de gérer efficacement des profiles de trafic très différents et variables dans le temps. Un tel procédé est appelé CRDSA-DA par la suite.

D'autres objets de l'invention consistent à fournir un équipement de transmission (« modulateur ») et un équipement de récupération de paquets à la réception (« démodulateur ») adaptés à la mise en oeuvre du procédé CRDSA (ou CRDSA-DA), particulièrement dans le cadre d'un système interactif par satellite.

Un premier objet de l'invention est donc un procédé de transmission de paquets de données à travers un canal de transmission partagé par une pluralité d'utilisateurs selon la revendication 1. Un tel procédé comporte des étapes:

-    de génération d'au moins deux répliques de chaque paquet à transmettre ;
-    d'émission à travers ledit canal de transmission desdites répliques, séparées par des décalages temporels et/ou de fréquence aléatoires ;

et est caractérisé en ce qu'il comprend également une étape d'insertion, dans chaque réplique, d'une information de signalisation permettant de localiser temporellement et/ou en fréquence la ou les autres répliques du même paquet.

De préférence, ladite étape de génération comporte la génération d'exactement deux répliques de chaque paquet à transmettre.

Des modes de réalisation particuliers de ce procédé constituent l'objet des revendications 2 à 25.

Un autre objet de l'invention est un procédé selon la revendication 26 permettant la récupération à la réception de paquets de données transmis à travers un canal de transmission partagé par une pluralité d'utilisateurs par un procédé de transmission selon l'invention. Un tel procédé comporte des étapes :

-    d'identification, à l'intérieur d'un signal reçu, des répliques qui ne sont pas affectées par des collisions destructives avec des répliques d'autres paquets ;
-    d'extraction de l'information contenue dans les répliques identifiées ;

et est caractérisé en ce qu'il comporte également des étapes :

- de localisation temporelle et/ou en fréquence de la ou des autres répliques du même paquet en utilisant l'information de signalisation extraite des répliques identifiées ;
- d'effacement en bande de base complexe de ladite ou desdites autres répliques par un algorithme d'effacement d'interférence, lorsqu'elle ou elles sont affectées par des collisions destructives avec des répliques d'autres paquets ; et
- d'identification des répliques d'autres paquets qui, après ladite étape d'effacement, ne sont plus affectées par des collisions destructives et d'extraction de l'information y contenue.

Des modes de réalisation particuliers de ce procédé constituent l'objet des revendications 27 à 40.

Un autre objet de l'invention est un équipement de transmission de paquets de données à travers un canal de transmission partagé par une pluralité d'utilisateurs selon la revendication 41, comportant :

- un dispositif de génération d'au moins deux répliques de chaque paquet à transmettre avec un décalage temporel et/ou de fréquence aléatoire entre elles ; et
- un dispositif d'émission desdites répliques à travers ledit canal de transmission ;

et caractérisé en ce qu'il comporte également :

- un dispositif de génération, pour chaque réplique, d'une information de signalisation permettant de localiser temporellement et/ou en fréquence la ou les autres répliques du même paquet ; et
- un premier multiplexeur permettant d'assembler chaque réplique et l'information de signalisation correspondante pour les transmettre conjointement.

Des modes de réalisation particuliers de cet équipement constituent l'objet des revendications 42 à 49.

Un autre objet de l'invention est un équipement selon la revendication 50 permettant la récupération à la réception de paquets de données transmis à travers un canal de transmission partagé par une pluralité d'utilisateurs par un procédé de transmission selon l'invention comportant :

- un dispositif d'identification des répliques qui ne sont pas affectées par des collisions destructives avec des répliques d'autres paquets.
- un dispositif d'extraction de l'information contenue dans les répliques identifiées ;

et caractérisé en ce qu'il comporte également :

- un dispositif d'utilisation de l'information de signalisation extraite pour localiser temporellement et/ou en fréquence la ou les autres répliques du même paquet ; et
- un dispositif d'effacement en bande de base complexe de ladite ou desdites autres répliques par un algorithme d'effacement d'interférence, lorsqu'elle ou elles sont affectées par des collisions destructives avec des répliques d'autres paquets.

Des modes de réalisation particuliers de cet équipement constituent l'objet des revendications 51 à 63.

D'autres caractéristiques, détails et avantages de l'invention ressortiront à la lecture de la description faite en référence aux dessins annexés, donnés à titre d'exemple, et qui montrent :

la figure 1, une représentation schématique d'un système de communication par satellite auquel l'invention peut être appliquée;

les figures 2A et 2B, un schéma de principe de la répartition des ressources dans un système TDMA-MF utilisant le procédé CRDSA de l'invention ;

les figures 3A - 3P, un procédé de récupération de paquets à la réception selon un premier mode de réalisation de l'invention ;

les figures 4A et 4B, deux cas dans lesquels le procédé de l'invention ne permet pas de résoudre un conflit d'accès ;

les figures 5A et 5B, des organigrammes illustrant respectivement un procédé de transmission et un procédé de récupération de paquets à la réception selon un deuxième mode de réalisation de l'invention ;

la figure 6, un organigramme illustrant un procédé décentralisé de contrôle de flux mise en oeuvre dans un troisième mode de réalisation de l'invention ;

la figure 7, un diagramme d'états illustrant un mode de réalisation du procédé « CRDSA-DA » de l'invention ;

la figure 8, un schéma fonctionnel d'un équipement de transmission adapté à la mise en oeuvre du procédé illustré par l'organigramme de la figure 5A ;

la figure 9, un schéma fonctionnel d'un équipement de réception adapté à la mise en oeuvre du procédé illustré par l'organigramme de la figure 5B ;

les figures 10A - 10M, des graphiques illustrant les performances de l'invention et des comparaisons avec les procédés connus de l'art antérieur ;

la figure 11, la densité spectrale du bruit de phase du de la norme SATMODE ;

la figure 12, la dépendance temporelle de la phase de la porteuse d'un signal affecté par un bruit de phase et de l'estimation de phase correspondante ;

la figure 13, la dépendance temporelle de la phase de la porteuse d'un signal affecté par un bruit de phase et de l'estimation de phase correspondante obtenue selon un deuxième mode de réalisation de l'invention ;

la figure 14, un graphique représentant la dépendance du débit en fonction du chargement normalisé du canal et permettant d'apprécier le gain de performance obtenu grâce audit deuxième mode de réalisation ; et

la figure 15, la densité spectrale du bruit de phase de la norme DVB-RCS.

L'invention sera décrite ci-après en référence à un système de communications par satellite dans lequel une pluralité d'utilisateurs, chacun disposant d'un terminal satellite propre, sont reliés par l'intermédiaire d'un satellite « transparent » à faisceaux multiples à des passerelles (« gateways ») permettant l'accès à un réseau terrestre. Cela ne limite pas la portée de l'invention qui peut s'appliquer à différents systèmes de communications utilisant, par exemple, des satellites régénérateurs et/ou des connections sans fils terrestres, voir même des connections par câble.

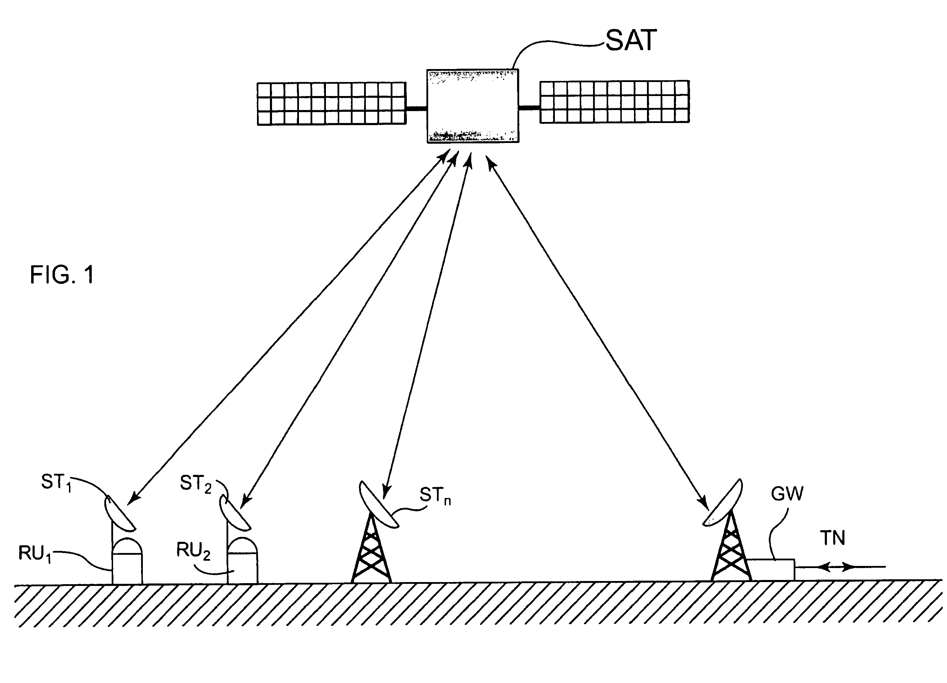

Un système de communications par satellite adapté à la mise en oeuvre de la présente invention est représenté de manière schématique par la figure 1. Un tel système comporte n terminaux satellite terrestres $ST_1$ ... $ST_n$ pouvant établir une liaison bidirectionnelle avec une station de réception, telle qu'une passerelle GW, par l'intermédiaire d'un satellite SAT, ladite passerelle GW étant à son tour reliée à un réseau terrestre TN, tel que l'Internet. Les terminaux $ST_1$ et $ST_2$ sont des terminaux « domestiques », qui ne desservent qu'un seul utilisateur $RU_1$, $RU_2$ respectivement. Par exemple, il peut s'agir de terminaux de petite taille, chacun équipant l'habitation d'un particulier et utilisés pour assurer une connexion à l'Internet et/ou à un service de télévision numérique avec canal de retour. Ces terminaux utilisent la liaison ascendante du canal de communication pour transmettre des paquets de données de petites dimensions suivant un profil de trafic qui peut être décrit par un processus de Poisson. Le système comprend également un certain nombre, généralement très minoritaire, de terminaux présentant des caractéristiques différentes. Par exemple, le terminal $ST_n$ transmet des paquets de grandes dimensions, générant un profil de trafic dit « à arrivées massives ». Les différents terminaux partagent un même canal de transmission en utilisant une technique d'accès multiple à répartition du temps à fréquences multiples (TDMA-MF).

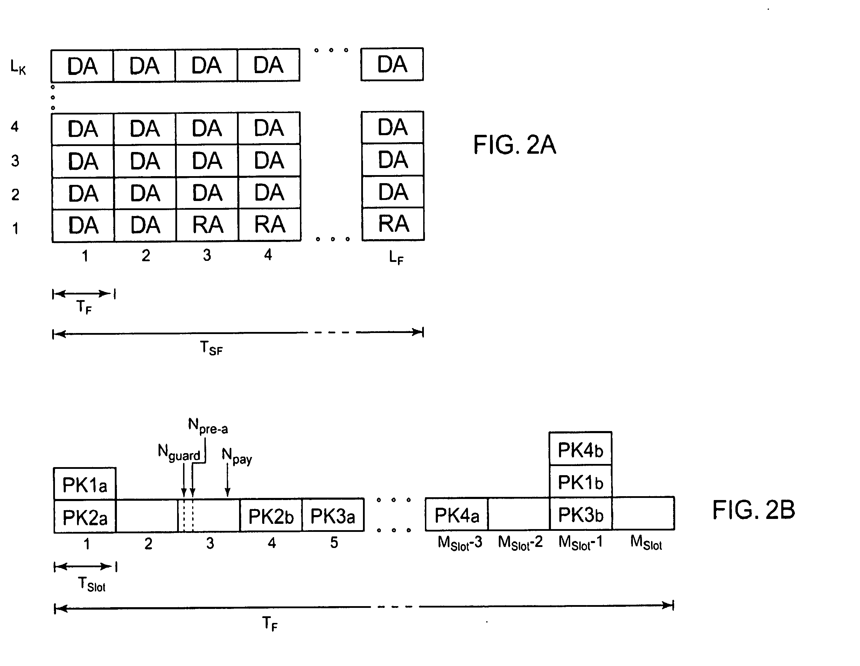

La figure 2A montre une représentation schématique d'une « super-trame » (« super-frame » en langue anglaise) SF dans un tel système TDMA-MF. Le système comporte $L_K$ canaux de fréquence ; pour chaque canal, une super-trame a une durée $T_{SF}$ et est subdivisée en $L_F$ trames, chacune d'une durée $T_F$. A leur tour, les trames peuvent être subdivisées en segments temporels (« slots »). Dans le cas du système représenté, toutes les trames des canaux 2 - $L_K$ et les deux premières trames du canal 1 sont allouées sur la base d'un procédé d'assignation en fonction de la demande, DA, alors que les trames 3 - $L_F$ du canal 1 sont réservées à un procédé d'accès aléatoire RA, tel que la CRDSA.

Comme le montre la figure 2B, une trame CRDSA est composée de $M_{slot}$ segments temporels de durée $T_{Slot}$. Chacun de ces segments temporels se compose de $N_{slot}$ symboles : $N_{guard}$ symboles de garde, destinées à éviter la perte d'information en cas de synchronisation imparfaite entre les différents utilisateurs, $N_{pay}$ symboles de « données utiles » (« payload » en langue anglaise) et $N_{pre-a}$ symboles de préambule d'acquisition (ou simplement « préambule »). Chaque symbole a une durée $T_S$ ; il s'ensuit que $T_{Slot} = N_{slot}. T_S$.

Comme dans un procédé DSA avec k=2, chaque paquet PK1 - PK4 est transmis en deux répliques a et b, dites « répliques jumelles ». Comme dans tout procédé « Aloha », chaque utilisateur (par exemple, chaque utilisateur domestique abonné à un service de télévision interactif) transmet indépendamment des autres, ce qui peut provoquer des collisions (collision entre les répliques PK1 a et PK2a dans le premier segment temporel et entre les répliques PK1 b, PK3b et PK4b dans le segment numéro $M_{slot}-1$).

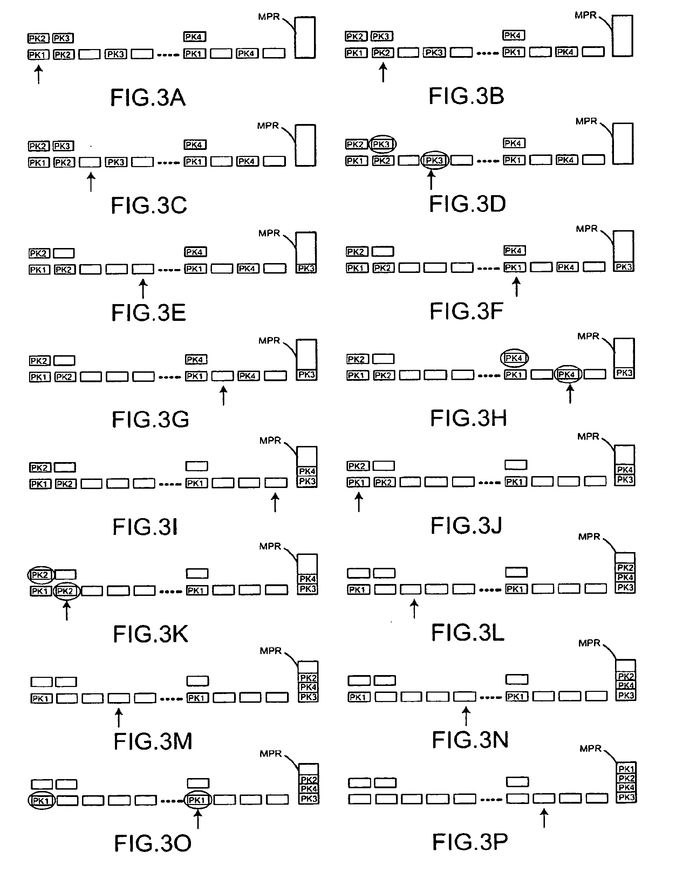

Dans le cas représenté sur la figure 3A, il y a une première collision entre la réplique a du paquet PK1 et celle du paquet PK2, une deuxième collision entre les répliques PK2b et PK3a et une troisième entre PK1 b et PK4a. Si on utilisait un procédé DSA classique, les paquets PK1 et PK2 seraient irrémédiablement perdus, car leurs répliques ont subi toutes deux une collision. Il ne resterait qu'à les retransmettre, sans aucune garantie que la deuxième transmission aille à bonne fin. Il se peut qu'un paquet doive être retransmis plusieurs fois avant de pouvoir être reçu correctement (sans collisions), ce qui est susceptible d'engendrer des retards importants, voire inacceptables.

Une des idées à la base de la présente invention consiste à utiliser la connaissance des paquets PK3 et PK4, dont une réplique n'a pas subi de collision, pour récupérer les paquets PK1 et PK2, corrompus par les collisions via un algorithme d'effacement d'interférences. Cela est rendu possible par la mise en oeuvre, au niveau de chaque émetteur, d'un procédé de transmission qui constitue un premier objet de l'invention et, au niveau de la station de réception, d'un procédé de récupération des paquets transmis qui constitue un deuxième objet de l'invention.

Un tel procédé de récupération des paquets transmis est illustré par la séquence de figures 3A - 3P. Dans la suite les indices a et b, distinguant la première et la deuxième réplique de chaque paquet, sont omis. La trame CRDSA, convertie en bande de base, échantillonnée et enregistrée dans une mémoire d'un équipement de réception, est parcourue séquentiellement plusieurs fois (la flèche en bas de la trame indique le paquet examiné à un instant donné). On suppose, pour l'instant sans plus de précision, qu'il est possible de distinguer un paquet non corrompu d'une superposition de paquets résultant d'une collision (ex. PK2 + PK3) et que, si un paquet est connu, il est possible de le « soustraire » d'une telle superposition, par exemple pour récupérer PK2 en connaissant (PK2 + PK3) et PK3.

A la première étape, illustrée par la figure 3A, le segment temporel contenant la superposition des paquets PK1 et PK2 est examiné; comme il ne s'agit pas d'un paquet correctement reçu, aucune opération n'est exécutée. La même chose se produit lors de l'examen du segment temporel suivant, figure 3B. Le troisième segment temporel, figure 3C, ne contient pas de paquets, donc il est ignoré. A la quatrième étape, figure 3D, l'une des deux répliques du paquet PK3 est identifiée comme ayant été reçue correctement, sans collisions ; le paquet PK3 est donc stocké dans un emplacement de mémoire pour paquets reçus MPR, prévu à cet effet. Ce qui différencie ce procédé selon l'invention de la technique DSA connue de l'art antérieur est le fait que la mise en oeuvre d'un procédé d'effacement d'interférence permette de « soustraire » le paquet PK3 du deuxième segment temporel, y laissant seulement le paquet PK1. Le balayage de la trame CRDSA continue : la figure 3F montre l'examen d'un segment temporel contenant la superposition de PK1 et PK4 et la figure 3G celle d'un segment vide. Lors de l'étape suivante, figure 3H, le paquet PK4 est récupéré, stocké dans la mémoire MPR et soustrait de la superposition de PK1 et PK4 (figure 3I). Ensuite, après avoir atteint le dernier segment, le balayage de la trame recommence dès le début (figure 3J). A l'étape illustrée à la figure 3K, on examine le même segment temporel déjà pris en considération à la figure 3B, mais cette fois le « conflit d'accès » entre les paquets PK2 et PK3 a été résolu grâce au procédé d'effacement d'interférence susmentionné. Le dernier événement digne d'intérêt est représenté aux figures 3O et 3P, quand le paquet PK1 est également récupéré et stocké à son tour dans la mémoire MPR.

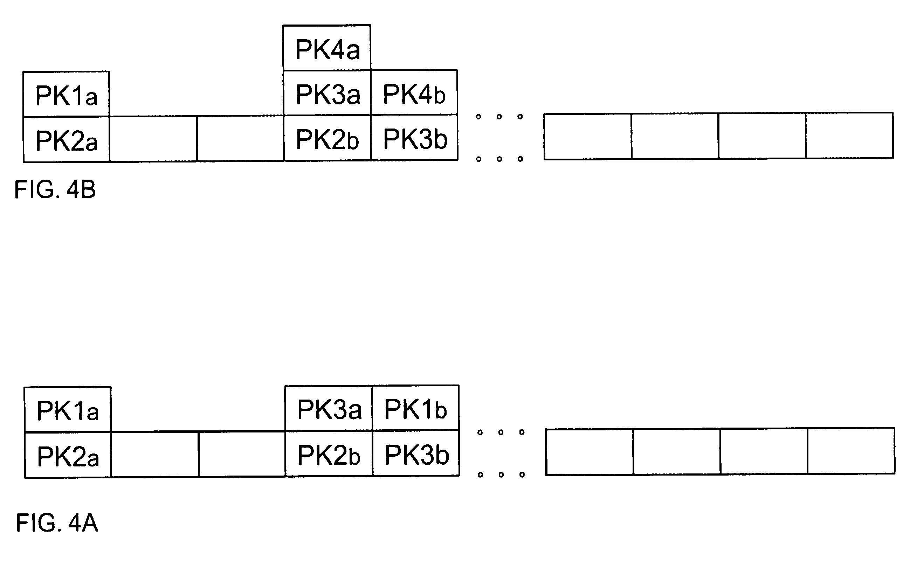

Dans l'exemple considéré ci-dessus, tous les paquets ont pu être récupérés. Il est facile de se rendre compte que ce n'est pas toujours le cas et qu'il existe des situations « inextricables » ne permettant pas la résolution des conflits d'accès : deux exemples de ces situations sont fournis par les figures 4A et 4B. Dans ces cas, il ne reste qu'à retransmettre les paquets perdus, comme dans tout procédé du type « Aloha ». Néanmoins, il est clair que le procédé de l'invention permet, en moyenne, une augmentation d'efficacité très significative.

Jusqu'ici, il a été simplement supposé qu'un équipement de récupération selon l'invention permette d'identifier les paquets reçus sans collisions et de mettre en oeuvre le procédé d'effacement d'interférence. Pour montrer comme cela est possible, il est nécessaire de se référer spécifiquement aux caractéristiques techniques d'un système de communications particulier. Il faut néanmoins garder à l'esprit que l'invention a une portée plus générale et n'est pas limitée à un tel système particulier. Le mode de réalisation de l'invention qui sera décrit ci-après ne correspond pas exactement à celui illustré par les figures 3A - 3P, mais se base sur le même concept inventif général.

D'une manière conventionnelle, au niveau de chaque terminal satellite (et donc de chaque utilisateur, car on s'intéresse principalement au cas d'utilisateurs domestiques, disposant chacun de son propre terminal), les paquets d'information sont d'abord stockés dans une mémoire tampon et segmentés en paquets MAC (contrôle d'accès au support) de taille constante. En particulier, bien que ce choix soit arbitraire, l'on considère des paquets de la taille d'une cellule ATM. Les paquets MAC sont ensuite codés, modulés et transmis dans un segment temporel n d'une trame m qui correspond à une porteuse de fréquence $\omega_m$ sur la base du plan temporel des rafales (BTP, Burst Time Plan) qui est diffusé à tous les terminaux par l'intermédiaire du canal de signalisation descendant (voir à ce propos le document ETSI EN 301 790 V1.3.1 précité), et qui est donc commun à tous les utilisateurs.

En fait, comme dans le procédé DSA, deux répliques de chaque paquet sont générées et transmises avec un décalage aléatoire. En plus des données utiles, les paquets transmis contiennent des symboles de garde et un préambule dont le contenu et la fonction seront précisés plus loin. Les données utiles, représentées par un total de $N_{pay}$ symboles, se subdivisent à leur tour en $N_{pay-u}$ symboles de « données utiles effectives » (« useful payload »), représentant l'information à transmettre, et $N_{pay-s}$ symboles de signalisation, indiquant la position de la réplique « jumelle » à l'intérieur du segment temporel. Les données utiles (données utiles effectives et information de signalisation) sont protégés par un code de correction des erreurs sans voie de retour (FEC, Forward Error Correction) avec un rapport signal sur bruit plus interférences (SNIR) de seuil $[E_s/(N_0+I_0)]_{req}$, où $E_s$, $N_0$ et $I_0$ représentent respectivement la puissance du signal, du bruit et des interférences. On peut considérer, en faisant l'hypothèse d'interférences gaussiennes, que lorsque $[E_s/(N_0+I_0)]$ < $[E_s/(N_0+I_0)]_{req}$ au niveau de l'équipement de réception de la passerelle, l'information des données utiles est récupérée et le préambule est détecté correctement ; un contrôle de redondance de code (CRC, Code Redundancy Check) permet de vérifier que les données utiles ont été effectivement décodées sans erreurs.

Le préambule, qui est le même pour les deux répliques jumelles de chaque paquet, est constitué par une séquence binaire pseudo-aléatoire de longueur $N_{pre-a}$, choisie d'une manière aléatoire à l'intérieur d'une famille $S_{PR}$ de séquences dont la taille (nombre de séquences) est de l'ordre de $N_{pre-a}$. La famille $S_{PR}$ doit présenter des bonnes propriétés d'auto corrélation et de corrélation croisée, c'est à dire que les séquences doivent être presque orthogonales entre elles et présenter un pic d'auto corrélation étroit. Des familles appropriées sont par exemple constituées par les codes de Gold et les codes de Gold étendus en longueur. Voir à ce propos l'article de R. Gold « Optimal Binary Sequences for Spread Spectrum Multiplexing » IEEE Trans. on Inf. Theory, vol. 13, issue 4, octobre 1967, pages 796 - 807, ainsi que celui de J.A.L. Incio, F. Cercas, J.A.B. Gerald et M.D. Ortigueira, « Performance Analysis of TCH Codes and other New PN Even Balanced (PN-EB) Codes Suitable for High Processing Gain DS-SS Systems », Actas da II Conferencia de Telecomunicaes, Conftele99, Sesimbra, Portugal, avril 1999, pages 342 - 346.

Dans les protocoles (D)SA conventionnels, un seul et même préambule est utilisé pour tous les paquets émis. Ce préambule permet, d'une manière conventionnelle, d'identifier le début de chaque paquet et d'effectuer une estimation de la phase, de la temporisation et du décalage en fréquence de la porteuse (« estimation du canal »), qui est utilisée pour la démodulation des données utiles. Au contraire, dans le cas de ce mode de réalisation de l'invention, chacun des paquets émis à l'intérieur d'un même segment temporel est caractérisé par un préambule différent. En pratique, comme les préambules sont attribués aux paquets indépendamment les uns des autres, il est possible que la même séquence soit attribuée à deux paquets transmis dans le même segment temporel. Cependant, grâce au fait que le pic d'auto-corrélation desdites séquences est très étroit, cela n'a pas de conséquences graves sauf en cas de collision de deux paquets ayant le même préambule et un décalage temporel inférieur à la durée d'un symbole. Les effets d'une telle « collision de préambule » seront considérés plus loin.

Dans le système de communications considéré, la technique de modulation adoptée est mixte : QPSK pour les symboles des « données utiles » et BPSK binaire ($\pm 1$) pour les symboles du préambule, alors que les symboles de garde sont caractérisés par une amplitude nulle. Il s'agit d'un choix habituel dans la technique de la modulation TDMA, mais une généralisation à d'autres techniques, en particulier à d'autres techniques de modulation de phase et d'amplitude (par exemple, QPSK pour tous les symboles) est à la portée de l'homme du métier.

Dans un but de simplification on fait l'hypothèse que tous les retards encourus par les signaux soient des multiples entiers de la durée d'un symbole. Une généralisation à des retards quelconques ne pose aucune difficulté de principe.

Le signal discret $\bar{s}[i, n, q]$ émis par le terminal satellite #i dans le segment temporel #n pour transmettre le paquet #q s'écrit donc :

$$\bar{s}[i,n,q] = \sqrt{P_{Tx}[i]}\left\{\bar{s}_{pre}[i,q], \bar{s}_{pay}[i,q], \bar{s}_{guard}\right\} \qquad [1]$$

où :

$$\bar{s}_{pre}[i,q] = \left\{c_1[i,q], c_2[i,q], ..., c_{N_{pre-a}}[i,q]\right\} \qquad [2]$$

$$\bar{s}_{pay}[i,q] = \frac{1}{\sqrt{2}}\left\{d_{p,1}[i,n,q] + jd_{q,1}[i,n,q], ..., d_{p,N_{pay}}[i,n,q] + jd_{q,N_{pay}}[i,n,q]\right\} \qquad [3]$$

$$\bar{s}_{guard}[i,q] = \left\{0,0,...,0\right\}(N_{guard} \text{ éléments}) \qquad [4]$$

Dans les expressions ci-dessus, $c_l[i,q]$ est le l-ième élément de la séquence du préambule, $d_{p,l}[i,n,q]$ et $d_{q,l}[i, n,q]$ sont le l-ième élément en phase et en quadrature respectivement de la séquence des données utiles, comprenant les symboles des « données utiles effectives» et les symboles « de signalisation ». Les termes $c_l[i,q]$, $d_{p,l}[i,n,q]$ et $d_{q,l}[i,n,q]$ peuvent prendre uniquement les valeurs +1 et -1. $P_{Tx}$ représente la puissance du signal transmis, proportionnelle au carré de son amplitude.

Le signal reçu au niveau de la passerelle (gateway) est donné par la somme des signaux individuels émis par les différents terminaux satellite #1 - $N_{ST}$ à l'intérieur du segment temporel #n. Si l'on considère que les retards, les amplitudes et les phases des signaux reçus restent constants pendant la durée d'un segment temporel TDMA, ce qui paraît une hypothèse raisonnable, le signal discret obtenu par démodulation cohérente et échantillonnage dudit signal peut s'écrire :

$$\bar{r}\left[n\right]=\sum_{i=1}^{N_{ST}}\delta\left[i,n\right]L\left[i,n\right]\bar{s}\left[i,n,q\right]z^{-D\left[i,n\right]}\exp\left\{j\left(\phi\left[i,n\right]+\Delta\omega\left[i,n\right]t\left[n\right]\right)\right\}+\bar{w}\left[n\right] \qquad [5]$$

Dans l'équation [5] :

- $\delta[i, n]$ vaut 1 si le terminal satellite #i est actif pendant le segment temporel #n, autrement il vaut 0 ;
- $L[i,n]$ est l'atténuation au niveau de la passerelle du signal transmis par le terminal satellite #i pendant le segment temporel #n, supposée constante pendant la durée dudit segment temporel.
- $\bar{s}[i,n,q]$ est le signal exprimé par l'équation [1] ;
- $z^{-D[i,n]}$ est l'opérateur de retard associé à un retard différentiel D[i,n] du terminal satellite #i pendant le segment temporel #n, exprimé en nombre de symboles et supposé être entier et compris entre 0 et $N_{guard}$ ; l'effet de l'opérateur $z^{-D[i,n]}$ est de décaler vers la droite de D[i,n] positions les éléments du vecteur $\bar{s}[i,n,q]$ ;
- $\phi[i,n]$ et $\Delta\omega[i,n]$ représentent respectivement le décalage en phase et en fréquence, par rapport à un oscillateur local du récepteur, du terminal satellite #i pendant le segment temporel #n ;
- $t[n]$ représente le temps correspondant au segment temporel #n ; on considère ici que l'erreur de fréquence est suffisamment petit pour qu'il induise une variation de phase négligeable pendant la durée d'un segment temporel : $\Delta\omega[i,n]t \approx \Delta\omega[i,n]t[n]$ = constant pour le segment temporel #n ; et

- $\bar{w}[n]$ est un vecteur de $N_{slot}$ éléments, chacun représentant un bruit blanc gaussien symétrique circulaire de variance

$$\sigma_w^2.$$

On définit également le préambule et les données utiles pour le terminal #i pendant le segment temporel #n effectivement reçus par la passerelle comme des sous-vecteurs du vecteur $\bar{r}[n]$ :

$$\bar{r}_{pre}\left[n,i\right]=\left[r\left(D\left[i,n\right]+1\right),r\left(D\left[i,n\right]+2\right),...r\left(D\left[i,n\right]+N_{pre-a}\right)\right] \qquad [6]$$

$$\bar{r}_{pay}\left[n,i\right]=\left[r\left(D\left[i,n\right]+N_{pre-a}+1\right),...r\left(D\left[i,n\right]+N_{pre-a}+N_{pay}\right)\right] \qquad [7]$$

Il est immédiat de vérifier que les équations [6] et [7] prennent en compte l'effet de l'atténuation, du bruit et des collisions sur les signaux émis par les terminaux satellite. En particulier, le nombre de collisions qui se vérifient dans le segment temporel #n est donné par :

$$N_{coll}\left[n\right]=\sum_{i-1}^{N_{ST}}\delta\left[i,n\right]-1 \qquad [8]$$

Pour les besoins de l'analyse des prestations de l'invention, on considère que la puissance $P_{Tx}[i]$ transmise par le terminal #i est constante, alors que la puissance reçue au niveau de la passerelle pendant le segment temporel #n, $P_{Rx}[i,n] = L^2[i,n]P_{Tx}[i]$, est une variable aléatoire qui suit une distribution logarithmico-normale caractérisée par une valeur moyenne $\bar{P}_{Rx}[i,n]$ et par un écart type (en dB) $\sigma_{P_{Rx}}[i]$. L'amplitude reçue au niveau de la passerelle est définie par :

$$A_{Rx}\left[i,n\right]=\sqrt{P_{Rx}\left[i,n\right]}=L\left[i,n\right]\sqrt{P_{Tx}\left[i\right]} \qquad [9]$$

Au niveau du récepteur, le signal à radiofréquence reçu est converti à une fréquence intermédiaire grâce à un oscillateur local, échantillonné et quantifié, ensuite les différentes porteuses sont séparées par un multiplexeur numérique. Les échantillons constituant une trame RA sont donc stockés dans une mémoire numérique et lus d'une manière séquentielle. Le contenu de cette mémoire est ensuite traité à l'aide d'un procédé itératif pour extraire l'information contenue dans les paquets reçus.

Lors d'une première étape, une recherche de tous les $S_{PR}$ préambules possibles est effectuée en parallèle, selon une technique couramment utilisée dans les systèmes à accès multiple par répartition de code, ou CDMA (voir par exemple R. De Gaudenzi, F. Giannetti et M. Luise « Signal Recognition and Signature Code Acquisition in CDMA receivers for Mobile Communications », IEEE Trans. on Veich. Tech., vol. 47, No. 1, février 1998). Comme les terminaux satellites sont approximativement synchronisés entre eux, la recherche peut être limitée aux périodes de garde autour de l'emplacement nominal du préambule à l'intérieur de chaque segment temporel. Lorsque des codes sont identifiés, ils sont utilisés de manière conventionnelle pour estimer les paramètres d'amplitude A, de décalage de fréquence $\Delta\omega$, de phase $\phi$ et de temporisation $\tau$ (ce dernier paramètre correspond au paramètre D de l'équation [5], mais l'hypothèse simplificatrice selon laquelle le retard différentiel est exprimé par un nombre entier de symboles a été abandonnée), ensuite les données utiles sont décodées et le contrôle de redondance de code CRC est effectué. Si le résultat de ce contrôle est positif, on considère qu'une réplique « propre », c'est à dire n'ayant pas subi de collision destructive, a été récupérée. Si on indique par $\hat{s}_{pay}$ la séquence binaire correspondante aux données utiles telle qu'elle a été décodée et par $\bar{s}_{pay}$ la séquence effectivement transmise, on peut donc poser $\hat{s}_{pay} = \bar{s}_{pay}$. L'information de signalisation contenue dans les données utiles permet en outre d'identifier le segment temporel dans lequel la réplique jumelle de chaque réplique propre a été transmise.

Après cette première étape on dispose donc d'un ensemble de $N_{rec}(1)$ paquets récupérés correctement (le chiffre « 1 » indique qu'il s'agit des paquets récupérés lors de la première itération), identifiés par les indices $\bar{q} = [q_l, q2, ..., q_{N_{rec}(l)}]$, correspondant aux terminaux satellite $\bar{i} = [i_1, i2,..., i_{N_{rec}(l)}]$ et ayant des répliques propres localisées dans les segments temporels $\bar{n} = [n_l, n2,...,n_{N_{rec}(l)}]$ et dont les répliques jumelles « sales » (corrompues par des collisions) sont situées dans les segments temporels $n^r = [n^r_l, n^r_2,.... n^r_{N_{rec}(l)}]$. Bien entendu, il est possible que les deux répliques d'un même paquet soient toutes deux « propres » : dans ce cas, une des deux répliques peut simplement être ignorée et la mise en oeuvre de l'algorithme d'effacement d'interférence n'est pas nécessaire. Dans la suite on considère uniquement des répliques « sales » des paquets « propres » récupérés à l'étape précédente.

Il est raisonnable de considérer que l'amplitude, le décalage de fréquence et la temporisation des deux répliques jumelles de chaque paquet sont les mêmes, car lesdites répliques sont transmises avec un décalage temporel relativement modeste :

$$\hat{A}\left[i_k, n^r_k\right] \approx \hat{A}\left[i_k, n_k\right]; \Delta\hat{\omega}\left[i_k, n^r_k\right] \approx \Delta\hat{\omega}\left[i_k, n_k\right]; \hat{\tau}\left[i_k, n^r_k\right] \approx \hat{\tau}\left[i_k, n_k\right],$$

où $\hat{A}$, $\Delta\hat{\omega}$ et $\hat{\tau}$ sont des valeurs estimées d'amplitude, de décalage de fréquence et de temporisation respectivement.

Il s'ensuit que les valeurs estimées à partir du préambule de chaque réplique « propre » peuvent être utilisées pour « régénérer » le paquet en bande de base complexe. Ce signal régénéré peut être soustrait aux échantillons $\bar{r}\left[n^r_k\right]$ des segments temporels $\bar{n}^r = \left[n^r_I, n^r_2,..., n^r_{N_{rec(I)}}\right]$, de manière à effacer les interférences.

Bien que cela ne soit pas indispensable, l'estimation de l'amplitude peut être améliorée en utilisant non seulement le préambule de la réplique propre, mais aussi ses données utiles, qui ont été préalablement décodées correctement :

$$\hat{A}\left[i_k, n^r_k\right] \approx \hat{A}\left[i_k, n_k\right] \approx \frac{1}{N_{pay}}\left[\bar{r}_{pay}\left[n_k, i_k\right] \cdot \hat{s}_{pay}\left[n_k, i_k, q_k\right]\right] \qquad [10]$$

Amplitudes, décalage de fréquence et temporisation ne suffisent pas pour régénerer complètement les répliques « sales » : la phase aussi doit être déterminée. Cependant, à cause du bruit de phase à haute fréquence qui est susceptible d'affecter les oscillateurs locaux des terminaux satellite et/ou de la passerelle, il paraît raisonnable de considérer qu'il n'y a pas de corrélation entre les phases de deux répliques jumelles d'un même paquet. Par conséquent, il n'est pas possible d'utiliser l'estimation de phase $\hat{\phi}[i_k, n_k]$ calculée à partir de la réplique « propre » pour l'effacement de la réplique jumelle « sale ». La phase doit donc être estimée directement à partir de ladite réplique sale, en exploitant la connaissance de la séquence binaire du préambule, obtenue grâce au décodage de la réplique propre. L'estimation de phase de la réplique sale du paquet émis par le terminal $i_k$ dans le segment temporel $n_k$ est donnée par l'argument de la corrélation entre la séquence du préambule et les échantillons de ladite réplique sale correspondants aux symboles du préambule :

$$\hat{\phi}\left[i_k,n_k^r\right] \approx \arg\left\{\overline{r}_{pre}\left[n_k^r,i_k\right]\cdot\overline{s}_{pre}^{*}\left[i_k,q_k\right]^T\right\} \qquad\qquad [11]$$

L'équation 11 permet de comprendre pourquoi, dans le mode de réalisation de l'invention considéré ici, il est nécessaire d'utiliser des préambules quasi-orthogonaux pour les différents paquets : cela permet de s'affranchir des interférences et de récupérer correctement la phase de chaque réplique « sale », ce qui ne serait pas possible si la même séquence était utilisée pour tous les préambules, comme dans les procédés connus de l'art antérieur. Cependant, comme il sera montré dans la suite, un mode de réalisation alternatif de l'invention permet d'utiliser le même préambule pour tous les paquets transmis.

Si dans l'équation 11 on remplace l'opérateur argument par l'opérateur module, on obtient une estimation de l'amplitude de la réplique sale. Cependant, en général, cette estimation est moins bonne que celle calculée à partir de la réplique jumelle propre, par conséquent elle n'est pas utilisée dans le mode de réalisation de l'invention considéré ici.

A ce point, on dispose d'une estimation de l'amplitude, du décalage de fréquence, de la phase et de la temporisation de la réplique sale, et on connaît parfaitement son contenu : on peut donc l'effacer du segment temporel $n_k$ :

$$\overline{r}\left[n_k^r\right] \approx \overline{r}\left[n_k^r\right] - \hat{A}\left[i_k,n_k^r\right]\exp\left[j\left(\hat{\phi}\left[i_k,n_k^r\right]+\Delta\omega\left[i_k,n_k^r\right]t[n_k^r]\right)\right]\left[\overline{s}_{pre}\left[i_k,q_k\right],\hat{s}_{pay}\left[i_k,q_k\right]\right]$$

$$[12]$$

Si, par exemple, ledit segment temporel contenait initialement un signal, impossible à décoder correctement, constitué par la superposition d'un premier et d'un deuxième paquet, la soustraction de la contribution du premier paquet permet de récupérer le contenu du deuxième.

Après que toutes les répliques « sales » des paquets correctement reçus ont été soustraites, les échantillons $\overline{r}\llcorner n_k\lrcorner$ correspondants aux paquets propres peuvent être effacés de la mémoire et l'algorithme peut recommencer. Des nouveaux paquets, qui précédemment étaient corrompu par des collisions pourront être décodés correctement, et servir à leur tour pour effacer d'autres interférences, et ainsi de suite, jusqu'à que tous les paquets aient été récupérés, ou qu'un nombre maximal d'itération $N_{iter}^{max}$ ait été atteint.

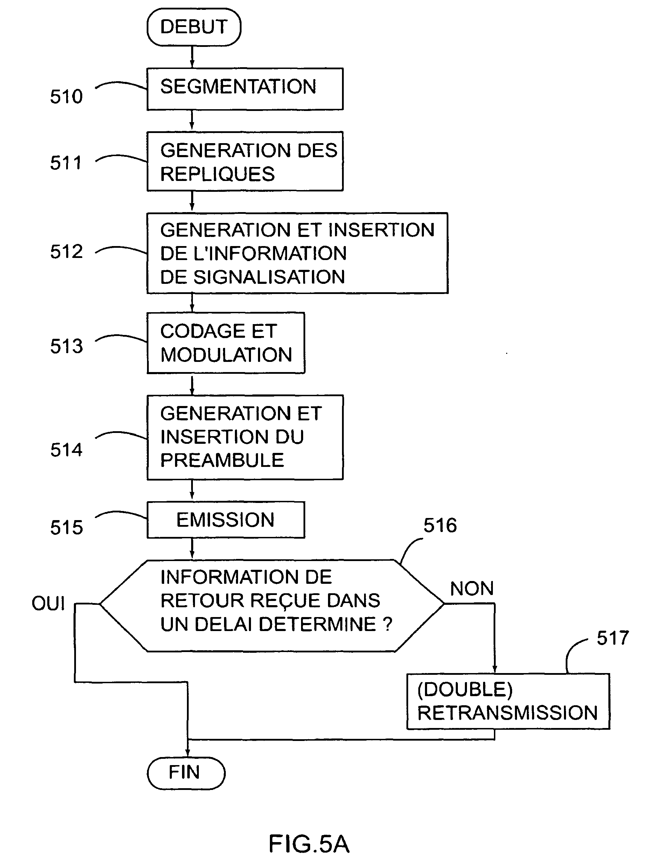

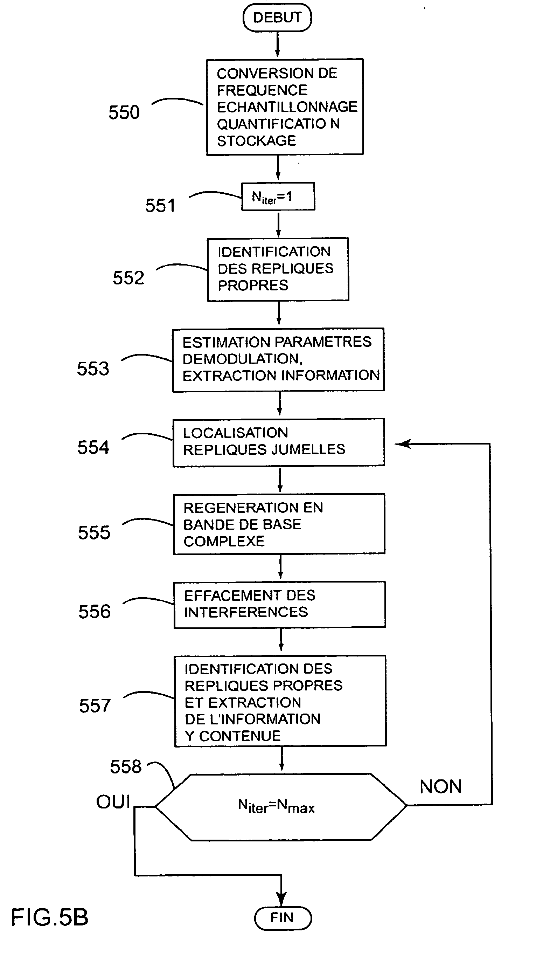

Les organigrammes des figures 5A et 5B donnes des vues d'ensemble des procédés de transmission et de récupération de paquets à la réception qui viennent d'être décrits en détail.

Le procédé de transmission de la figure 5A comporte d'abord une étape 510 de segmentation des données à transmettre en paquets de taille constante, par exemple des dimensions d'une celle ATM.

Ensuite, à l'étape 511, des répliques (de préférence en nombre de deux) de chaque paquet sont générées.

L'étape 512 comporte la génération et l'insertion, dans chaque réplique, d'une information de signalisation permettant de localiser temporellement l'autre réplique du même paquet (ou les autres répliques, le cas échéant). Par exemple, cette information de signalisation peut prendre la forme d'un identifient du segment temporel d'une trame TDMA dans lequel ladite autre réplique va être transmise, ou d'une mesure du décalage temporel entre les répliques.

Ensuite (étape 513) chaque réplique, contenant également l'information de signalisation, est codée par un code de correction d'erreurs, de préférence un code de correction des erreurs sans voie de retour, et modulée, de préférence par une technique de modulation de phase et d'amplitude, telle que la technique QPSK.

L'étape 514 comporte la génération et l'insertion d'un préambule, qui est le même pour chaque réplique d'un même paquet, mais qui est différent d'un paquet à l'autre. Ce préambule est constitué par une séquence binaire pseudo-aléatoire choisie à l'intérieur d'une famille adaptée, par exemple une famille de codes de Gold ou de codes de Gold étendus en longueur. Le préambule est typiquement sous la forme d'une séquence de symboles bipolaire, ou BPSK.

L'étape d'émission 515 comporte des opérations conventionnelles de filtrage et conversion de fréquence. Il est essentiel que l'émission se fasse d'une manière conforme à l'information de signalisation générée à l'étape 512. Ainsi, si ladite information de signalisation prend la forme d'un identifiant de segment temporel, l'émission doit se faire exactement dans le segment temporel indiqué. Si, au contraire, l'information de signalisation ne comporte qu'une mesure de décalage temporel, peu importe l'instant d'émission de chaque réplique, pourvu que le bon écart temporel soit maintenu. Les répliques peuvent être générées directement avec le bon décalage temporel entre elles, à l'étape 511, ou bien être stockées dans une mémoire tampon juste avant la phase d'émission pour en être extraites au moment opportun.

Le procédé de transmission pourrait s'achever à ce point, mais il est généralement préférable de prévoir un mécanisme de retransmission des paquets qui seraient éventuellement perdus, notamment à cause de conflits d'accès.

Pour cette raison, si une information de retour n'est pas reçue par l'émetteur dans un délai déterminé (étape 516), le paquet est réputé perdu et retransmis (étape 517). Comme il sera montré plus loin, de préférence la retransmission est avantageusement effectuée en double, la deuxième retransmission ayant lieu indépendamment de la réception (ou de la non-réception) de l'information de retour correspondante à la première retransmission.

Il est important de préciser que l'information de retour ne prend pas nécessairement la forme d'un « accusé de réception » envoyé par la station de réception aux utilisateurs, mais peut être implicite. Par exemple, si le paquet transmis constitue une requête de service, par exemple la requête d'allocation d'une capacité de transmission, son exécution ou non-exécution peut être considérée comme une information de retour indiquant que ledit paquet a été ou n'a pas été reçu correctement.

Dans l'organigramme de la figure 5B, la première étape 550 du procédé de récupération de paquets à la réception comporte des opérations préliminaires de conversion à une fréquence intermédiaire, échantillonnage, quantification et stockage en mémoire des signaux reçus par une passerelle.

A l'étape 551, un compteur d'itérations est initialisé à $N_{iter}=1$.

L'étape 552 comporte l'identification des répliques propres, qui s'effectue par exemple en effectuant, de préférence en parallèle, des calculs de corrélation entre les signaux reçus et les séquences binaires pseudo-aléatoires parmi lesquelles sont choisis les préambules.

A l'étape 553 on effectue, également à l'aide du préambule, l'estimation des paramètres nécessaires à la démodulation cohérente des répliques propres : amplitude, décalage de phase, de fréquence et de temporisation. Ensuite, lesdits paquets propres sont démodulés et décodés, et l'information contenue dans les données utiles est extraite.

Les étapes 550, 552 et 553 sont communes à l'invention et aux procédés (D)SA traditionnels, à l'exception du fait que plusieurs préambules sont recherchés en parallèle pendant l'étape 553. Un procédé connu de l'art antérieur s'arrêterait à ce point.

A l'étape 554 l'information de signalisation extraite des répliques « propres » identifiées à l'étape 552 est utilisée pour localiser temporellement les répliques jumelles « sales » correspondantes.

L'étape 555 comporte la reconstitution en bande de base complexe des répliques « sales » identifiées à l'étape précédente. Cette reconstitution se fait en utilisant les paramètres d'amplitude, de fréquence et de temporisation estimés à l'étape 553, ainsi qu'un paramètre de phase déterminé directement à partir de la portion du signal reçu contenant la réplique sale à reconstituer.

A l'étape 556 chaque réplique reconstituée en bande de base complexe est soustraite au signal reçu, de manière à « effacer » la réplique sale localisée à l'étape 554.

Ainsi, des répliques qui étaient en précédence corrompues par des collisions destructives peuvent maintenant être identifiées, et l'information y contenue peut être extraite. Cela s'effectue lors d'une étape 557 sensiblement identique aux étapes 552 et 553 décrites ci dessus.

Si le nombre maximal d'itérations $N_{max}$ n'a pas encore été atteint (étape de test 558), le compteur $N_{iter}$, est incrémenté et le procédé recommence à partir de l'étape 554.

Comme il sera montré plus loin, pour obtenir des bonnes performances en terme de probabilité de perte des paquets et de retard moyen de transmission, il est préférable que le chargement normalisé G du canal ne dépasse pas 0,4. Cela signifie qu'en moyenne 0,4 paquets de données sont transmis pour chaque segment temporel ; comme chaque paquet est transmis sous forme de deux répliques, ce chargement normalisé correspond en fait à un « chargement physique » de 0,8 répliques par segment temporel. Il existe donc un besoin pour un procédé de contrôle du flux de données permettant de maintenir le chargement du canal autour d'une valeur optimale. De préférence, un tel procédé devrait être décentralisé, c'est à dire que chaque terminal satellite devrait pouvoir régler son propre débit de transmission indépendamment des autres.

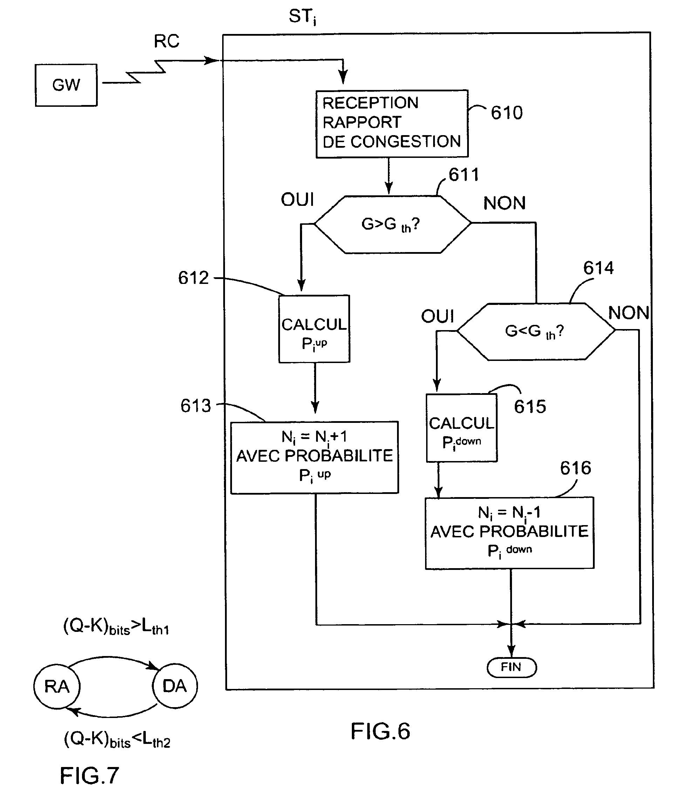

On considère que chaque terminal satellite i transmet en moyenne un paquet chaque $N_i$ trames RA ; on dit alors qu'il a une périodicité de transmission $N_i$. Comme illustré sur l'organigramme de la figure 6, la passerelle GW mesure le chargement du canal et transmet régulièrement, toutes les $N_p$ trames, un rapport de congestion RC, qui est reçu par tous les terminaux $ST_i$ (étape 610). Si le rapport indique que le chargement normalisé G du canal dépasse une valeur de seuil $G_{th}$ (611), chaque terminal satellite augmentera d'une unité sa périodicité de transmission avec une certaine probabilité $P_i^{up}$ (étapes 612 et 613). De préférence, la probabilités $P_i^{up}$ est d'autant plus petite que la périodicité $N_i$ est grande, et vaut 0 lorsque $N_i = N_{max}$. Par exemple, à l'étape 612 on peut prendre :

$$P_i^{up} = \begin{cases} 0 \ si \ N_i = N_{\max} \\ \dfrac{1}{2^{N_i}} \quad si \ N_i < N_{\max} \end{cases} \qquad [13]$$

De la même façon, lorsque G <G$_{th}$ (614), chaque terminal satellite réduira d'une unité sa périodicité de transmission avec une certaine probabilité $P_i^{down}$ $P_i^{up}$ (étapes 615 et 616), de préférence d'autant plus petite que la périodicité N$_i$ est grande et nulle lorsque $N_i = 1$. Par exemple, à l'étape 615 on peut prendre :

$$P_i^{down} = \begin{cases} 0 \ si \ N_i = 1 \\ \dfrac{1}{2^{N_{\max}+1-N_i}} \ si \ N_i > 1 \end{cases} \qquad [14]$$

Pour éviter des modifications trop fréquentes de la périodicité de transmission, il est également possible de choisir des valeurs de seuil différentes pour déclencher l'augmentation et la diminution de périodicité. En outre, les terminaux satellites peuvent également augmenter ou diminuer leur périodicité de transmission de plusieurs unités à la fois.

Le procédé CRDSA de l'invention peut avantageusement être combiné à un protocole DA pour permettre une gestion efficace de différents profils de trafic, par exemple d'un trafic dont les caractéristiques peuvent varier d'une manière imprévisible. Le procédé ainsi obtenu est appelé CRDSA-DA.

Les paquets IP (Internet Protocol) qui doivent être transmis par un terminal satellite sont reçus par ce dernier au niveau de la couche MAC (contrôle d'accès au support) et segmentés en paquets ayant la dimension de celles ATM (Mode de Transfert Asynchrone), c'est à dire 53 bytes. Ensuite, ces paquets sont stockés en une file d'attente FIFO (premier entrant, premier sortant) ; dans un souci de simplicité, on ne considère qu'une seule file d'attente, mais il est possible de généraliser au cas de files d'attentes séparées pour paquets de niveaux de priorité différents. Lorsque la file contient un nombre de paquets à transmettre relativement important, il est avantageux d'effectuer une demande d'allocation de capacité de canal et de transmettre les données par un procédé DA. En effet, la plus grande efficacité d'un tel procédé par rapport à une transmission RA, même selon l'invention, compense le temps d'attente pour obtenir ladite allocation de capacité. Au contraire, lorsque la file ne contient que peu de données, il est avantageux de les transmettre directement par un procédé RA, en particulier le procédé CRDSA.

Plus précisément, à un instant donné la file d'attente d'un terminal satellite contient Q paquets, et une réservation de capacité pour K paquets a été faite. Les K premiers paquets de la file seront transmis par un procédé DA, en utilisant la capacité qui a déjà été réservée ; le terminal doit choisir entre deux possibilités : soit transmettre les Q-K paquets restants par le procédé CRDSA, soit effectuer une autre demande de réservation de capacité pour les transmettre par un procédé DA.

Comme illustré par la figure 7, à tout instant le terminal satellite se trouve soit en modalité RA, auquel cas il transmet selon le procédé CRDSA de l'invention, soit en modalité DA, auquel cas il effectue des requêtes de capacité pour transmettre selon un procédé d'assignation en fonction de la demande. Le contenu en bits de la file d'attente à l'exclusion des paquets pour lesquels une réservation de capacité a déjà été faite, indiqué (Q-K)$_{bits}$, est comparé à deux valeurs de seuil, L$_{th1}$ et L$_{th2}$< L$_{th1}$. Si le terminal se trouve en modalité RA et (Q-K)$_{bits}$ passe au-dessus de L$_{th1}$, il bascule vers la modalité DA. Inversement, si (Q-K)$_{bits}$, descend au-dessous de L$_{th2}$ lorsque le terminal se trouve en modalité DA, ce dernier passe en modalité RA (mais les K paquets pour lesquels une réservation de capacité a été faite seront néanmoins transmis selon le procédé DA).

Les valeurs de seuil L$_{th1}$ et L$_{th2}$ peuvent être déterminées en fonction du débit binaire effectif du canal RA, donné par :

$$R_{b,RA} = \frac{N_{frames}^{RA} B_{cell}}{T_{SF} N_i} \qquad [15]$$

où :

$N_{frames}^{RA}$ est le nombre de trames RA par super-trame ;

$B_{cell}$ est le nombre de bits d'information transmis dans chaque segment temporel ;

$T_{SF}$ est la durée (en secondes) d'une super-trame ; et

$N_i$ est la périodicité de transmission en modalité RA du terminal satellite #i.

On pose :

$$L_{th1} = \lambda_1 R_{b,RA}$$
$$L_{th2} = \lambda_2 R_{b,RA}$$

[16]

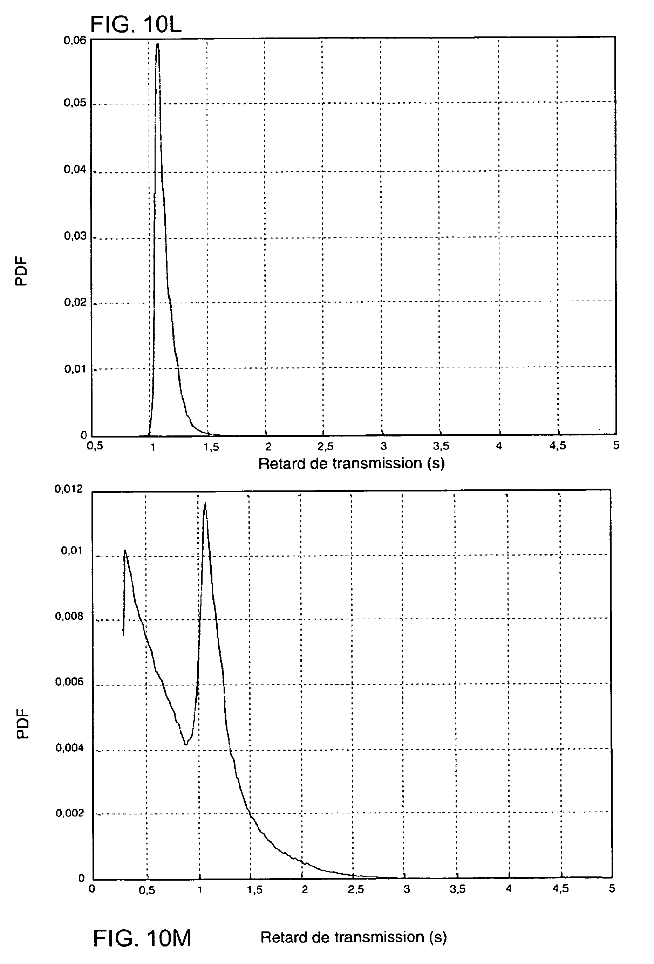

où les paramètres $\lambda_1$ et $\lambda_2 < \lambda_1$ représentent respectivement le retard moyen de transmission en modalité DA et RA. Cela signifie que, si $(Q-K)_{bits} > L_{th1}$ défini par [16], le temps nécessaire pour vider la file d'attente en modalité RA serait supérieur au temps qui serait nécessaire, en moyenne, pour une transmission DA. L'inverse se produit lorsque $(Q-K)_{bits}$ < $L_{th2}$. Les valeurs effectivement prises par $\lambda_1$ et $\lambda_2$ ne peuvent pas être déterminées a priori, mais dépendent du système concret considéré. Par exemple, dans le cas illustré par les figures 10L et 10M, des valeurs adéquates de ces paramètres sont : $\lambda_1$=1,1 s et $\lambda_2$=0,1 s. Eventuellement $\lambda_1$ et $\lambda_2$ peuvent être déterminées de manière adaptative en fonction des retards de transmission moyens mesurés en modalité DA et RA respectivement.

Après avoir décrit différents modes de réalisation de procédés de contrôle d'accès au support selon l'invention, on passe maintenant à la description d'un équipement de transmission (« modulateur ») et de réception (« démodulateur ») permettant la mise en oeuvre du procédé de transmission et du procédé de récupération de paquets à la réception décrits ci-dessus en référence aux figures 5A et 5B respectivement.

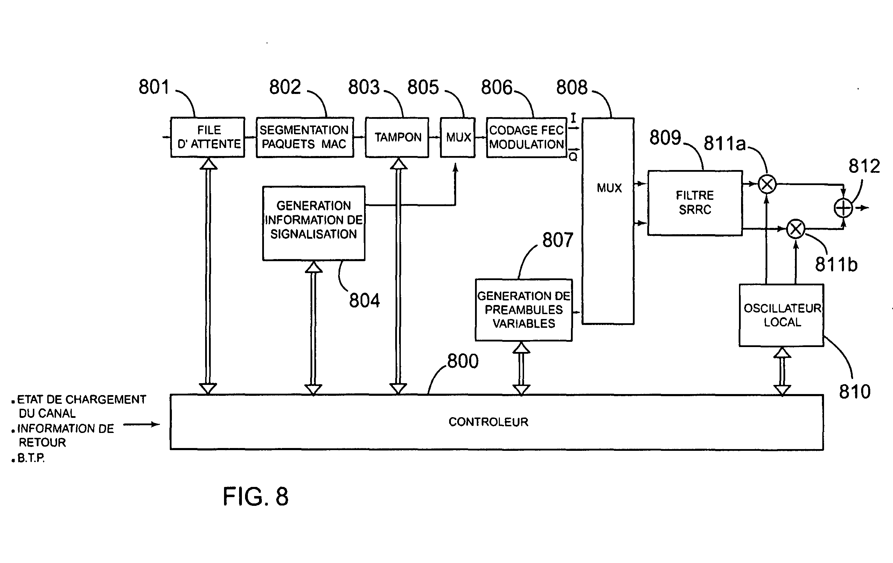

La figure 8 montre un schéma fonctionnel d'un modulateur CRDSA selon un mode de réalisation de l'invention. Un tel modulateur est généralement destiné à équiper les terminaux satellite des utilisateurs domestiques du système de communications.

Les paquets de données à transmettre sont d'abord stockés dans une file d'attente 801. Ils en sont extraits selon le principe FIFO (premier entrant, premier sortant) pour être envoyé à un bloc 802 de segmentation en paquets MAC, où ils sont segmentés en paquets MAC de dimensions fixées (par exemples, celles ATM ou paquets MPEG) selon des techniques d'encapsulage connues de l'art antérieur. Les paquets MAC sont ensuite stockés dans une mémoire tampon 803, qui permet d'absorber des arrivées de données à un débit supérieur à celui de transmission de la part du terminal satellite. Chaque paquet stocké dans la mémoire 803 en est extrait deux fois (répliques jumelles), sous le contrôle d'un contrôleur de modulateur 800. Le contrôleur de modulateur 800 et la mémoire tampon 803 constituent ainsi ensemble un dispositif de génération d'au moins deux répliques de chaque paquet à transmettre. Un dispositif de génération d'information de signalisation 804 produit, pour chaque réplique, une séquence binaire indiquant la position de la réplique jumelle correspondante à l'intérieur de la trame RA. Les « données utiles effectives », extraites de la mémoire tampon 803 et l'information de signalisation générée par le bloc 804 sont réunies par un premier multiplexeur 805 de manière à reconstituer la séquence binaire représentant les données utiles de la réplique. Les données utiles sont ensuite protégées par un code de correction des erreurs sans voie de retour (FEC) et converties en une séquence de symboles QPSK (bloc 806). Les deux flèches sortant du bloc fonctionnel 806 représentent les deux séquences binaires partielles $d_{p,I}$ et $d_{q,I}$ destinées à moduler respectivement la composante en phase (I) et en quadrature (Q) de la porteuse. Un dispositif 807 de génération de préambule, piloté par le contrôleur 800, génère une séquence binaire pseudo-aléatoire appartenant à la famille $S_{PR}$, destinée à constituer le préambule du paquet. Données utiles et préambule sont ensuite assemblés par un deuxième multiplexeur 808 ( dit aussi « multiplexeur de rafale »), qui alloue également les symboles de garde $\bar{s}_{guard}$ Le filtre de raccordement à racine carrée de cosinus (SRRC - Square-Root Raised Cosine) 809 génère des impulsions à largeur de bande finie qui, grâce aux mélangeurs 811a et 811 b modulent lesdites composantes en phase (I) et en quadrature (Q) de la porteuse à fréquence intermédiaire, générées par l'oscillateur local 810. Les deux composantes modulées sont sommées par le bloc additionneur 812 et converties au format analogique en sortie du modulateur (convertisseur numérique-analogique non représenté). Le signal analogique ainsi obtenu peut donc être converti à radiofréquence pour être transmis par le terminal satellite.

Le contrôleur de modulateur 800 constitue également un dispositif de contrôle de flux, qui reçoit une information de chargement du canal de transmission partagé et modifie la périodicité de transmission du modulateur en fonction de ladite information de chargement. Il constitue également un dispositif de retransmission qui vérifie si une information de retour indiquant qu'un paquet transmis a été correctement reçu et, le cas échéant, déclenche une retransmission dudit paquet.

La plupart des blocs fonctionnels qui constituent le modulateur CRDSA de la figure 8 se retrouvent également dans un modulateur (D)SA connu de l'art antérieur, dans la même disposition relative et pour accomplir les mêmes fonctions. Les deux blocs 804 et 805, en gris foncé sur la figure, au contraire, n'ont pas d'équivalent dans un tel modulateur connu de l'art antérieur, car l'introduction d'une information de signalisation constitue une caractéristique nouvelle de l'invention. Le bloc 807, en gris clair, est modifié par rapport aux modulateurs connus de l'art antérieur, car ces derniers utilisent un seul préambule pour tous les paquets transmis, au lieu de préambules différents, choisis de manière aléatoire à l'intérieur d'une famille de séquences binaires quasi-orthogonales. Bien entendu, le fonctionnement du contrôleur 800 est également différent par rapport au cas d'un modulateur connu de l'art antérieur, mais en général cela peut être obtenu sans aucune modification matérielle de l'appareil, mais simplement en agissant sur des composantes logicielles.

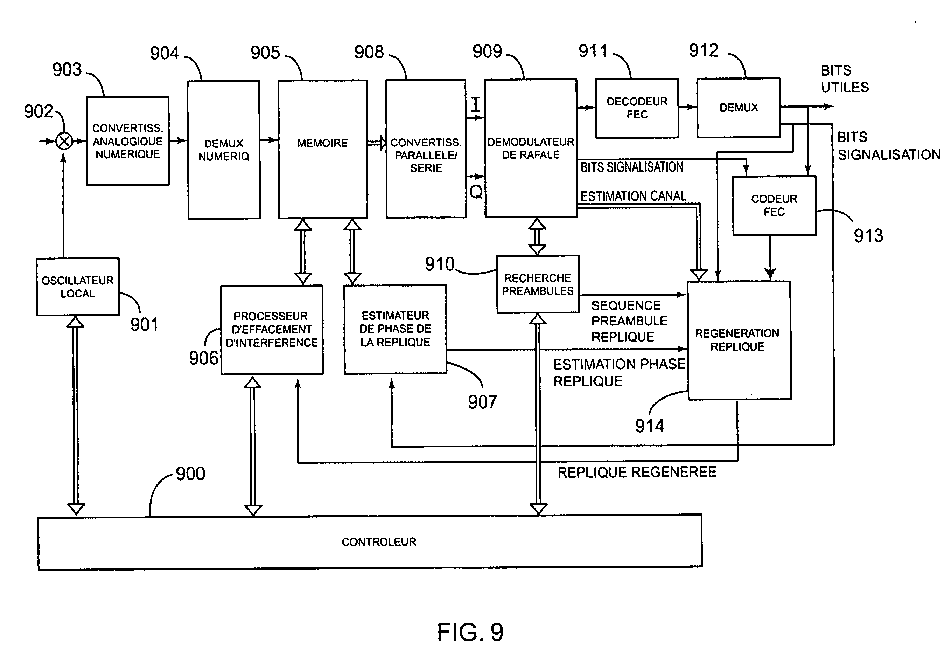

La figure 9 montre un schéma fonctionnel d'un démodulateur CRDSA selon un mode de réalisation de l'invention, généralement destiné à équiper les passerelles. Un tel modulateur peut également être embarqué à bord d'un satellite régénérateur.

Le signal MF-TDMA signaux reçu est d'abord converti à une fréquence intermédiaire IF, (oscillateur local 901 et mélangeur 902), et ensuite converti au format numérique (convertisseur analogique/numérique 903). Un démultiplexeur numérique 904 sépare les différentes porteuses constituant une super-trame ; dans la suite, on ne considère que la ou les trames allouées à la transmission RA. Les échantillons complexes constituant le signal MF-TDMA numérique sont stockés en une mémoire 905, pour en être extraites dans un ordre séquentiel correspondant aux trames individuelles par un convertisseur parallèle/série 908 et passés à un bloc démodulateur de rafales 909.

Le bloc démodulateur 909 se sert d'un dispositif d'identification des répliques « propres », réalisé sous la forme d'un dispositif de recherche de préambules 910 pour identifier, à l'intérieur dudit signal numérique, les répliques qui peuvent être démodulées et décodées correctement, car elles ne sont pas corrompues par des collisions destructives. De préférence, le dispositif de recherche de préambule effectue une recherche en parallèle de toutes les séquences binaires pseudo-aléatoires qui peuvent être utilisées en tant que préambules.

Le bloc démodulateur 909 effectue des opérations d'estimation de paramètres du canal, plus particulièrement de paramètres d'amplitude, de fréquence, de phase et de temporisation des répliques identifiées, et de démodulation des répliques propres, en utilisant lesdites estimations de paramètres du canal.

Les répliques démodulées sont ensuite décodées par le décodeur FEC 911 et passées au démultiplexeur 912 qui sépare l'information de signalisation des données utiles effectives, qui sont extraites du démodulateur. Le bloc démodulateur 909 et le décodeur FEC 911 constituent conjointement un dispositif d'extraction de l'information contenue dans les répliques identifiées.

Les données utiles effectives sont également dirigées vers un encodeur FEC 913, qui reçoit aussi en entrée une information de signalisation de la réplique propre qui vient d'être démodulée. La sortie de l'encodeur 913 est une séquence binaire en principe identique à celle constituant les données utiles de la réplique jumelle de ladite réplique propre.

L'information de signalisation extraite par le démultiplexeur 912 est utilisée par un dispositif 907 d'estimation de phase pour localiser ladite réplique jumelle à l'intérieur de la mémoire 905 et en extraire une information de phase (voir équation 11 ci-dessus). Ladite information de phase, les estimations d'amplitude et de décalage en fréquence obtenues par le bloc 909, la séquence de préambule identifiée par le bloc 910, l'information de signalisation obtenue par le démultiplexeur 912 et la séquence binaire en sortie de l'encodeur 913 constituent les entrées d'un dispositif 914 de régénération de la réplique jumelle en bande de base. Cette réplique régénérée est passée, avec l'information de signalisation adaptée, au processeur d'effacement d'interférence 906, qui agit sur le contenu de la mémoire 905 pour effacer l'interférence éventuellement induite par la réplique jumelle de la rafale qui vient d'être démodulée et décodée. Le fonctionnement du modulateur est piloté par un contrôleur 900.

Comme dans le cas de la figure 8, les blocs représentés en couleur gris foncé (906, 907, 912, 913 et 914) constituent des adjonctions par rapport à un démodulateur (D)SA connu de l'art antérieur, alors que le bloc 910, en gris clair, est simplement modifié. Comme dans le cas du modulateur de la figure 8, le contrôleur 900, ou plutôt le logiciel qui en détermine le fonctionnement, est également modifié.

Une comparaison entre figures 8 et 9 montre que la mise en oeuvre de l'invention requiert seulement des modifications relativement marginales des modulateurs, qui doivent être produits en grandes quantités et à des prix contenus, car ils sont destinés aux utilisateurs domestiques. Les modifications sont relativement plus importantes pour les démodulateurs, qui sont des équipements professionnels, produits en nombre beaucoup plus limité.

Le procédé de l'invention a fait l'objet d'une étude théorique analytique et au moyen de simulations numériques, qui a permis d'en mettre en évidence les avantages par rapport à l'art antérieur. Les principaux résultats de cette étude seront exposés ci-après.

Une modélisation analytique permet de calculer une limite supérieure pour le débit T (de l'anglais « throughput ») qui peut être obtenu par un procédé CRDSA, indépendamment des détails de sa mise en oeuvre. Le débit normalisé T, défini comme le nombre moyen de paquets correctement décodés par segment temporel, est donné par le produit du chargement du canal de transmission (nombre moyen de paquets transmis par segment temporel) par la probabilité

$P_{pd}(N_{iter}|G)$ qu'un paquet reçu soit décodé correctement. Cette probabilité dépend de G, via la probabilité de collision des paquets, et du nombre d'itération $N_{iter}$ de l'algorithme d'effacement des interférences :

$$T(N_{iter}|G) = G\ P_{pd}(N_{iter}|G) \qquad [17]$$

Si on indique par $P_{pd}^A$ et $P_{pd}^B$ la probabilité de décoder correctement respectivement la première et la deuxième réplique d'un paquet, et en observant que, par symétrie $P_{pd}^A = P_{pd}^B$, on peut exprimer $P_{pd}$ comme suit :

$$P_{pd}\left(N_{iter}|G\right) = 1 - \left[\left(1 - P_{pd}^A\left(N_{iter}|G\right)\right)\cdot\left(1 - P_{pd}^B\left(N_{iter}|G\right)\right)\right] = 1 - \left[\left(1 - P_{pd}^A\left(N_{iter}|G\right)\right)^2\right]$$

$$[18]$$

Une limite supérieure pour $P_{pd}^A$ peut être trouvée à l'aide de l'équation récursive suivante :

$$P_{pd}^A\left(N_{iter}|G\right) \le P_{al}^A(G) + \sum_{i=0}^{G\cdot M_{slots}^{RA}-1} P_{int}\left(i|G\right)\left[P_{pd}^A\left(N_{iter}-1|G\right)\right]^i \qquad [19]$$

avec la condition initiale $P_{pd}^A\left(0|G\right) = 0$.

Dans l'équation [19], $P_{al}^A(G)$ est la probabilité qu'une réplique soit seule dans son segment temporel, c'est à dire qu'elle ne subisse pas de collisions. $P_{int}(i|G)$ est la probabilité qu'une réplique subisse i collisions (i+1 répliques transmises dans le même segment temporel) et $G\cdot M_{slots}^{RA}$ représente le nombre maximal de répliques qui peuvent être transmises dans le même segment temporel, $M_{slots}^{RA}$ étant le nombre de segments temporels compris dans une trame RA.

On peut démontrer que

$$P_{int}\left(i|G\right) = \binom{G\cdot M_{slots}^{RA}-1}{i}\left(\frac{2}{M_{slots}^{RA}}\right)^i\left[1-\left(\frac{2}{M_{slots}^{RA}}\right)\right]^{G\cdot M_{slots}^{RA}-1-i} \qquad [20]$$

où $\left(\dfrac{2}{M_{slots}^{RA}}\right)$ est la probabilité qu'une des deux répliques d'un paquet déterminé se trouve dans un segment temporel donné. On en déduit que $P_{al}^A(G) = P_{int}\left(0|G\right)$.

L'équation [19] donne une limite supérieure pour $P_{pd}^A$ car elle ne prend pas en considération l'effet du bruit, ni les situations, telles que celles illustrées par les figures 4A et 4B, dans lesquelles l'effacement des interférences ne peut pas être effectué avec succès, ni les cas de « collision de préambule », lorsque deux répliques ayant le même préambule entrent en collision avec un décalage temporel inférieur à la durée d'un symbole, ce qui empêche la récupération de la phase $\hat{\phi}\left[i_k, n_k^r\right]$ par l'équation [11]. S'il est difficile d'évaluer a priori la probabilité de réalisation de collisions « insolubles » telle que celles représentées sur les figures 4A et 4B, la probabilité de « collision de préambule » peut être calculée en fonction de G, de $S_{PR}$ (nombre de séquences pouvant être utilisées comme préambules) et du décalage temporel maximal $D_{max}$ entre deux paquets appartenant au même segment temporel :

$$P_{pre-coll}(G) = \sum_{i=1}^{G \cdot M_{slots}^{RA} - 1} P_{int}(i|G) \cdot \left[ \sum_{j=1}^{i} \binom{i}{j} p^j (1-p)^{i-j} \right] \qquad [21]$$

où $p = 1/(S_{PR} \cdot D_{max})$. Comme il sera montré par la suite, dans des conditions normales de fonctionnement réalistes, $P_{pre-coll}$ est inférieur à 1 %.

On considère maintenant des simulations numériques, réalisées en utilisant les logiciels Matlab (http://www.mathworks.com/) et OPNET (OPNET Technologies, Inc. 7255 Woodmont Avenue, Bethesda, MD 20814, Etats-Unis). Le modèle prend en compte une pluralité de modulateurs TDMA CRDSA, affectés par des fluctuations indépendantes d'amplitude. Les signaux générés par les différents modulateurs s'additionnent après avoir subi un retard correspondant à un temps de propagation de l'ordre de 250 ms (typique pour un satellite géostationnaire) et avoir été affecté par un bruit blanc gaussien additif. Le signal composite est ensuite traité par un procédé CRDSA avec un nombre variable d'itérations, dans l'hypothèse d'estimation parfaite des paramètres du canal (amplitude, phase, temporisation des paquets). Le trafic est modélisé par un processus de Poisson.

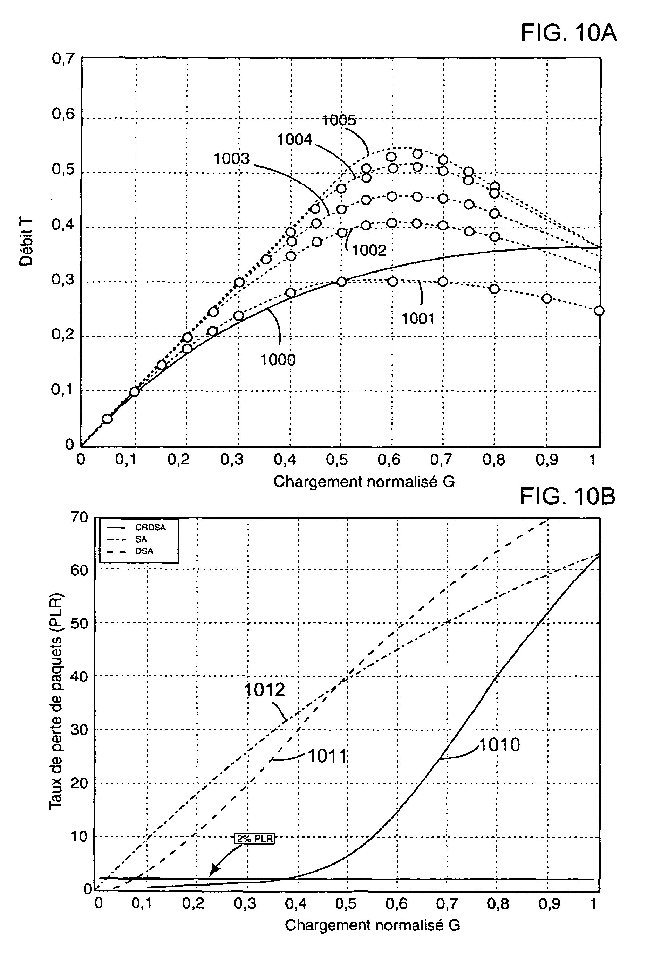

La figure 10A montre la dépendance du débit normalisé T du chargement G du canal pour un procédé CRDSA avec $N_{iter}$ = 1, 2, 3, 6 et 16 (courbes 1001, 1002, 1003, 1004 et 1005 respectivement); le cas $N_{iter}$ = 1 correspond en fait au procédé DSA(k=2) connu de l'art antérieur. Les courbes 1001 - 1005 en trait pointillé représentent les résultats analytiques, les cercles ceux des simulations. La courbe 1000 en trait continu montre, dans un but de comparaison, les performances du procédé SA traditionnel. On peut d'abord observer que l'approche analytique donne des bons résultats, qui diffèrent de manière appréciable des simulations numériques seulement pour $N_{iter}$=16. La figure montre que la valeur maximale de T obtenue par un procédé CRDSA vaut environ 0,52 et est obtenue pour G≈0,65. Si on compare ce résultat au débit normalisé de 0,5 (G≈0,38) qui peut être atteint par le procédé SA on pourrait croire que l'invention n'apporte qu'une amélioration relativement marginale. En réalité, si l'on veut maintenir les retards de transmission dans des limites acceptables, il est nécessaire de faire fonctionner les procédés RA dans des conditions permettant de garantir une faible probabilité de perte de chaque paquet, par exemple de l'ordre de 2%.

La figure 10B montre le taux de perte de paquets, $PLR(G) = 1 - \dfrac{T(G)}{G}$ en fonction de G pour un procédé CRDSA avec estimation du canal parfaite et $N_{iter}$=10, (ligne continue 1010), pour un procédé DSA avec k=2 (ligne hachurée 1011) et pour un procédé SA (ligne en traits et points 1012). La figure montre qu'un taux de perte de paquets PLR de 2% est obtenu pour un chargement du canal G de :

- 0,02 pour le procédé SA ;
- 0,075 pour le procédé DSA ; et
- 0,35 pour le procédé CRDSA.

Si on effectue une comparaison à PLR=2%, le procédé de l'invention permet donc une augmentation de débit d'un facteur 17 environ par rapport au procédé SA et d'un facteur 4,6 par rapport au procédé DSA. On peut dire que l'avantage de l'invention ne réside pas seulement dans une augmentation du débit normalisé pour un chargement G donné, mais aussi dans la possibilité d'utiliser un chargement du canal beaucoup plus important sans que cela provoque une dégradation inacceptable du facteur PLR.

On comprend qu'un procédé de contrôle de flux, par exemple le procédé décrit ci-dessus en référence à la figure 6, est avantageusement mis en oeuvre pour maintenir le chargement du canal au-dessous d'une valeur limite, par exemple $G_{th}$=0,4.

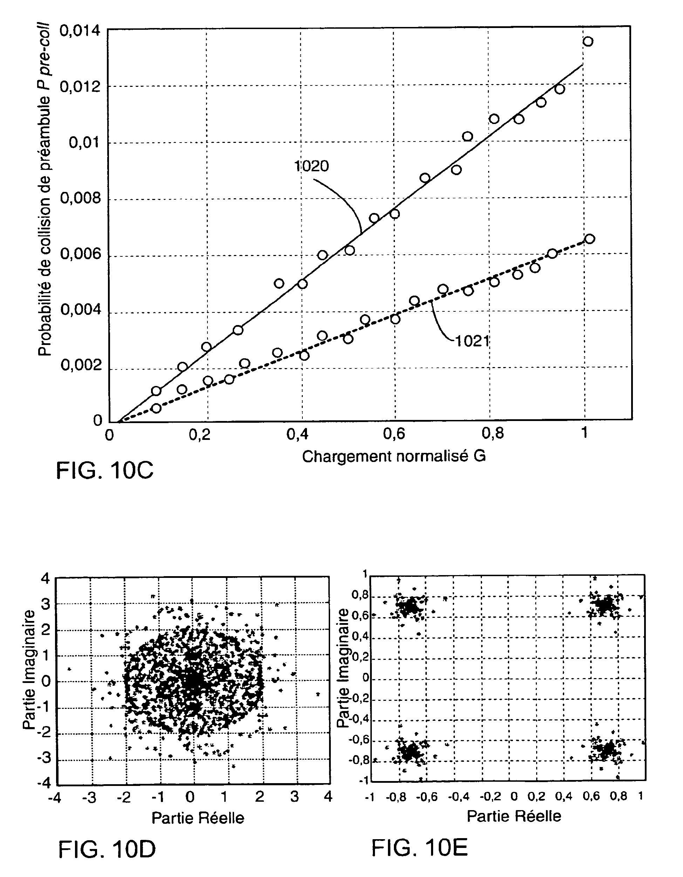

La figure 10C montre la dépendance de la probabilité de collision de préambule $P_{pre-coll}$ du chargement G pour des préambules choisis à l'intérieur d'une famille de $S_{PR}$=31 (ligne 1020) et de $S_{PR}$=63 éléments (ligne 1021). Les cercles montrent les résultats analytiques, obtenus à partir de l'équation [21]. Pour un chargement G=0,35, cette probabilité vaut environ 0,0045 dans le premier cas et 0,0022 dans le deuxième. On peut en conclure que des familles de séquences de 30 - 60 éléments sont adaptées dans des conditions réalistes d'utilisation du procédé CRDSA. Il faut observer que, dans les systèmes réels, pour obtenir une synchronisation acceptable il faut utiliser des préambules d'au moins 48 symboles ; comme le nombre d'éléments de la famille de séquence est généralement égal au nombre de symboles de chaque séquence, le cas $S_{PR}$=31 est particulièrement pessimiste.

La comparaison entre les figures 10D et 10E met en évidence l'efficacité du procédé d'effacement d'interférence. Les deux figures montrent, sous la forme d'un nuage de points, la partie réelle et la partie imaginaire du signal en bande de base correspondant à des segments temporels dans lesquels des collisions se sont vérifiées, respectivement pour $N_{iter}$ = 1 (figure 10D) et $N_{iter}$ = 10 (figure 10E). On observe que, dans le premier cas, les points sont repartis de manière quasi-uniforme à cause des multiples interférences entre paquets émis par des différents terminaux satellite alors que, après 10 itérations de l'algorithme d'effacement d'interférence, ils sont très nettement groupés en quatre ensembles correspondant aux quatre points de la constellation QPSK. Ces figures ont été obtenues en prenant un chargement du canal G=0,4 et en supprimant le bruit additif gaussien.

Jusqu'à présent on a considéré le cas d'une estimation parfaite du canal et de l'absence de bruit. Ces hypothèses seront maintenant relâchées.

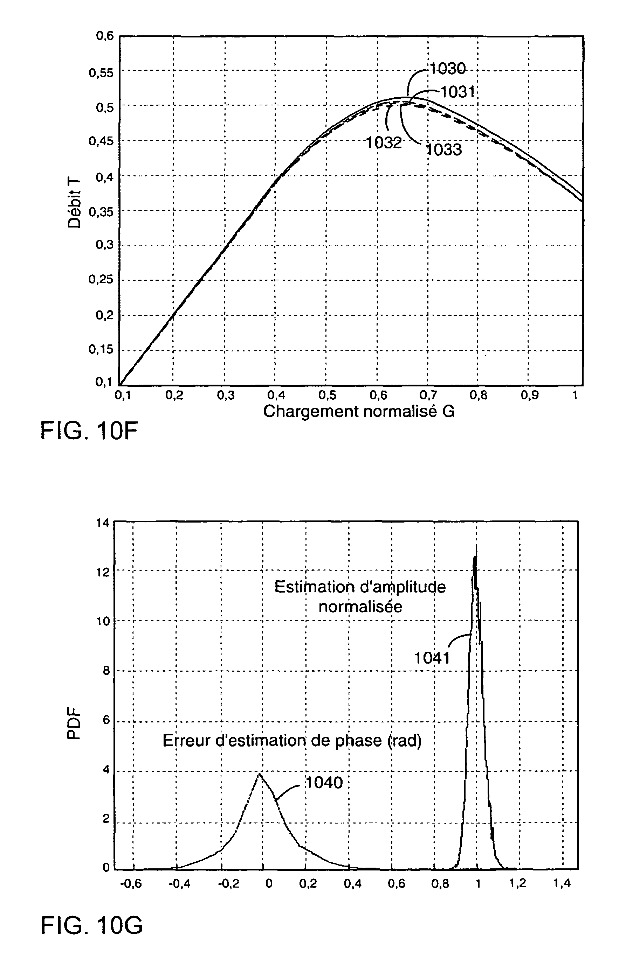

La figure 10F montre l'effet du bruit gaussien additif sur le débit qui peut être obtenu en mettant en oeuvre un procédé selon l'invention avec $N_{iter}$=10. On a considéré le cas de rafales comportant $N_{guard}$=5 symboles de garde, un préambule de $N_{pre-a}$=31 symboles, choisi à l'intérieur d'une famille de $S_{PR}$=31 séquences et $N_{pay}$=424 symboles de données utiles (ce qui correspond à une celle ATM avec un taux de codage convolutionnel de ½ et modulation QPSK). Le code FEC est tel qu'un BER (taux d'erreur sur les bits) de $10^{-5}$ est atteint pour un rapport signal sur bruit $E_s/N_0$=4,2 dB. Les courbes 1030, 1031, 1032 et 1033 correspondent respectivement à un rapport signal sur bruit infini et de 8, 6 et 5 dB respectivement. On peut observer que pour un chargement G=0,35, qui correspond à un facteur PLR de 2%, réputé acceptable, il n'y a pratiquement aucune différence perceptible entre ces trois cas. Des simulations ont été effectuées pour évaluer l'impact du bruit de phase sur le processus d'effacement d'interférences. Pour une masque de bruit de phase comme spécifiée dans le document précité « ETSI TR 101 790 v1.2.1 (2003-01)- Digital Video Broadcasting (DVB) ; Interaction Channel for Satellite Distribution Systems ; Guidelines for the use of EN 301 790 », les résultats montrent que pur un débit a partir de 128 Kbaud l'impact du bruit de phase est négligeable.

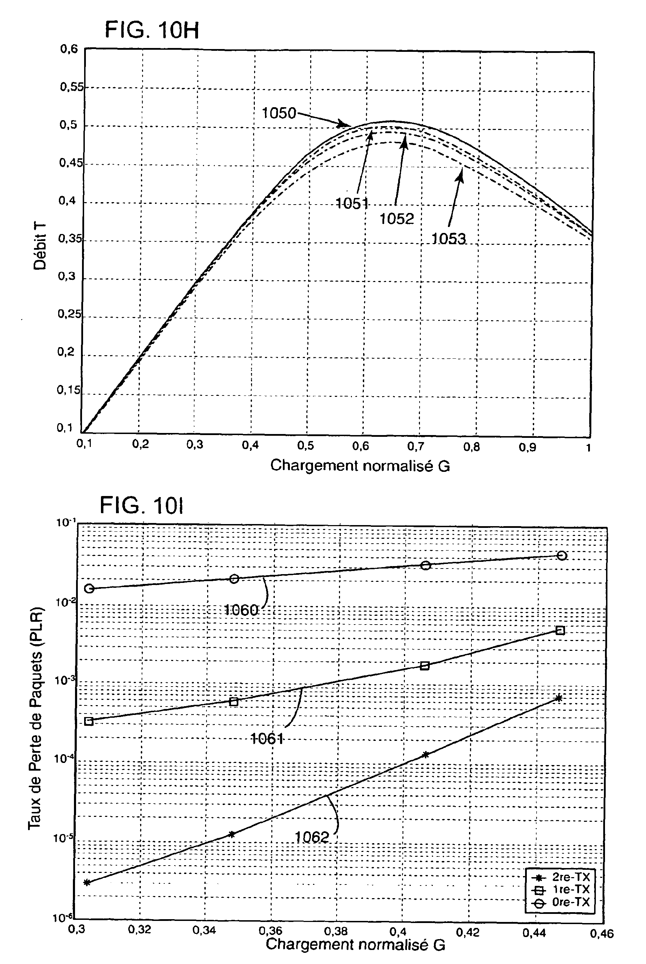

Pour mieux comprendre les causes de dégradation des performances de l'invention à l'augmenter du niveau de bruit, perceptible essentiellement pour G≥0,45, il est intéressant d'analyser l'importance des erreurs d'estimation d'amplitude et de phase, qui ont une influence directe sur l'efficacité de l'algorithme d'effacement d'interférence. La figure 10G montre la fonction de densité de probabilité (PDF - « Probability Density Function ») pour l'erreur d'estimation de phase (courbe 1040) et pour l'estimation d'amplitude (courbe 1041) dans le cas d'un rapport signal sur bruit $E_s/N_0$=6 dB et d'un chargement G=0,4 ; seuls les segments temporels dans lesquels s'est vérifiée au moins une collision ont été pris en compte. L'axe des abscisses représente un angle (en radians) pour la phase et une valeur relative pour l'amplitude (rapport entre l'amplitude estimée et sa valeur réelle). On observe que la dispersion de l'estimation de phase est relativement importante : cela n'est pas surprenant, car la phase est calculée à partir du préambule, c'est à dire en utilisant seulement $N_{pre-a}$=31 symboles, alors que l'estimation d'amplitude se fait à l'aide des $N_{pay}$= 424 symboles des données utiles. En outre, l'estimation d'amplitude se fait à partir d'une réplique « propre », alors que l'estimation de phase utilise une réplique « sale », en présence de collisions ; un mode de réalisation alternatif du procédé de l'invention, permettant d'améliorer l'estimation de phase, sera décrit plus loin. Une analyse simplifiée montre que le rapport signal sur bruit équivalent (SNR) dû à la présence d'une erreur de phase $\Delta\hat{\phi}$ peut être approché par $SNR = 1/\delta_{\Delta\hat{\phi}}^2$ où $\delta_{\Delta\hat{\phi}}$ représente l'écart type du bruit de phase. Jusqu'ici on a fait l'hypothèse implicite selon laquelle les signaux émis par les différents terminaux satellite arrivent à la passerelle avec la même intensité (L[i,n]=constant, voir équation [9]). Dans la figure 10H on montre l'influence des différences d'intensité des signaux reçus ; dans les simulations utilisées pour réaliser cette figure le bruit à été négligé, un nombre d'itération $N_{iter}$=10 a été considéré et l'amplitude des signaux émis par les différents terminaux a été modélisée comme une variable aléatoire suivant une distribution logarithmico-normale avec une valeur moyenne de 0 dB et un écart type $\sigma_{Rx}$= 0, 1, 2, 3 dB pour les courbes 1050, 1051, 1052 et 1053 respectivement. On observe une dégradation des performances qui est modérée dans la région de débit maximal (G≈0,65) mais négligeable pour G=0,35.

Un taux de perte de paquets (facteur PLR) de 2%, qui peut être obtenu pour G=0,35, est inacceptable dans des nombreuses applications. Pour cette raison l'invention (tout comme les procédés de l'art antérieur) prévoit la possibilité de retransmettre les paquets qui n'ont pas été reçus correctement. Par exemple, comme il a été discuté plus haut, il est possible de retransmettre une seule fois les paquets perdus lors de leur première transmission, mais il est préférable de les retransmettre deux fois dans la même trame avec un décalage temporel arbitraire. En tout cas, pour PLR(pas de retransmission)=2%, l'augmentation de G induite par les retransmissions est faible. Sur la figure 10I, les courbes 1060, 1061 et 1062 montrent le taux de perte des paquets PLR pour 0, 1 et 2 retransmissions respectivement. On observe qu'en prenant G=0,35 et 2 retransmissions, le taux de perte est de l'ordre de $10^{-5}$ seulement.

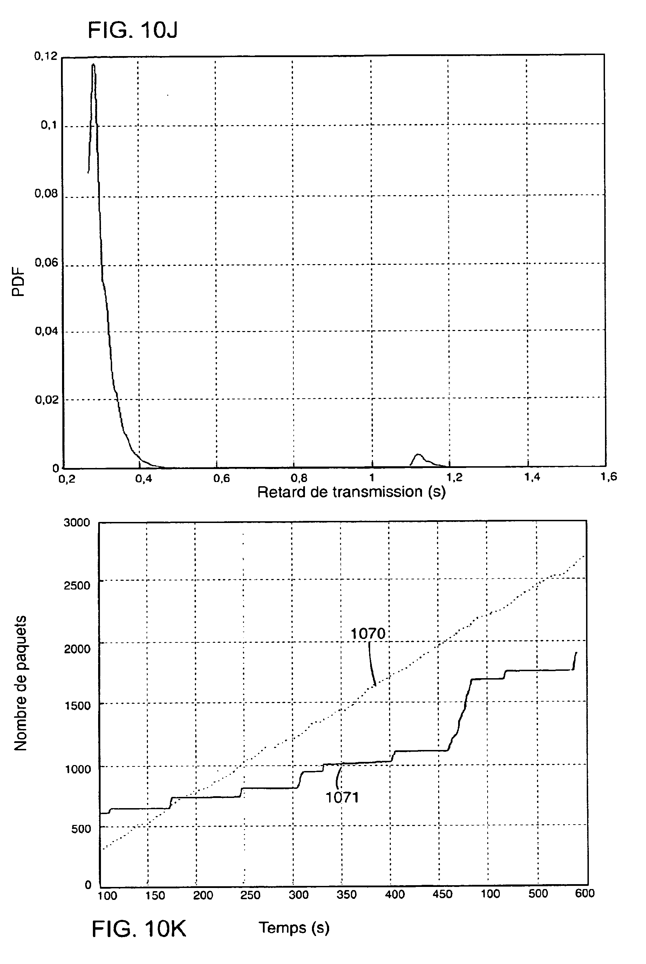

La figure 10J montre la fonction de densité de probabilité PDF pour le retard de transmission d'un paquet, dans le cas G=0,4 et avec une double retransmission simultanée des paquets qui ne sont pas décodés correctement lors de leur première transmission. Le pic le plus à gauche, dont l'aire est d'environ 0,98, correspond aux paquets qui ont été décodés correctement après une seule transmission ; leur retard moyen est de 335 ms. En l'absence de retransmission, ce retard moyen serait légèrement inférieur, de l'ordre de 308 ms, car le chargement effectif du canal serait plus faible (pas de paquets retransmis). Le pic secondaire correspond au 2% de paquets qui ont été retransmis, et qui sont reçus avec un retard moyen d'environ 1,15 s. La figure fait référence au cas où chaque paquet qui doit être retransmis l'est deux fois à l'intérieur de la même trame. Si l'on n'effectuait qu'une seule retransmission, le délai moyen serait raccourci de seulement 2 ms environ, grâce à une modeste réduction du chargement du canal, mais le PLR serait multiplié par 10 (voir la figure 10I). On comprend donc l'intérêt de la solution retenue.

Jusqu'ici on n'a considéré que les prestations d'un procédé CRDSA « pur », mais dans certaines situations il est avantageux d'utiliser un procédé hybride CRDSA-DA. Une telle situation se présente, par exemple, lorsque le trafic est constitué de la superposition d'un processus de Poisson et d'une composante à arrivées massives (« bulky traffic »). Sur la figure 10K, la ligne en trait pointillé 1070 représente un trafic « de Poisson », dans lequel le nombre de paquets reçus augmente régulièrement dans le temps, et a ligne en trait plein 1071 un trafic à arrivées massives, dans lequel les paquets arrivent par lots épars mais de grandes dimensions. Le trafic « de Poisson » est typiquement produit par les utilisateurs domestiques, qui sont nombreux et transmettent des petites rafales de données indépendamment les uns des autres. Pour étudier les performances d'un procédé CRDSA-DA selon l'invention, un trafic hybride constitué par 90% de sources de Poisson et 10% de sources à arrivées massives a été simulé ; le chargement total du canal est de 40%. Dans un premier cas, représentatif de l'art antérieur, les données sont transmises en utilisant uniquement un procédé DA ; des trames RA ont été allouées uniquement pour permettre la transmission des requêtes de capacité. Comme on peut le voir sur la figure 10L, qui représente la fonction de densité de probabilité du retard de transmission, la quasi-totalité des paquets est transmise avec un retard compris entre 1 et 1,5 secondes, avec un retard moyen de l'ordre de 1,1 s.

La figure 10M montre la fonction de densité de probabilité du retard de transmission pour le cas où les trames sont allouées à la transmission RA (CRDSA) ou DA en fonction des caractéristiques du trafic. En l'espèce, la transmission CRDSA est responsable d'un chargement du canal de 0,25 et la transmission DA d'un chargement de 0,15. On observe que la distribution est bimodale : le trafic correspondant aux arrivées massives continue à être transmis par un procédé DA, et le retard moyen reste de l'ordre de 1,1 secondes; par contre, les utilisateurs domestiques peuvent transmettre leurs données tout de suite, sans attendre qu'une trame DA leur soit allouée. En conséquence, pour ces utilisateurs, le retard peut devenir aussi court que 0,35 secondes.

L'invention a été décrite en détail en référence à un mode de réalisation particulier, mais des nombreuses variantes sont possibles.

Par exemple, dans le mode de réalisation décrit ci-dessus, les répliques d'un même paquet sont transmises sur un même porteuse, à une même fréquence ; autrement dit, le procédé CRDSA est basé sur un protocole SA avec diversité de temps. Si les émetteurs (les terminaux satellites) peuvent transmettre sur une pluralité de canaux de fréquence, il est également possible de réaliser un procédé CRDSA basé sur un protocole SA avec diversité de fréquence. Dans un tel procédé, les répliques d'une même paquet sont transmises avec un décalage fréquentiel pseudo-aléatoire, qui s'ajoute au décalage temporel considéré jusqu'ici ou le remplace (dans ce dernier cas, les répliques décalées en fréquence sont transmises simultanément). Dans ce cas, l'information de signalisation transmise avec chaque réplique doit permettre de localiser la (ou les) réplique jumelle en fréquence, et pas (ou pas seulement) temporellement .

Les modifications à apporter aux équipements de transmission et réception pour la mise en oeuvre de ce mode de réalisation de l'invention sont à la portée de l'homme du métier.

Une autre variante particulièrement intéressante du procédé CRDSA permet de réduire le surdébit introduit par l'information de signalisation, et d'améliorer de ce fait l'efficacité d'utilisation du canal. Dans ce mode de réalisation, le décalage (temporel ou fréquentiel) entre deux répliques d'un même paquet est déterminé à l'aide d'une fonction pseudo-aléatoire de paramètres qui sont connus aussi bien par l'émetteur (terminal satellite) du paquet que par le récepteur (passerelle), ou qui font, de toute façon, partie de l'information contenue dans les données utiles. De cette façon, la seule « information de signalisation » qui doit être spécifiquement transmise est un bit indiquant le signe du décalage (positif pour la première réplique et négatif pour la deuxième. Comme les protocoles de communication généralement prévoient des bits non utilisés, un de ces bits peut servir à ce fin : de cette façon, la mise en oeuvre du procédé CRDSA n'engendre aucun surdébit.

Par exemple, les données utiles du paquet #k contiennent généralement, entre autre, l'adresse MAC du terminal satellite quia transmis ledit paquet, $MAC_k$, et un compteur de paquet $N_{packet\_k}$. Il est donc possible de déterminer le décalage temporel des répliques à l'aide d'une fonction pseudo-aléatoire F(MAC$_k$, N$_{packet\_k}$) à valeurs entières uniformément distribuées entre 1 et M$_{slot}$-1. Plus précisément, si n$_k$ indique la localisation temporelle d'une réplique, la localisation de sa réplique jumelle sera donnée par

$$n_k^r = \left[ n_k + s_k \cdot F\left(N_{packet\_k}, MAC_k\right)\right] \bmod M_{slot} \qquad [22]$$

Dans l'équation [22], s$_k$ vaut +1 pour la première réplique et -1 pour la deuxième et il constitue la seule information qui doit être ajoutée aux données utiles spécifiquement pour les besoins du procédé CRDSA. L'opérateur « modulo » est nécessaire pour assurer que la réplique jumelle soit localisée à l'intérieur du segment temporel considéré.

On observe qu'une fonction pseudo-aléatoire dépendant uniquement de l'adresse MAC serait moins satisfaisante, car si plusieurs paquets consécutifs étaient émis par le même terminal satellite, la distance entre répliques serait la même pour tous ces paquets, et cela serait susceptible de générer des nombreux conflits d'accès « inextricables », du type de ceux illustrés sur les figures 4A et 4B.

Alternativement, d'autres champs des données utiles, ou même les données utiles en entier, peuvent être utilisées pour déterminer la valeur absolue du décalage temporel.

Ce même principe peut être appliqué au cas de CRDSA avec diversité de fréquence.

Bien que dans la description qui précède il ait toujours été fait référence à un « préambule » situé, comme le nom l'indique, au début de chaque paquet de données, cela n'a pas un caractère essentiel. En effet, le préambule peut être remplacé par une séquence binaire d'acquisition présentant les mêmes propriétés d'autocorrélation et de corrélation croisée, mais située à la fin du paquet, voire en son milieu. L'invention n'est nullement limitée à l'utilisation d'un « préambule » au sens strict du terme.

Des modes de réalisation de l'invention qui se distinguent du mode de réalisation décrit ci-dessus par une approche différente au problème de l'estimation de la phase des répliques « sales » à régénérer et à effacer, et qui s'avèrent être particulièrement avantageux au moins pour certaines applications, méritent d'être considérés plus en détail.

Le premier de ces modes de réalisation alternatifs permet d'améliorer l'estimation de phase de la porteuse des répliques à effacer en remplaçant une estimation « globale », indépendante du temps et donc identique pour tous les symboles de ladite réplique, qui est obtenue uniquement à partir du préambule, par une estimation différente pour chaque symbole. Cette estimation dépendante du temps peut être obtenue à l'aide d'une boucle de verrouillage de phase assistée par les données (DA-PLL), en exploitant la connaissance des données utiles transportées par ladite réplique « sale », connaissance qui a été acquise en décodant la réplique « propre » correspondante. L'amélioration de l'estimation de phase, et donc de l'effacement des interférences, qui peut être obtenue ainsi est particulièrement significative lorsque le canal de transmission est affecté par un bruit de phase important et/ou la transmission s'effectue à faible débit.

Avant de décrire ce premier mode de réalisation alternatif de l'invention, il est nécessaire de considérer plus en détail l'effet des erreurs d'estimation de phase sur l'efficacité de l'étape d'effacement des interférences dues aux collisions entre répliques de paquets différents. Pour ce faire, on commence par réécrire, sous une forme légèrement différente, l'expression du signal discret obtenu par échantillonnage du signal reçu et démodulé de manière cohérente (équation [5]) :

$$\bar{r}[n] = \sum_{i=1}^{N_{ST}} \delta[i,n] L[i,n] \bar{s}[i,n,q] z^{-D[i,n]} exp\left\{ j\left(\bar{\phi}[i,n]\right)\right\} + \bar{w}[n] \qquad [23]$$

L'équation [23] se différencie de l'équation [5] en ce que le paramètre de phase $\bar{\phi}$ a été redéfini de manière à inclure également la contribution due au décalage en fréquence $\Delta\omega$ de l'oscillateur local. Le paramètre de phase $\bar{\phi}$ ainsi redéfini se compose de deux contributions :

$$\bar{\phi}[i,n] = \bar{\psi}[i,n] + \bar{\theta}[i,n]$$
$$\bar{\theta}[i,n] = \left[\bar{\theta}_0[i,n], \bar{\theta}_0[i,n] + \Delta\omega[i,n]T_s, ..., \bar{\theta}_0[i,n] + \Delta\omega[i,n]\left(N_{slot}^{RA} - 1\right)T_s\right] \qquad [24]$$

où $\bar{\psi}$, $\bar{\theta}_0$ et $\bar{\theta}[i, n]$ représentent respectivement la contribution du bruit de phase, la phase initiale de la porteuse dans le segment temporel n pour le terminal satellite i et l'erreur de phase résiduel provoqué par l'erreur de fréquence $\Delta\omega$.

Suivant cette notation modifiée et conformément au mode de réalisation de l'invention décrit plus haut, l'effacement d'une réplique provenant du terminal satellite i et provoquant une collision dans le segment temporel n$^r$ à l'itération N$_{iter}$ de l'algorithme d'effacement des interférences peut être écrite de la manière suivante :

$$\bar{r}\left[n^r, N_{iter}+1\right] \approx \bar{r}\left[n^r, N_{iter}\right] - \hat{A}[i,n]\exp\left[j\hat{\phi}[i,n^r]\right]\left[\bar{\hat{s}}_{pre}[i], \bar{\hat{s}}_{pay}[i,n]\right] \qquad [25]$$

où, dans un but de simplicité, l'indice k a été omis, ainsi que l'identifiant q de la réplique « propre » correspondante.

Considérons par simplicité qu'à l'itération N$_{iter}$ il y ait dans le segment temporel n$^r$ uniquement un paquet « utile », que l'on veut récupérer, r" [n$^r$] et ladite réplique interférente provenant du terminal satellite i. On peut donc écrire :

$$\bar{r}\left[n^r, N_{iter}\right] \approx \bar{r}^u\left[n^r\right] + \hat{A}[i,n^r]\mathbf{P}[i,n^r]\left[\bar{s}_{pre}[i], \hat{s}_{pay}[i,n], \bar{s}_{guard}\right] \qquad [26]$$

où P est la matrice dont les éléments représentent la phase de chaque symbole de la réplique interférente :

$$\mathbf{P}[i,n] = \begin{pmatrix} exp[j\phi_1[i,n]] & 0 & \cdots & 0 & 0 \\ 0 & exp[j\phi_2[i,n]] & \cdots & 0 & 0 \\ \vdots & \vdots & \vdots & \vdots & \vdots \\ 0 & 0 & \cdots & exp[j\phi_{N_{slot}^{RA}-1}[i,n]] & 0 \\ 0 & 0 & \cdots & & exp[j\phi_{N_{slot}^{RA}}[i,n]] \end{pmatrix} \qquad [27]$$

et $\phi_k[i,n] \in \bar{\phi}[i,n]$, $k = 1...N_{slot}^{RA}$.

Si on considère que l'estimation de l'amplitude est pratiquement parfaite $\hat{A}[i,n] \approx A[i,n^r]$ et que la séquence binaire de la réplique « propre» est récupérée sans erreurs $\left[\bar{\hat{s}}_{pre}[i], \bar{\hat{s}}_{pay}[i,n]\right] \approx \left[\bar{s}_{pre}[i], \bar{s}_{pay}[i,n]\right]$, l'équation [25] devient :

$$\bar{r}\left[n^r, N_{iter}+1\right] \approx \bar{r}^u\left[n^r\right] + A[i,n^r]\left\{\mathbf{P}[i,n^r] - \exp\left[j\hat{\phi}_{pre}[i,n^r]\right]\mathbf{I}\right\}\left[\bar{s}_{pre}[i], \bar{s}_{pay}[i,n]\right] =$$
$$r^u\left[n^r\right] + \hat{A}[i,n^r]\exp\left[j\hat{\phi}_{pre}[i,n^r]\right]\Delta\mathbf{P}[i,n^r]\left[\bar{s}_{pre}[i], \hat{s}_{pay}[i,n]\right] = r^u\left[n^r\right] + i^u\left[n^r\right]$$
$$[28]$$

où :

$$\Delta \mathbf{P}\left[i, n^{r}\right] = \begin{pmatrix} \exp\left[ j\left(\phi_{1}\left[i,n\right] - \hat{\phi}_{pre}\left[i,n^{r}\right]\right)\right] - 1 & \cdots & 0 \\ 0 & \cdots & 0 \\ \vdots & \vdots & \vdots \\ 0 & \cdots & 0 \\ 0 & \cdots & \exp\left[ j\left(\phi_{N_{slot}^{RA}}\left[i,n\right] - \hat{\phi}_{pre}\left[i,n^{r}\right]\right)\right] - 1 \end{pmatrix}$$

$$[29]$$

L'estimation de phase a été indiquée par $\hat{\phi}_{pre}$ et pas simplement par $\hat{\phi}$ pour mettre en évidence le fait que cette estimation a été déterminée uniquement à partir du préambule de la réplique à effacer.

Si $(\phi_k [i,n] - \hat{\phi}_{pre} [i,n]) << 1 \forall k$ il est possible de remplacer $\Delta P$ par la matrice $\Delta S$ définie par :

$$\Delta S\left[i, n^{r}\right] = \begin{pmatrix} \sin\left(\phi_{1}\left[i,n\right] - \hat{\phi}_{pre}\left[i,n\right]\right) & \cdots & 0 \\ 0 & \cdots & 0 \\ \vdots & \vdots & \vdots \\ 0 & \cdots & 0 \\ 0 & \cdots & \sin\left(\phi_{N_{slot}^{RA}}\left[i,n\right] - \hat{\phi}_{pre}\left[i,n\right]\right) \end{pmatrix} \approx$$

$$\begin{pmatrix} \left(\phi_{1}\left[i,n\right] - \hat{\phi}_{pre}\left[i,n\right]\right) & \cdots & 0 \\ 0 & \cdots & 0 \\ \vdots & \vdots & \vdots \\ 0 & \cdots & 0 \\ 0 & \cdots & \left(\phi_{N_{slot}^{RA}}\left[i,n\right] - \hat{\phi}_{pre}\left[i,n\right]\right) \end{pmatrix}$$

$$[30]$$

En supposant que l'interférence résiduelle $i''[n^r]$ puisse être approchée par une variable aléatoire gaussienne, il est possible de définir ainsi le rapport signal/interférence SIR :

$$SIR = \frac{E_{pay}\left\{ \left| \overline{r^{u}\left[n^{r}\right]} \right|^{2} \right\}}{E_{pay}\left\{ \left| \overline{i^{u}\left[n^{r}\right]} \right|^{2} \right\}} \approx \frac{E_{pay}\left\{ A\left[n^{r}\right]^{2} \right\}}{E_{pay}\left\{ A\left[n^{r}\right]^{2} \left(\phi_{k}\left[i,n\right] - \hat{\phi}_{pre}\left[i,n^{\hat{r}}\right]\right)^{2} \right\}} = \frac{1}{\sigma_{\Delta\phi}^{2}}$$

$$[31]$$

où :

- $E_{pay}\{\}$ représente la valeur attendue sur le champ de la réplique interférente qui correspond aux données utiles ;

$$\Delta\hat{\phi}_{k} = \phi_{k}\left[i,n\right] - \hat{\phi}_{pre}\left[i,n^{r}\right]$$

$$\sigma^2_{\Delta\phi} = E_{pay}\left\{\Delta\hat{\phi}_k^{\,2}\right\}.$$

Pour $\sigma_{\Delta\phi} = 5°$, SIR=21 dB et pour $\sigma_{\Delta\phi} = 15°$, SIR=11,6 dB. Lorsque les données utiles des paquets sont protégées par un code de correction des erreurs, on peut estimer qu'une erreur d'estimation de phase jusqu'à 15° (écart-type) peut être toléré. Comme cela sera montré plus loin, pour des systèmes de communications comportant un canal à bas débit, comme la norme SATMODE, le premier mode de réalisation de l'invention conduit à des erreurs d'estimation de phase bien plus importants, d'où la nécessité d'un perfectionnement.

Conformément au deuxième mode de réalisation de l'invention, l'estimation de phase $\hat{\phi}_{pre}$, constante sur toute l'extension de la réplique à effacer, est remplacée par une estimation de phase $\hat{\phi} = \left[\hat{\phi}_1, ... \hat{\phi}_{N^{RA}_{slot}}\right]$ qui prend une valeur différente en correspondance de chaque échantillon représentatif des données utiles de ladite réplique ; $\hat{\phi}$ demeure égale à $\hat{\phi}_{pre}$ en correspondance des échantillons du préambule. L'équation [29] est donc modifiée de la manière suivante :

$$\Delta\mathbf{P}'[i,n^r] = \begin{pmatrix} exp\left[j\left(\phi_1[i,n] - \hat{\phi}_{pre}[i,n^r]\right)\right] - 1 & \cdots & 0 \\ 0 & \cdots & 0 \\ \vdots & \vdots & \vdots \\ 0 & \cdots & 0 \\ 0 & \cdots & exp\left[j\left(\phi_{N^{RA}_{slot}}[i,n] - \hat{\phi}_{pre}[i,n^r]\right)\right] - 1 \end{pmatrix}$$

[32]

Se pose donc le problème de déterminer l'estimation de phase variable dans le temps $\bar{\hat{\phi}} = \left[\hat{\phi}_1, ... \hat{\phi}_{N^{RA}_{slot}}\right]$. Conformément au deuxième mode de réalisation de l'invention, une estimation adaptée est obtenue à l'aide d'une boucle à verrouillage de phase aidée par les données (DA-PLL, de l'anglais Data-Aided Phase Locked Loop), les données en question étant représentée par la séquence binaire représentative de la charge utile de la réplique à effacer, qui est connue grâce à la réplique « propre » correspondante. Les équations de la boucle à verrouillage de phase sont :

$$\hat{\phi}_k\left[i,n^r\right] = \hat{\phi}_{k-1}\left[i,n^r\right] - \gamma e_\phi(k) \text{ pour } k = N^{RA}_{pre} + 1, ..., N^{RA}_{pre} + N^{RA}_{pay}$$

$$e_\phi(k) = \Im\left\{r\left[n^r, N_{iter}\right](k) \cdot \hat{s}^*_{pay}[i,n](k) \cdot exp\left(-j\hat{\phi}_{k-1}\left[i,n^r\right]\right)\right\} \quad [33]$$

$$\gamma = \frac{4B_L T_s}{\eta}$$

où $\eta$ est la pente de la courbe en S de la boucle ($\eta$=1 pour des signaux à puissance normalisée) et $B_L T_s$ est la bande de bruit normalisée de la boucle, un paramètre conventionnel de conception des boucles à verrouillage de phase, reliant le gain de la boucle à son temps de réponse. La boucle est initialisée par l'estimation de phase obtenue à partir du préambule, autrement dit $\hat{\phi}_k\left[i,n^r\right]\Big|_{k=N^{RA}_{pre}} = \hat{\phi}_{pre}$.

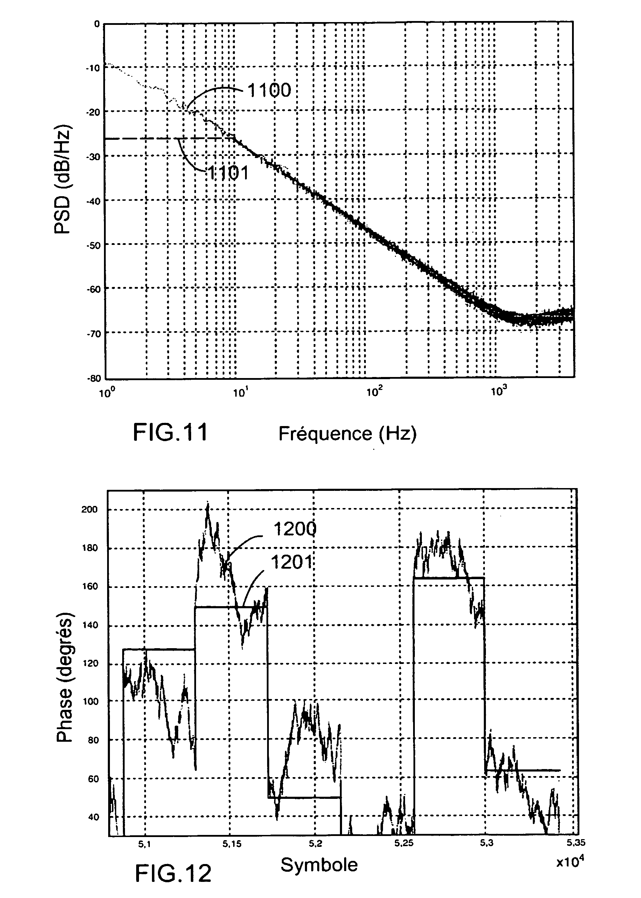

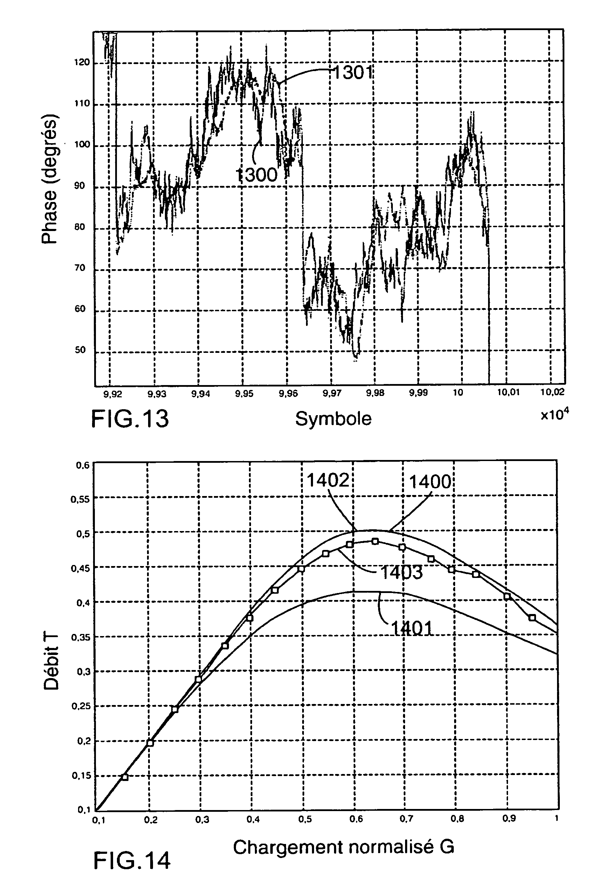

L'effet de l'utilisation d'une estimation de phase variable dans le temps sur le SIR sera maintenant étudié dans le cas d'un système SATMODE opérant à un débit de 8 kbaud en présence d'un bruit de phase synthétique approchant le masque de bruit de phase SATMODE (pour plus de précisions, voir le document SATMODE modem layer specification SMD-SP-SES-01000-1-2. La densité spectrale de puissance (PSD) du bruit de phase (ligne 1100) et le masque de référence (ligne 1101) sont représentés sur la figure 11. Les simulations numériques effectuées montrent qu'en l'absence de bruit de phase, $\sigma_{\Delta\phi} = \sigma_{\Delta\theta} \approx 8°$, qui correspond à un SIR de 17.1 dB. Lorsque le bruit de phase est introduit, l'utilisation d'une estimation de phase basée uniquement sur le préambule conduit à $_{\Delta\phi} \approx 29,7°$, largement dominé par la contribution dudit bruit de phase ($\sigma_{\Delta\psi} \approx 28,7°$) ; par conséquent le SIR tombe à 5,7 dB. L'introduction de la boucle à verrouillage de phase (équations [33]) nécessite la détermination de la valeur de $B_L T_s$ optimale, qui minimise la variance de l'erreur d'estimation de phase ; on trouve $B_L T_s = 0,01$, ce qui conduit à ramener la contribution du bruit de phase, $\sigma_{\Delta\psi}$ à une valeur de 9,75° et l'erreur de phase total à $\sigma_{\Delta\phi} = 10°$, ce qui correspond à un SIR d'environ 15 dB. L'insuffisance du premier mode de réalisation de l'invention dans l'application prise en considération ici est mise en évidence par la figure 12, qui permet de comparer la dépendance temporelle de la phase pour un signal simulé caractérisé par un rapport signal sur bruit $E_s/N_o = 6$dB (ligne 1200) et de l'estimation de phase basée sur le préambule (ligne 1201), constante par intervalles. L'efficacité de la boucle à verrouillage de phase peut être appréciée d'un point de vue qualitatif en comparant la dépendance réelle de la phase pour ce même signal simulé (ligne 1300 sur la figure 13) avec l'estimation

$$\overline{\hat{\phi}} = \left[ \hat{\phi}_1, \dots \hat{\phi}_{N^{RA}_{slot}} \right]$$ (ligne 1301). Il est important d'observer que, dans les figures 12 et 13, les paquets de donnés ont été représentés comme s'ils occupaient des segments temporels consécutifs, alors qu'en réalité ils sont séparés par un nombre aléatoire de segments temporels.

La figure 14 représente le débit T en fonction du chargement normalisé G pour le système SATMODE (8 kbaud,

$E_s/N_o = 6$dB, $N^{RA}_{guard} = 5,$ $N_{iter} = 10$):

- en l'absence de bruit de phase, ligne 1400 ;
- en présence du bruit de phase de la figure 11, avec une estimation de phase basée uniquement sur le préambule, ligne 1401 ;
- en présence du bruit de phase de la figure 11, avec une estimation de phase dépendante du temps obtenue à l'aide de la boucle à verrouillage de phase de l'équation 29, ligne 1402 ;
- en présence du bruit de phase de la figure 11, avec une estimation de phase dépendante du temps obtenue à l'aide de la boucle à verrouillage de phase de l'équation 29, dans lequel la distribution statistique de la puissance de transmission des terminaux satellites suit une loi log-normale avec un écart type de 2 dB, ligne 1403.

On peut voir que l'utilisation d'une boucle à verrouillage de phase permet au système d'opérer sans perte de débit appréciable même en présence d'un bruit de phase, ce qui n'est pas le cas de l'estimation de phase basée uniquement sur le préambule. Par contre, cette dernière est bien adaptée à des systèmes opérant à des débits plus élevés, tels qu'un système DVB - RCS à 128 kbaud, pour lequel les deux modes de réalisation de l'invention sont sensiblement équivalents.

Le troisième mode de réalisation ne vise pas tant à améliorer les performances du procédé de l'invention, quant à le simplifier, et à simplifier la structure des équipements de transmission et réception permettant de le mettre en oeuvre. En effet, la nécessité d'utiliser une famille de préambules à la place du préambule unique du protocole (D) SA implique une complexité additionnelle particulièrement au niveau de la réception, où une recherche en parallèle des préambules doit être effectuée. En outre, l'utilisation d'un préambule unique améliore la compatibilité en amont du protocole de l'invention avec les normes existantes, telles que SATMODE, DVB-RCS et IPoS.

Conformément au troisième mode de réalisation, cette complexité additionnelle peut être évitée en utilisant un même préambule pour tous les paquets transmis, comme cela est fait dans l'art antérieur, et en exploitant la connaissance de la séquence binaire exprimant les données utiles d'une réplique à régénérer et effacer, connaissance acquise à partir de la réplique « propre » correspondante, pour estimer le paramètre de phase.

En effet, si un même préambule est utilisé pour tous les paquets, l'équation [11] ne permet plus d'estimer la phase d'une réplique ayant subi une collision (le préambule unique reste utilisable pour identifier et démoduler les répliques « propres »). Par contre, la séquence binaire exprimant les données utiles (« payload »), qui est connue lorsque la réplique « propre » correspondante a été identifiée, peut être considérée approximativement orthogonale aux séquences des autres paquets : elle peut donc être utilisée pour l'estimation de phase d'une manière similaire aux préambules du premier mode de réalisation.

En général, on n'utilise pas toute la portion du signal reçu qui contient les données utiles, mais seulement un nombre $L_{coherent}$ de symboles, à partir du symbole $K_0$, avec $1 \leq K_0 \leq N_{pay}^{RA} - L_{coherent}$ L'estimation de phase est donc

donnée par :

$$\phi_{coherent}\left(n^r, N_{iter}\right) = arg\left\{\sum_{k=K_0+N_{guard}^{RA}+N_{preamble}^{RA}}^{k=K_0+N_{guard}^{RA}+N_{preamble}^{RA}+L_{coherent}} r\left[n^r, N_{iter}\right](k) \cdot \hat{s}_{pay}^*\left[i, n^r\right](k)\right\} \qquad [34]$$

où $N_{guard}^{RA}$ et $N_{preamble}^{RA}$ représentent le nombre de symboles de garde et du préambule, $r[n^r, N_{iter}](k)$ le $k^e$ échantillon du segment temporel dans lequel s'est vérifiée une collision, $\hat{s}_{pay}[i,n^r](k)$ le $k^e$ symbole représentatif des données utiles de la réplique « propre » correspondante à la réplique « sale » que l'on veut effacer et * l'opérateur de conjugaison complexe.

Comme cela a été discuté plus haut, l'équation [34] exploite les propriétés de corrélation croisée des séquences binaires représentatives des données utiles de différents paquets, alors que l'équation [11] exploite les propriétés de corrélation croisée des préambules.

Il est également possible de combiner le deuxième et le troisième mode de réalisation de l'invention en utilisant l'équation [34] pour initialiser la boucle à verrouillage de phase de l'équation [33]. De cette façon, on cumule les avantages des deux modes de réalisation : on obtient l'immunité au bruit de phase, particulièrement en cas de faible débit, caractéristique du deuxième mode de réalisation, et la simplicité de mise en oeuvre du troisième mode. Si la boucle à verrouillage de phase est utilisée, il est avantageux de choisir $K_0=1$, c'est-à-dire d'utiliser pour l'initialisation les premiers $L_{coherent}$ symboles des données utiles du paquet et de démarrer la boucle au milieu de la fenêtre d'initialisation (c'est-à-dire à partir du symbole $L_{coherent}/2$ ou $(L_{coherent}+1)/2$). Par contre, si on utilise directement $\phi_{cohérent}$ pour la régénération de la réplique interférente à effacer il est généralement préférable de choisir les symboles centrales du paquet, c'est-à-dire de prendre $K_0=(N_{pay}^{RA}+L_{coherent})/2$.

On considère maintenant les résultats de quatre simulations numériques de mise en oeuvre du troisième mode de réalisation de l'invention.

Premièrement on considère une transmission sans bruit de phase, avec $N_{guard}^{RA}=5$. un débit de 128 kbaud, un rapport signal sur bruit $E_s/N_o=6$ dB et un chargement normalisé G=0,4. Le tableau suivant exprime l'écart type de l'erreur d'estimation de phase $\sigma_{\Delta\phi}=\sigma_{\Delta\theta}$ et le SIR correspondant en fonction du nombre $L_{coherent}$ d'échantillons utilisés pour l'estimation de phase :

| $L_{coherent}$ | $\sigma_{\Delta\phi}=\sigma_{\Delta0}$ (degrés) | SIR (dB) |
|---|---|---|
| 5 | 23,8° | 7,6 |
| 15 | 13,3° | 13,3 |
| 31 | 8,50 | 16,5 |
| 63 | 6,1° | 19,4 |

Pour comparaison, si un préambule de $N_{pre}^{RA}=31$ symboles est utilisé pour l'estimation de phase, conformément au premier mode de réalisation on obtient $\sigma_{\Delta\phi}=\sigma_{\Delta\theta}=8°$. On constate donc que, pour un nombre égal de symboles utilisés pour l'estimation de phase, le troisième mode de réalisation présente des performances tout à fait comparables au premier mode de réalisation, malgré sa plus grande simplicité de mise en oeuvre. L'erreur d'estimation de phase peut encore être réduit en augmentant $L_{coherent}$: la valeur optimale de ce paramètre est le résultat d'un compromis entre la réduction de l'erreur de phase et l'augmentation de la complexité (augmentation du nombre de termes de la somme dans l'équation [34]).

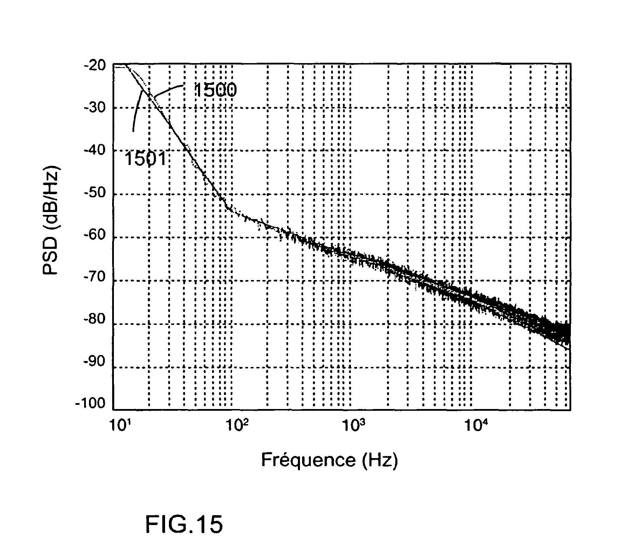

On considère maintenant le cas où un bruit de phase synthétique correspondant au masque de bruit de phase de la norme DVB-RCS (voir figure 15: la ligne 1500 représente la densité spectrale de puissance du bruit synthétique utilisé dans les simulations, la ligne 1501 le masque de bruit de référence) est également présent. Dans ce cas, il est avantageux de prendre $K_0=(N_{pay}^{RA}+L_{coherent})/2$. Les résultats sont reproduits dans le tableau suivant :

| $L_{coherent}$ | $\sigma_{\Delta\phi} = \sqrt{\sigma_{\Delta\theta}^2 + \sigma_{\Delta\psi}^2}$ (degrés) | SIR (dB) |
|---|---|---|
| 15 | 13,5° | 12,5 |
| 31 | 10,6° | 14,6 |

(suite)

| $L_{coherent}$ | $\sigma_{\Delta\phi} = \sqrt{\sigma_{\Delta\theta}^2 + \sigma_{\Delta\psi}^2}$ (degrés) | SIR (dB) |
|---|---|---|
| 50 | 8,27° | 16,8 |
| 70 | 7,56° | 17,6 |
| 150 | 6,25° | 19,2 |
| 212 | 5,86° | 19,8 |
| 424 | 5,3° | 20,6 |

$N_{pay}{}^{RA}$=424, donc la dernière ligne du tableau correspond à l'utilisation intégrale des données utiles pour l'estimation de phase.

On observe que, si on maintient $L_{coherent}$ =31, le bruit de phase introduit une dégradation de l'erreur de phase ($\sigma_{\Delta\phi}$ =10,6°), mais qu'il suffit de prendre $L_{coherent}$=51 pour compenser entièrement cette dégradation, au prix d'une modeste augmentation de la complexité de calcul. Dans le cas du premier mode de réalisation (estimation basée sur le préambule), la dégradation introduite par le bruit de phase est encore plus élevée ($\sigma_{\Delta\phi}$ passe de 8° à 12,8°) et beaucoup plus difficile à compenser: en effet, une augmentation de la longueur du préambule comporte une diminution correspondante du nombre de symboles d'information transportés par un paquet. La supériorité du troisième mode de réalisation en présence de bruit de phase peut s'expliquer par le fait que l'on utilise pour l'estimation la partie centrale du paquet, ce qui conduit à un résultat plus proche de la phase moyenne que dans le cas où l'on utilise le préambule, c'est-à-dire les premiers $N_{pre}{}^{RA}$ symboles.

Si on utilise une estimation basée sur les premiers $L_{coherent}$ =31 symboles ($K_0$=1 ) des données utiles pour initialiser une boucle à verrouillage de phase (équation [33]) avec $B_L T_s$=0,01, l'erreur de phase décroît jusqu'à 7,7°, ce qui correspond à SIR=17,7 dB.

Une dernière simulation correspond à un système SATMODE opérant à 8 kbaud, en présence du bruit de phase de la figure 11. Les résultats sont reproduits dans le tableau suivant, où la deuxième colonne correspond à une estimation uniquement basée sur $L_{coherent}$ symboles des données utiles pris dans la partie centrale du paquet, alors que la troisième colonne correspond à une estimation obtenue à l'aide de la boucle à verrouillage de phase de l'équation [33], initialisée en prenant en compte les premiers $L_{coherent}$ symboles des données utiles:

| $L_{coherent}$ | $\sigma_{\Delta\phi} = \sqrt{\sigma_{\Delta\theta}^2 + \sigma_{\Delta\psi}^2}$ (degrés) Sans boucle à verrouillage de phase | $\sigma_{\Delta\phi} = \sqrt{\sigma_{\Delta\theta}^2 + \sigma_{\Delta\psi}^2}$ (degrés) Avec boucle à verrouillage de phase |
|---|---|---|
| 31 | 22,2° | 10° |
| 70 | 19,9° | 9,9° |
| 150 | 18,9° | 9,9° |
| 212 | 5,86° | 10,2° |
| 424 | 5,3° | --- |

On observe que, contrairement aux cas précédents, l'erreur d'estimation de phase ne diminue pas constamment à l'augmenter de $L_{coherent}$, une augmentation au-delà de 70 - 150 symboles étant même nuisible. Cela s'explique par le fait que plus $L_{coherent}$ est grand, plus petit est le nombre de symboles sur lesquels la boucle peut agir.

En conclusion, le troisième mode de réalisation de l'invention permet de simplifier considérablement les opérations d'émission et surtout de récupération à la réception, et cela sans dégrader sensiblement les performances de l'invention. En présence d'un bruit de phase important et/ou dans des applications à bas débit, ce troisième mode de réalisation peut être avantageusement combiné avec le deuxième.

**Revendications**

**1.** Procédé de transmission de paquets de données à travers un canal de transmission partagé par une pluralité d'utilisateurs ($RU_1$, $RU_2$) comportant des étapes:

- de génération (511) d'au moins deux répliques de chaque paquet à transmettre ;
- d'émission (515) à travers ledit canal de transmission desdites répliques, séparées par des décalages temporels et/ou de fréquence aléatoires ;

**caractérisé en ce qu'**il comprend également une étape (512) d'insertion, dans chaque réplique, d'une information de signalisation permettant de localiser temporellement et/ou en fréquence la ou les autres répliques du même paquet.

2. Procédé selon la revendication 1, dans lequel ladite étape (511) de génération comporte la génération d'exactement deux répliques de chaque paquet à transmettre.

3. Procédé selon la revendication 1 ou 2 comportant également une étape (514) de génération et d'insertion d'une séquence binaire d'acquisition dans chaque paquet à transmettre.

4. Procédé selon la revendication 3 dans lequel ladite séquence binaire d'acquisition est un préambule.

5. Procédé selon la revendication 3 ou 4 dans lequel une séquence binaire d'acquisition différente, choisie de manière aléatoire à l'intérieur d'une famille de séquences binaires pesudo-aléatoires quasi-orthogonales, est générée pour chaque paquet à transmettre et est insérée dans chaque réplique dudit paquet.

6. Procédé selon la revendication 5 dans lequel ladite famille de séquences binaires pesudo-aléatoires quasi-orthogonales est choisie parmi les codes utilisés par les systèmes à accès multiple par répartition de code, tels que les codes de Gold et les codes de Gold étendus en longueur.

7. Procédé selon la revendication 3 ou 4 dans lequel une même séquence binaire d'acquisition est générée et insérée dans chaque réplique de tous les paquets à transmettre.

8. Procédé selon l'une des revendications précédentes dans lequel chaque réplique transmise comporte également un ou plusieurs symboles de garde définissant un intervalle de garde.

9. Procédé selon l'une des revendications 3 à 8 comportant également une étape (513) de codage desdites répliques par un code de corrections des erreurs sans voie de retour, ou FEC, ladite étape (513) de codage étant effectuée après ladite étape (512) d'insertion d'une information de signalisation et avant ladite étape (514) d'insertion d'une séquence binaire d'acquisition.

10. Procédé selon l'une des revendications précédentes dans lequel ladite étape (515) d'émission est effectuée, pour chaque réplique, à l'intérieur d'un segment temporel d'une trame TDMA, accès multiple à répartition du temps.

11. Procédé selon la revendication 10 dans lequel ladite trame TDMA appartient à une super-trame TDMA-MF, accès multiple à répartition du temps à fréquences multiples.

12. Procédé selon la revendication 10 ou 11 dans lequel ladite étape (515) d'émission est effectuée, pour chaque réplique, à l'intérieur d'un segment temporel d'une trame TDMA choisi parmi les segments temporels rendus disponibles par un plan temporel des rafales, ou BTP, commun à tous lesdits utilisateurs.

13. Procédé selon l'une des revendications précédentes dans lequel ladite étape (515) d'émission est effectuée en utilisant une technique de modulation de phase et d'amplitude.

14. Procédé selon l'une des revendications précédentes dans lequel ladite étape (515) d'émission des paquets de données est effectuée avec une périodicité ($N_i$) déterminée, propre à chaque utilisateur, comportant également une étape (613, 616) de modification de ladite périodicité de transmission en fonction d'un état de chargement (G) du canal de transmission partagé.

15. Procédé selon la revendication 14 dans lequel ladite étape (613, 616) de modification de la périodicité de transmission comporte :

- lorsque ledit état de chargement (G) du canal de transmission partagé dépasse une valeur de seuil ($G_{th}$), une augmentation de ladite périodicité de transmission ($N_i$) avec une première probabilité ($P_i^{up}$); et

- lorsque ledit état de chargement (G) du canal de transmission partagé descend au-dessous de ladite valeur ($G_{th}$), une diminution de ladite périodicité de transmission ($N_i$) avec une deuxième probabilité ($P_i^{down}$).

16. Procédé selon la revendication 15 dans lequel ladite première probabilité ($P_i^{up}$) est d'autant plus faible que ladite périodicité de transmission ($N_i$) est grande et ladite deuxième probabilité ($P_i^{down}$) est d'autant plus grande que ladite périodicité de transmission ($N_i$) est faible.

17. Procédé selon l'une des revendications 14 à 16 dans lequel ladite étape (613, 616) de modification de la périodicité de transmission ($N_i$) comporte le maintien de ladite périodicité ($N_i$) entre une valeur limite inférieure et une valeur limite supérieure.

18. Procédé selon l'une des revendications 15 à 17, lorsqu'elle dépend des revendications 2 et 10, dans lequel ladite valeur de seuil ($G_{th}$) de l'état de chargement (G), du canal de transmission partagé est compris entre 0,35 et 0,45 paquets par segment temporel.

19. Procédé selon l'une des revendications précédentes comportant une étape (517) de retransmission d'un paquet déjà transmis, ladite étape (517) étant exécutée lorsqu'une information de retour indiquant que ledit paquet à été correctement reçu par son destinataire n'est pas reçue dans un délai déterminé.

20. Procédé selon la revendication 19 dans lequel ladite étape (517) de retransmission comporte une double retransmission dudit paquet.

21. Procédé selon l'une des revendications précédentes dans lequel la valeur absolue dudit décalage temporel et/ou de fréquence est déterminée à l'aide d'une fonction pseudo-aléatoire d'au moins une partie des données utiles contenues dans chaque paquet et dans lequel ladite information de signalisation est une information de signe dudit décalage temporel et/ou de fréquence.

22. Procédé selon l'une des revendications précédentes dans lequel le canal de transmission partagé est un canal de transmission sans fils.

23. Procédé selon la revendication 22 dans lequel le canal de transmission partagé est un canal de transmission par satellite (SAT).

24. Procédé de transmission de paquets de données à travers un canal de transmission partagé par une pluralité d'utilisateurs (RU1, RU2) comportant:

    - le stockage des paquets à transmettre dans une file d'attente ;
    - lorsque le contenu ((Q-K) bits) de ladite file d'attente dépasse une première valeur de seuil ($L_{th1}$), la réservation d'une capacité de transmission pour ledit contenu ((Q-K) bits) et sa transmission par un protocole d'assignation en fonction de la demande (DA) ;
    - lorsque le contenu ((Q-K) bits) de ladite file d'attente, diminué de ladite capacité de transmission réservée, est inférieur à une deuxième valeur de seuil ($L_{th2}$), la transmission dudit contenu ((Q-K) bits) par un procédé (RA) selon l'une des revendications 1 à 23.

25. Procédé selon la revendication 24 dans lequel lesdites première ($L_{th1}$) et deuxième ($L_{th2}$) valeur de seuil du contenu de ladite file d'attente sont déterminées de manière adaptative.

26. Procédé de récupération à la réception de paquets de données transmis à travers un canal de transmission partagé par une pluralité d'utilisateurs ($RU_1$, $RU_2$) par un procédé selon l'une des revendications 1 à 25 comportant des étapes :

    - d'identification (552), à l'intérieur d'un signal reçu, des répliques qui ne sont pas affectées par des collisions destructives avec des répliques d'autres paquets ;
    - d'extraction (553) de l'information contenue dans les répliques identifiées ;

    **caractérisé en ce qu'**il comporte également des étapes :

    - de localisation temporelle (554) et/ou en fréquence de la ou des autres répliques du même paquet en utilisant l'information de signalisation extraite des répliques identifiées ;
- d'effacement (556) en bande de base complexe de ladite ou desdites autres répliques par un algorithme d'effacement d'interférence, lorsqu'elle ou elles sont affectées par des collisions destructives avec des répliques d'autres paquets ; et
- d'identification (557) d'autres paquets qui, après ladite étape d'effacement, ne sont plus affectées par des collisions destructives et d'extraction de l'information y contenue.

27. Procédé selon la revendication 26 dans lequel l'étape (552) d'identification desdites répliques qui ne sont pas affectées par des collisions destructives avec d'autres répliques comporte une étape de recherche d'une séquence binaire d'acquisition.

28. Procédé selon la revendication 27 dans lequel ladite séquence binaire d'acquisition est un préambule.

29. Procédé selon la revendication 27 ou 28 dans lequel ladite étape de recherche d'une séquence binaire d'acquisition comporte des calculs de corrélation entre ledit signal reçu et des séquences binaires pseudo-aléatoires appartenant à une famille de séquences binaires pesudo-aléatoires quasi-orthogonales.

30. Procédé selon la revendication 29 dans lequel lesdits calculs de corrélation sont effectués en parallèle pour toutes les séquences binaires de ladite famille.

31. Procédé selon l'une des revendications 27 à 30 dans lequel ladite étape (553) d'extraction de l'information contenue dans chaque réplique ainsi identifiée comporte une étape d'estimation de paramètres du canal à partir de la séquence binaire d'acquisition de ladite réplique et une étape de démodulation utilisant les résultats de ladite opération d'estimation.

32. Procédé selon la revendication 31 dans lequel ladite étape d'estimation de paramètres du canal comporte une estimation de paramètres d'amplitude, de fréquence, de phase et de temporisation de ladite réplique.

33. Procédé selon l'une des revendications 26 à 32 dans lequel ladite étape d'effacement des répliques affectées par des collisions comporte une étape préalable (555) de régénération en bande de base complexe desdites réplique.

34. Procédé selon les revendications 32 et 33 dans lequel ladite étape (555) de régénération en bande de base complexe comporte l'utilisation desdites estimations des paramètres d'amplitude, de fréquence, et de temporisation, ainsi que d'une estimation d'un paramètre de phase obtenue directement à partir de la portion du signal reçu contenant ladite réplique à régénérer.

35. Procédé selon la revendication 34 dans lequel ladite estimation d'un paramètre de phase est obtenue à partir de la portion du signal reçu contenant la séquence binaire d'acquisition de ladite réplique à régénérer, en exploitant la connaissance de la séquence binaire de ladite séquence binaire d'acquisition.

36. Procédé selon la revendication 34 dans lequel ladite estimation d'un paramètre de phase est obtenue à partir d'au moins une fraction de la portion du signal reçu contenant les données utiles de ladite réplique à régénérer, en exploitant la connaissance de la séquence binaire exprimant lesdites données utiles acquise à partir de la réplique correspondante non affectée par des collision.

37. Procédé selon la revendication 34 dans laquelle ladite estimation d'un paramètre de phase est une estimation dépendante du temps, obtenue au moyen d'une boucle de verrouillage de phase aidée par les données exploitant la connaissance de la séquence binaire exprimant les données utiles de ladite réplique à régénérer, acquise à partir de la réplique correspondante non affectée par des collision.

38. Procédé selon la revendication 37 dans laquelle ladite boucle de verrouillage de phase aidée par les données est initialisée par une estimation indépendant du temps dudit paramètre de phase obtenue conformément à la revendication 35 ou à la revendication 36.

39. Procédé selon l'une des revendications 26 à 38 dans lequel ladite étape de localisation temporelle (554) et/ou en fréquence comporte l'extraction d'une information de signalisation représentative du signe du décalage temporel et/ou de fréquence entre chaque réplique identifié et la ou les autres répliques du même paquet et la détermination de la valeur absolue dudit décalage à l'aide d'une fonction pseudo-aléatoire d'au moins une partie des données utiles contenues dans ledit paquet.

40. Procédé selon l'une des revendications 26 à 39 dans lequel lesdites étapes de localisation temporelle (554) et/ou en fréquence de la ou des autres répliques du même paquet en utilisant l'information de signalisation extraite des répliques identifiées, d'effacement (556) en bande de base complexe de ladite ou desdites autres répliques par un algorithme d'effacement d'interférence et d'identification (557) d'autres paquets qui, après ladite étape d'effacement, ne sont plus affectées par des collisions destructives et d'extraction de l'information y contenue sont répétées de manière itérative jusqu'à que l'information contenue dans tous les paquets reçus ait été extraite ou un nombre maximal ($N_{max}$) d'itérations ait été atteint.

41. Equipement de transmission de paquets de données à travers un canal de transmission partagé par une pluralité d'utilisateurs ($RU_1$, $RU_2$) comportant :

- un dispositif (800, 803) de génération d'au moins deux répliques de chaque paquet à transmettre avec un décalage temporel et/ou en fréquence aléatoire entre elles ; et
- un dispositif d'émission (811 a, 811 b, 812) desdites répliques à travers ledit canal de transmission ;

**caractérisé en ce qu'**il comporte également :

- un dispositif (804) de génération, pour chaque réplique, d'une information de signalisation permettant de localiser temporellement et/ou en fréquence la ou les autres répliques du même paquet ; et
- un premier multiplexeur (805) permettant d'assembler chaque réplique et l'information de signalisation correspondante pour les transmettre conjointement.

42. Equipement selon la revendication 41, comportant également :

- un dispositif (807) de génération d'une même séquence binaire d'acquisition pour chaque réplique d'un même paquet ; et
- un deuxième multiplexeur (808) permettant d'assembler chaque réplique et la séquence binaire d'acquisition correspondante pour les transmettre conjointement.

43. Equipement selon la revendication 42 dans lequel ladite séquence binaire pseudo-aléatoire d'acquisition est un préambule.

44. Equipement selon la revendication 42 ou 43, dans lequel ledit dispositif (807) de génération d'une séquence binaire d'acquisition est un dispositif de génération d'une séquence binaire pesudo-aléatoire choisie de manière aléatoire à l'intérieur d'une famille de séquences binaires quasi-orthogonales.

45. Equipement selon la revendication 42 ou 43, dans lequel ledit dispositif (807) de génération d'une séquence binaire d'acquisition est un dispositif de génération d'une même séquence binaire d'acquisition pour tous les paquets à transmettre.

46. Equipement selon l'une des revendications 41 à 45 comprenant également un dispositif (800) de contrôle de flux pour recevoir une information d'état de chargement (G) du canal de transmission partagé et pour modifier une périodicité de transmission ($N_i$) en fonction de ladite information d'état de chargement du canal de transmission partagé.

47. Equipement selon la revendication 46 dans lequel ledit dispositif (800) de contrôle de flux est un dispositif pour augmenter ladite périodicité de transmission ($N_i$) avec une première probabilité ($P_i^{up}$) lorsque ledit état de chargement (G) du canal de transmission partagé dépasse une valeur de seuil ($G_{th}$), et pour diminuer ladite périodicité de transmission ($N_i$) avec une deuxième probabilité ($P_i^{up}$) lorsque ledit état de chargement (G) du canal de transmission partagé descend au-dessous de ladite valeur de seuil ($G_{th}$).

48. Equipement selon l'une des revendications 41 à 47 comprenant également un dispositif (800) pour recevoir une information de retour indiquant que ledit paquet à été correctement reçu par son destinataire et pour retransmettre ledit paquet à défaut de réception de ladite information de retour dans un délai déterminé.

49. Equipement selon l'une des revendications 41 à 48 dans lequel ledit dispositif (800, 803) de génération d'au moins deux répliques de chaque paquet comporte un moyen de détermination de la valeur absolue dudit décalage temporel et/ou de fréquence à l'aide d'une fonction pseudo-aléatoire d'au moins une partie des données utiles contenues dans chaque paquet.

50. Equipement de récupération à la réception de paquets de données transmis à travers un canal de transmission partagé par une pluralité d'utilisateurs ($RU_1$, $RU_2$) par un procédé selon l'une des revendications 1 à 25 comportant :

- un dispositif (910) d'identification des répliques qui ne sont pas affectées par des collisions destructives avec des répliques d'autres paquets ;
- un dispositif (909, 911) d'extraction de l'information contenue dans les répliques identifiées ;

**caractérisé en ce qu'**il comporte également:

- un dispositif d'utilisation (907) de l'information de signalisation extraite pour localiser temporellement et/ou en fréquence la ou les autres répliques du même paquet ; et
- un dispositif d'effacement (906) en bande de base complexe de ladite ou desdites autres répliques par un algorithme d'effacement d'interférence, lorsqu'elle ou elles sont affectées par des collisions destructives avec des répliques d'autres paquets.

51. Equipement selon la revendication 50 dans lequel ledit dispositif (910) d'identification des répliques qui ne sont pas affectées par des collisions destructives avec des répliques d'autres paquets est un dispositif de recherche en parallèle de séquences binaires pesudo-aléatoires d'acquisition appartenant à une famille de séquences binaires quasi-orthogonales.

52. Equipement selon la revendication 50 dans lequel ledit dispositif (910) d'identification des répliques qui ne sont pas affectées par des collisions destructives avec des répliques d'autres paquets est un dispositif de recherche d'une séquence binaire d'acquisition unique pour tous les paquets.

53. Equipement selon la revendication 51 ou 52 dans lequel ladite ou lesdites séquences binaires d'acquisition sont des préambules.

54. Equipement selon l'une des revendications 51 à 53 dans lequel ledit dispositif (909, 911) d'extraction de l'information contenue dans chaque réplique identifiée comporte un dispositif (909) pour estimer des paramètres du canal à partir d'une séquence binaire d'acquisition de ladite réplique pour démoduler ladite réplique en utilisant lesdites estimations.

55. Equipement selon la revendication 54 dans lequel ledit dispositif (909) pour estimer des paramètres du canal est un dispositif pour estimer des paramètres d'amplitude, de fréquence, de phase et de temporisation desdites répliques.

56. Equipement selon l'une des revendications 50 à 55 comportant également un dispositif (914) de régénération en bande de base complexe de ladite ou desdites autres répliques à effacer, la ou les répliques régénérées en bande de base complexe étant fournies en entrée audit dispositif (906) d'effacement.

57. Equipement selon la revendication 56 comportant également un dispositif (907) d'estimation d'un paramètre de phase de la réplique à effacer à partir de la portion du signal reçu contenant ladite réplique à effacer, ledit paramètre de phase étant fourni en entrée audit dispositif (914) de régénération en bande de base complexe.

58. Equipement selon la revendication 57 dans lequel ledit dispositif (907) d'estimation d'un paramètre de phase est adapté pour estimer ledit paramètre de phase à partir de la portion du signal reçu contenant une séquence binaire d'acquisition de ladite réplique à effacer, en exploitant la connaissance de ladite séquence binaire d'acquisition.

59. Equipement selon la revendication 57 dans lequel ledit dispositif (907) d'estimation d'un paramètre de phase est adapté pour estimer ledit paramètre de phase à partir d'au moins une fraction de la portion du signal reçu contenant les données utiles de ladite réplique à régénérer, en exploitant la connaissance de la séquence binaire exprimant lesdites données utiles acquise à partir de la réplique correspondante non affectée par des collision.

60. Equipement selon la revendication 57 dans lequel ledit dispositif (907) d'estimation d'un paramètre de phase comprend une boucle de verrouillage de phase aidée par les données pour réaliser une estimation dépendante du temps dudit paramètre de phase en exploitant la connaissance de la séquence binaire exprimant les données utiles de ladite réplique à régénérer acquise à partir de la réplique correspondante non affectée par des collision.

61. Equipement selon la revendication 60 dans lequel ledit dispositif (907) d'estimation d'un paramètre de phase comprend une unité d'initialisation de ladite boucle à verrouillage de phase par une estimation indépendante du temps obtenue à partir de la portion du signal reçu contenant une séquence binaire d'acquisition de ladite réplique à effacer, en exploitant la connaissance de ladite séquence binaire.

62. Equipement selon la revendication 60 dans lequel ledit dispositif (907) d'estimation d'un paramètre de phase comprend une unité d'initialisation de ladite boucle à verrouillage de phase par une estimation indépendante du temps obtenue à partir d'au moins une fraction de la portion du signal reçu contenant les données utiles de ladite réplique à régénérer, en exploitant la connaissance de la séquence binaire exprimant lesdites données utiles acquise à partir de la réplique correspondante non affectée par des collision.

63. Equipement selon l'une des revendications 50 à 62 dans lequel ledit dispositif d'utilisation (907) de l'information de signalisation extraite comporte un moyen pour déterminer la valeur absolue du décalage temporel et/ou de fréquence entre chaque réplique identifiée et la ou les autres répliques du même paquet à l'aide d'une fonction pseudo-aléatoire d'au moins une partie des données utiles contenues dans ledit paquet, et le signe dudit décalage à l'aide de ladite information de signalisation.

**Claims**

1. A method of transmitting data packets over a transmission channel shared by a plurality of users ($RU_1$, $RU_2$), the method comprising steps of:

   - generating (511) at least two replicas of each packet to be transmitted; and
   - sending (515) said replicas over said transmission channel, separated by random time and/or frequency shifts, the method being **characterized in that** it further comprises a step (512) of inserting signaling information into each replica for enabling the other replica(s) of the same packet to be located in the time and/or frequency domain.

2. A method according to claim 1, wherein said generation step (511) comprises the generation of exactly two replicas of each packet to be transmitted.

3. A method according to claim 1 or claim 2 further comprising a step (514) of generating and inserting an acquisition bit sequence into each packet to be transmitted.

4. A method according to claim 3, wherein said acquisition bit sequence is a preamble.

5. A method according to claim 3 or claim 4, wherein a different acquisition bit sequence selected at random within a family of quasi-orthogonal pseudo-random bit sequences is generated for each packet to be transmitted and is inserted into each replica of said packet.

6. A method according to claim 5, wherein said family of quasi-orthogonal pseudo-random bit sequences is selected from the codes used by code distribution multiple access systems, such as Gold codes and extended lengths Gold codes.

7. A method according to claim 3 or claim 4, wherein the same acquisition bit sequence is generated and inserted into each replica of all the packets to be transmitted.

8. A method according to any preceding claim, wherein each replica transmitted also includes one or more guard symbols defining a guard time.

9. A method according to any one of claims 3 to 8 further comprising a step (513) of coding said replicas using a forward error correction (FEC) code, said coding step (513) being effected after said step (512) of inserting signaling information and before said step (514) of inserting an acquisition bit sequence.

**10.** A method according to any preceding claim, wherein said sending step (515) is effected for each replica within a time slot of a time division multiple access (TDMA) frame.

**11.** A method according to claim 10, wherein said TDMA frame belongs to a time division multiple access multiple frequency (TDMA-MF) superframe.

**12.** A method according to claim 10 or claim 11, wherein said sending step (515) is effected for each replica in a time slot of a TDMA frame selected from the time slots made available by a burst time plan (BTP) common to all said users.

**13.** A method according to any preceding claim, wherein said sending step (515) uses a phase and amplitude modulation technique.

**14.** A method according to any preceding claim, wherein said step (515) of sending data packets is effected with a particular period ($N_i$) specific to each user and further comprising a step (613, 616) of modifying said transmission period as a function of a loading state (G) of the shared transmission channel.

**15.** A method according to claim 14, wherein said step (613, 616) of modifying the transmission period comprises:

- increasing said transmission period ($N_i$) with a first probability ($P_i^{up}$) if said loading state (G) of the shared transmission channel exceeds a threshold value ($G_{th}$); and
- reducing said transmission period ($N_i$) with a second probability ($P_i^{down}$) if said loading state (G) of the shared transmission channel falls below said value ($G_{th}$).

**16.** A method according to claim 15, wherein said first probability ($P_i^{up}$) is inversely proportional to said transmission period ($N_i$) and said second probability ($P_i^{down}$) is inversely proportional to said transmission period ($N_i$).

**17.** A method according to any one of claims 14 to 16, wherein said step (613, 616) of modifying the transmission period ($N_i$) comprises maintaining said period ($N_i$) between a lower limit value and an upper limit value.

**18.** A method according to any one of claims 15 to 17 when dependent on claims 2 and 10, wherein said threshold value ($G_{th}$) of the loading state (G) of the shared transmission channel is from 0.35 to 0.45 packets per time slot.

**19.** A method according to any preceding claim comprising a step (517) of retransmitting a packet already transmitted, said step (517) being executed if return information indicating that said packet has been received correctly by its addressee is not received within a particular time.

**20.** A method according to claim 19, wherein said retransmission step (517) comprises double retransmission of said packet.

**21.** A method according to any preceding claim, wherein the absolute value of said time and/or frequency shift is determined with the aid of a pseudo-random function of at least a portion of the payload data contained in each packet and wherein said signaling information is information about the sign of said time and/or frequency shift.

**22.** A method according to any preceding claim, wherein the share transmission channel is a wireless transmission channel.

**23.** A method according to claim 22, wherein the shared transmission channel is a satellite transmission channel (SAT).

**24.** A method of transmitting data packets over a transmission channel shared by a plurality of users (RU1, RU2), the method comprising:

- storing packets to be transmitted in a queue;
- when the content ((Q-K) bits) of said queue exceeds a first threshold value ($L_{th1}$), reserving transmission capacity for said content ((Q-K) bits) and transmitting it using a demand assignment (DA) protocol; and
- transmitting said content ((Q-K) bits) by a method (RA) according to any one of claims 1 to 23 if the content ((Q-K) bits) of said queue less said reserved transmission capacity is below a second threshold value ($L_{th2}$).

**25.** A method according to claim 24, wherein said first threshold value ($L_{th1}$) and said second threshold value ($L_{th2}$) of

the content of said queue are determined adaptively.

26. A method of recovering on reception data packets transmitted over a transmission channel shared by a plurality of users ($RU_1$, $RU_2$) by a method according to any one of claims 1 to 25, the method comprising steps of:

- identifying (552), in a received signal, replicas that are not affected by destructive collisions with replicas of other packets; and
- extracting (553) information contained in the identified replicas,

the method being **characterized in that** it further comprises steps of:

- locating (554) other replica(s) of the same packet in the time and/or frequency domain using signaling information extracted from the identified replicas;
- canceling (556) said other replica(s) at complex baseband level using an interference cancellation algorithm if they are affected by destructive collisions with replicas of other packets; and
- identifying (557) other packets which, after said cancellation step, are no longer affected by destructive collisions, and extracting information contained therein.

27. A method according to claim 26, wherein the step (552) of identifying said replicas that are not affected by destructive collisions with other replicas comprises a step of searching for an acquisition bit sequence.

28. A method according to claim 27, wherein said acquisition bit sequence is a preamble.

29. A method according to claim 27 or claim 28, wherein said step of searching for an acquisition bit sequence comprises calculating the correlation between said received signal and pseudo-random bit sequences belonging to a family of quasi-orthogonal pseudo-random bit sequences.

30. A method according to claim 29, wherein said correlation calculations are effected in parallel for all the binary sequences of said family.

31. A method according to any one of claims 27 to 30, wherein said step (553) of extracting information contained in each replica thus identified comprises a step of estimating channel parameters from the acquisition bit sequence of said replica and a demodulation step using the results of said estimation operation.

32. A method according to claim 31, wherein said step of estimating channel parameters comprises estimating amplitude, frequency, phase, and delay parameters of said replica.

33. A method according to any one of claims 26 to 32, wherein said step of canceling replicas affected by collisions comprises a prior step (555) of regenerating said replicas at complex baseband level.

34. A method according to claims 32 and 33, wherein said complex baseband regeneration step (555) comprises using said amplitude, frequency and delay parameter estimates and an estimate of a phase parameter obtained directly from the portion of the received signal containing said replica to be regenerated.

35. A method according to claim 34, wherein said phase parameter is estimated from the portion of the received signal containing the acquisition bit sequence of said replica to be regenerated, exploiting the known bit sequence of said acquisition bit sequence.

36. A method according to claim 34, wherein said phase parameter is estimated from at least one fraction of the portion of the received signal containing the payload data of said replica to be regenerated, exploiting the known bit sequence expressing said payload data acquired from the corresponding replica not affected by collisions.

37. A method according to claim 34, wherein said estimate of a phase parameter is a time-dependent estimate obtained by means of a data-aided phase-locked loop exploiting the known bit sequence expressing the payload data of said replica to be regenerated acquired from the corresponding replica not affected by collision.

38. A method according to claim 37, wherein said data-aided phase-locked loop is initialized with a time-independent estimate of said phase parameter obtained in accordance with claim 35 or claim 36.

**39.** A method according to any one of claims 26 to 38, wherein said step (554) of location in the time and/or frequency domain comprises extracting signaling information representing the sign of the time and/or frequency shift between each identified replica and other replica(s) of the same packet and determining the absolute value of said shift with the aid of a pseudo-random function of at least a portion of the payload data contained in said packet.

**40.** A method according to any one of claims 26 to 39, wherein said step (554) of locating other replica(s) of the same packet in the time and/or frequency domain using the signaling information extracted from the identified replicas, said step (556) of canceling said other replica(s) at complex baseband level by an interference cancellation algorithm, and said step (557) of identifying other packets which, after said cancellation step, are no longer affected by destructive collisions and extracting the information contained therein, are repeated iteratively until the information contained in all of the received packets has been extracted or a maximum number ($N_{max}$) of iterations is reached.

**41.** Equipment for transmitting data packets over a transmission channel shared by a plurality of users ($RU_1$, $RU_2$), the equipment comprising:

    - a device (800, 803) for generating at least two replicas of each packet to be transmitted with a random time and/or frequency shift between them; and
    - a device (811a, 811b, 812) for sending said replicas over said transmission channel,

the equipment being **characterized in that** it further comprises:

    - a device (804) for generating, for each replica, signaling information for locating other replica(s) of the same packet in the time and/or frequency domain; and
    - a first multiplexer (805) for assembling each replica and the corresponding signaling information for the conjoint transmission thereof.

**42.** Equipment according to claim 41, further comprising:

    - a device (807) for generating the same acquisition bit sequence for each replica of the same packet; and
    - a second multiplexer (808) for assembling each replica and the corresponding acquisition bit sequence for the conjoint transmission thereof.

**43.** Equipment according to claim 42, wherein said acquisition pseudo-random bit sequence is a preamble.

**44.** Equipment according to claim 42 or claim 43, wherein said device (807) for generating an acquisition bit sequence a pseudo-random bit sequence selected at random from a family of quasi-orthogonal bit sequences.

**45.** Equipment according to claim 42 or claim 43, wherein said device (807) for generating an acquisition bit sequence generates the same acquisition bit sequence for all the packets to be transmitted.

**46.** Equipment according to any one of claims 41 to 45 further comprising a flow control device (800) for receiving information as to a loading state (G) of the shared transmission channel and for modifying a transmission period ($N_i$) as a function of said shared transmission channel loading state information.

**47.** Equipment according to claim 46, wherein said flow control device (800) is a device for increasing said transmission period ($N_i$) with a first probability ($P_i^{up}$) if said loading state (G) of the shared transmission channel exceeds a threshold value ($G_{th}$) and reducing said transmission period ($N_i$) with a second probability ($P_i^{up}$) if said loading state (G) of the shared transmission channel falls said threshold value ($G_{th}$).

**48.** Equipment according to any one of claims 41 to 47, further comprising a device (800) for receiving return information indicating that said packet has been received correctly by its addressee and for retransmitting said packet failing reception of said return information in a predetermined time.

**49.** Equipment according to any one of claims 41 to 48, wherein said device (800, 803) for generating at least two replicas of each packet comprises means for determining the absolute value of said time and/or frequency shift with the aid of a pseudo-random function of at least a portion of the payload data contained in each packet.

**50.** Equipment for recovering at a receiver data packets transmitted over a transmission channel shared by a plurality

of users (RU$_1$, RU$_2$) by a method according to any one of claims 1 to 25, the equipment comprising:

- a device (910) for identifying replicas that are not affected by destructive collisions with replicas of other packets; and
- a device (909, 911) for extracting information contained in the identified replicas, the equipment being **characterized in that** it further comprises:
- a device (907) for using the extracted signaling information to locate other replica(s) of the same packet in the time and/or frequency domain; and
- a device (906) for canceling said other replica(s) at complex baseband level using an interference cancellation algorithm if it is or they are affected by destructive collisions with replicas of other packets.

51. Equipment according to claim 50, wherein said device (910) for identifying replicas that are not affected by destructive collisions with replicas of other packets searches in parallel for acquisition pseudo-random bit sequences belonging to a family of quasi-orthogonal bit sequences.

52. Equipment according to claim 50, wherein said device (910) for identifying replicas that are not affected by destructive collisions with replicas of other packets searches for a single acquisition bit sequence for all the packets.

53. Equipment according to claim 51 or claim 52, wherein said acquisition bit sequence(s) are preambles.

54. Equipment according to any one of claims 51 to 53, wherein said device (909, 911) for extracting information contained in each identified replica comprises a device (909) for estimating parameters of the channel from an acquisition bit sequence of said replica to demodulate said replica using said estimates.

55. Equipment according to claim 54, wherein said device (909) for estimating channel parameters estimates amplitude, frequency, phase and delay parameters of said replicas.

56. Equipment according to any one of claims 50 to 55 further comprising a device (914) for regenerating said other replica(s) to be cancelled at complex baseband level, the replica(s) regenerated at complex baseband level being supplied to the input of said cancellation device (906).

57. Equipment according to claim 56 also comprising a device (907) for estimating a phase parameter of the replica to be cancelled from the portion of the received signal containing said replica to be cancelled, said phase parameter being supplied to the input of said device (914) for regeneration at complex baseband level.

58. Equipment according to claim 57, wherein said device (907) for estimating a phase parameter estimates said phase parameter from the portion of the received signal containing an acquisition bit sequence of said replica to be cancelled, exploiting the known acquisition bit sequence.

59. Equipment according to claim 57, wherein said device (907) for estimating a phase parameter estimates said phase parameter from at least one fraction of the portion of the received signal containing the payload data of said replica to be regenerated, exploiting the known bit sequence expressing said payload data acquired from the corresponding replica not affected by collision.

60. Equipment according to claim 57, wherein said device (907) for estimating a phase parameter comprises a data-aided phase-locked loop for producing a time-dependent estimate of said phase parameter exploiting the known bit sequence expressing the payload data of said replica to be regenerated acquired from the corresponding replica not affected by collision.

61. Equipment according to claim 60, wherein said device (907) for estimating a phase parameter comprises a unit for initializing said phase-locked loop to a time-independent estimate obtained from the portion of the received signal containing an acquisition bit sequence of said replica to be cancelled, exploiting the known binary sequence.

62. Equipment according to claim 60, wherein said device (907) for estimating a phase parameter comprises a unit for initializing said phase-locked loop to a time-independent estimate obtained from at least a fraction of the portion of the received signal containing the payload data of said replica to be regenerated, exploiting the known bit sequence expressing said payload data acquired from the corresponding replica not affected by collisions.

**63.** Equipment according to any one of claims 50 to 62, wherein said device (907) for using the extracted signaling information comprises means for determining the absolute value of the time and/or frequency shift between each identified replica and the other replica(s) of the same packet using a pseudo-random function of at least a portion of the payload data contained in said packet and the sign of said shift, with the aid of said signaling information.

**Patentansprüche**

**1.** Verfahren zur Übertragung von Datenpaketen über einen von einer Mehrzahl von Anwendern ($RU_1$, $RU_2$) gemeinsam genutzten Sendekanal, welches die folgenden Schritte umfasst:

- Erzeugen (511) von mindestens zwei Repliken von jedem zu übertragenden Paket;
- Senden (515) der Repliken, die durch zufällige Zeit- und/oder Frequenzabstände voneinander getrennt sind, über den Sendekanal;

**dadurch gekennzeichnet, dass** es ferner einen Schritt (512) des Einfügens in jede Replik einer Signalisierungsinformation umfasst, welche es ermöglicht, die andere Replik oder die anderen Repliken des gleichen Paketes in der Zeit und/oder Frequenz zu lokalisieren.

**2.** Verfahren nach Anspruch 1, bei dem der Schritt (511) des Erzeugens das Erzeugen von genau zwei Repliken von jedem zu übertragenden Paket umfasst.

**3.** Verfahren nach Anspruch 1 oder 2, welches ferner einen Schritt (514) des Erzeugens und Einfügens einer binären Akquisitionssequenz in jedes zu übertragende Paket umfasst.

**4.** Verfahren nach Anspruch 3, bei dem die binäre Akquisitionssequenz eine Präambel ist.

**5.** Verfahren nach Anspruch 3 oder 4, bei dem für jedes zu übertragende Paket eine verschiedene binäre Akquisitionssequenz, die auf zufällige Weise innerhalb einer Familie von pseudozufälligen, quasi-orthogonalen binären Sequenzen ausgewählt wurde, erzeugt und in jede Replik des Paketes eingefügt wird.

**6.** Verfahren nach Anspruch 5, bei dem die Familie von pseudozufälligen, quasi-orthogonalen binären Sequenzen unter den Codes ausgewählt wird, die von CDMA (Codemultiplex-Vielfachzugriff)-Systemen verwendet werden, wie etwa Gold-Folgen und Gold-Folgen mit erweiterter Länge.

**7.** Verfahren nach Anspruch 3 oder 4, bei dem eine gleiche binäre Akquisitionssequenz erzeugt und in jede Replik aller zu übertragenden Pakete eingefügt wird.

**8.** Verfahren nach einem der vorherigen Ansprüche, bei dem jede übertragene Replik ferner ein oder mehrere Schutzsymbole aufweist, die ein Schutzintervall definieren.

**9.** Verfahren nach einem der Ansprüche 3 bis 8, welches ferner einen Schritt (513) des Codierens der Repliken mithilfe eines Vorwärtsfehlerkorrektur- oder FEC (*Forward Error Correction*)-Codes umfasst, wobei der Schritt (513) des Codierens nach dem Schritt (512) des Einfügens einer Signalisierungsinformation und vor dem Schritt (514) des Einfügens einer binären Akquisitionssequenz durchgeführt wird.

**10.** Verfahren nach einem der vorherigen Ansprüche, bei dem der Schritt (515) des Sendens für jede Replik innerhalb eines Zeitsegments eines TDMA (*Time Division Multiple Access;* Zeitvielfachzugriff)-Rahmens durchgeführt wird.

**11.** Verfahren nach Anspruch 10, bei dem der TDMA-Rahmen zu einem MF-TDMA (Mehrfrequenz-Zeitvielfachzugriff)-Superrahmen gehört.

**12.** Verfahren nach Anspruch 10 oder 11, bei dem der Schritt (515) des Sendens für jede Replik innerhalb eines Zeitsegments eines TDMA-Rahmens durchgeführt wird, das unter denjenigen Zeitsegmenten ausgewählt ist, die durch einen allen der Anwender gemeinsamen Burst-Zeitplan oder BTP (*Burst Time Plan*) verfügbar gemacht werden.

**13.** Verfahren nach einem der vorherigen Ansprüche, bei dem der Schritt (515) des Sendens unter Verwendung einer Phasen- und Amplitudenmodulationsmethode durchgeführt wird.

14. Verfahren nach einem der vorherigen Ansprüche, bei dem der Schritt (515) des Sendens der Datenpakete mit einer bestimmten, jedem Anwender zu eigenen Periodizität ($N_i$) durchgeführt wird, und welches ferner einen Schritt (613, 616) des Modifizierens der Sende-Periodizität in Abhängigkeit von einem Belastungszustand (G) des gemeinsam genutzten Sendekanals umfasst.

15. Verfahren nach Anspruch 14, bei dem der Schritt (613, 616) des Modifizierens der Sende-Periodizität folgendes umfasst:

   - falls der Belastungszustand (G) des gemeinsam genutzten Sendekanals einen Schwellwert ($G_{th}$) übersteigt, eine Erhöhung der Sende-Periodizität ($N_i$) mit einer ersten Wahrscheinlichkeit ($P_i^{up}$); und
   - falls der Belastungszustand (G) des gemeinsam genutzten Sendekanals diesen Wert ($G_{th}$) unterschreitet, eine Verringerung der Sende-Periodizität ($N_i$) mit einer zweiten Wahrscheinlichkeit ($P_i^{down}$).

16. Verfahren nach Anspruch 15, bei dem die erste Wahrscheinlichkeit ($P_i^{up}$) umso geringer ist, je größer die Sende-Periodizität ($N_i$) ist, und die zweite Wahrscheinlichkeit ($P_i^{down}$) umso höher ist, je geringer die Sende-Periodizität ($N_i$) ist.

17. Verfahren nach einem der Ansprüche 14 bis 16, bei dem der Schritt (613, 616) des Modifizierens der Sende-Periodizität ($N_i$) das Halten der Periodizität ($N_i$) zwischen einem unteren Grenzwert und einem oberen Grenzwert umfasst.

18. Verfahren nach einem der Ansprüche 15 bis 17, sofern er von den Ansprüchen 2 und 10 abhängig ist, bei dem der Schwellwert ($G_{th}$) des Belastungszustandes (G) des gemeinsam genutzten Sendekanals zwischen 0,35 und 0,45 Paketen pro Zeitsegment liegt.

19. Verfahren nach einem der vorherigen Ansprüche, welches einen Schritt (517) des Rückübertragens eines bereits übertragenen Paketes umfasst, wobei dieser Schritt (517) ausgeführt wird, falls eine Rückinformation, welche anzeigt, dass das Paket von seinem Adressaten ordnungsgemäß empfangen wurde, nicht innerhalb einer vorgegebenen Zeitspanne empfangen wird.

20. Verfahren nach Anspruch 19, bei dem der Schritt (517) des Rückübertragens eine zweifache Rückübertragung des Paketes umfasst.

21. Verfahren nach einem der vorherigen Ansprüche, bei dem der Absolutwert des Zeit- und/oder Frequenzabstandes mithilfe einer pseudozufälligen Funktion mindestens eines Teils der in jedem Paket enthaltenen Nutzdaten bestimmt wird, und bei dem die Signalisierungsinformation eine Information über das Vorzeichen des Zeit- und/oder Frequenzabstandes ist.

22. Verfahren nach einem der vorherigen Ansprüche, bei dem der gemeinsam genutzte Sendekanal ein drahtloser Sendekanal ist.

23. Verfahren nach Anspruch 22, bei dem der gemeinsam genutzte Sendekanal ein Satelliten-Sendekanal (SAT) ist.

24. Verfahren zur Übertragung von Datenpaketen über einen von einer Mehrzahl von Anwendern ($RU_1$, $RU_2$) gemeinsam genutzten Sendekanal, wobei das Verfahren folgendes umfasst:

   - Speichern der zu übertragenden Pakete in einer Warteschlange;
   - falls der Inhalt ((Q-K) Bit) der Warteschlange einen ersten Schwellwert ($L_{th1}$) überschreitet, Reservieren einer Sendekapazität für diesen Inhalt ((Q-K) Bit) und seine Übertragung durch ein Protokoll für die Zuweisung in Abhängigkeit von der Anfrage (DA);
   - falls der Inhalt ((Q-K) Bit) der Warteschlange abzüglich der reservierten Sendekapazität unter einem zweiten Schwellwert ($L_{th2}$) liegt, Übertragen des Inhalts ((Q-K) Bit) mittels eines Verfahrens (RA) nach einem der Ansprüche 1 bis 23.

25. Verfahren nach Anspruch 24, bei dem der erste ($L_{th1}$) und der zweite ($L_{th2}$) Schwellwert des Inhalts der Warteschlange auf adaptive Weise bestimmt werden.

**26.** Verfahren zur Wiedergewinnung beim Empfang von Datenpaketen, die mit einem Verfahren nach einem der Ansprüche 1 bis 25 über einen durch eine Mehrzahl von Anwendern ($RU_1$, $RU_2$) gemeinsam genutzten Sendekanal übertragen werden, wobei das Verfahren die folgenden Schritte umfasst:

- Identifizieren (552) innerhalb eines Empfangssignals der Repliken, die nicht von destruktiven Kollisionen mit Repliken anderer Pakete betroffen sind;
- Extrahieren (553) der in den identifizierten Repliken enthaltenen Information;

**dadurch gekennzeichnet, dass** es ferner die folgenden Schritte umfasst:

- Lokalisieren der anderen Replik oder der anderen Repliken des gleichen Paketes in der Zeit (554) und/oder Frequenz unter Verwendung der aus den identifizierten Repliken extrahierten Signalisierungsinformation;
- Löschen (556) der anderen Replik bzw. der anderen Repliken im komplexen Basisband durch einen Interferenzunterdrückungsalgorithmus *(Interference Cancellation Algorithm),* wenn sie von destruktiven Kollisionen mit Repliken anderer Pakete betroffen ist bzw. sind; und
- Identifizieren (557) von anderen Paketen, die nach dem Schritt des Löschens nicht mehr von destruktiven Kollisionen betroffen sind, und Extrahieren der darin enthaltenen Information.

**27.** Verfahren nach Anspruch 26, bei dem der Schritt (552) des Identifizierens der Repliken, die nicht von destruktiven Kollisionen mit anderen Repliken betroffen sind, einen Schritt der Suche nach einer binären Akquisitionssequenz umfasst.

**28.** Verfahren nach Anspruch 27, bei dem die binäre Akquisitionssequenz eine Präambel ist.

**29.** Verfahren nach Anspruch 27 oder 28, bei dem der Schritt der Suche nach einer binären Akquisitionssequenz Berechnungen der Korrelation zwischen dem Empfangssignal und pseudozufälligen binären Sequenzen, die einer Familie von pseudozufälligen, quasi-orthogonalen binären Sequenzen angehören, umfasst.

**30.** Verfahren nach Anspruch 29, bei dem die Berechnungen der Korrelation für alle binären Sequenzen der genannten Familie parallel durchgeführt werden.

**31.** Verfahren nach einem der Ansprüche 27 bis 30, bei dem der Schritt (553) des Extrahierens der Information, die in jeder solcherart identifizierten Replik enthalten ist, einen Schritt des Schätzens von Parametern des Kanals auf der Grundlage der binären Akquisitionssequenz der Replik und einen Schritt des Demodulierens unter Verwendung der Ergebnisse der Schätzungsoperation umfasst.

**32.** Verfahren nach Anspruch 31, bei dem der Schritt des Schätzens von Parametern des Kanals ein Schätzen von Parametern der Amplitude, der Frequenz, der Phase und der Verzögerung der Replik umfasst.

**33.** Verfahren nach einem der Ansprüche 26 bis 32, bei dem der Schritt des Löschens der von Kollisionen betroffenen Repliken einen voraus gehenden Schritt (555) des Regenierens der Repliken im komplexen Basisband umfasst.

**34.** Verfahren nach den Ansprüchen 32 und 33, bei dem der Schritt (555) des Regenierens im komplexen Basisband die Verwendung der Schätzungen der Parameter der Amplitude, der Frequenz und der Verzögerung, sowie einer Schätzung eines Parameters der Phase, der unmittelbar auf der Grundlage desjenigen Abschnitts des Empfangssignals erhalten wird, der die zu regenerierende Replik enthält, umfasst.

**35.** Verfahren nach Anspruch 34, bei dem die Schätzung eines Parameters der Phase auf der Grundlage des Abschnitts des Empfangssignals, der die binäre Akquisitionssequenz der zu regenerierenden Replik enthält, unter Nutzung der Kenntnis der binären Sequenz der binären Akquisitionssequenz erhalten wird.

**36.** Verfahren nach Anspruch 34, bei dem die Schätzung eines Parameters der Phase auf der Grundlage mindestens eines Bruchteils des Abschnitts des Empfangssignals, der die Nutzdaten der zu regenerierenden Replik enthält, unter Nutzung der Kenntnis der die Nutzdaten exprimierenden binären Sequenz, die auf der Grundlage der entsprechenden, nicht von Kollisionen betroffenen Replik akquiriert wird, erhalten wird.

**37.** Verfahren nach Anspruch 34, bei dem die Schätzung eines Parameters der Phase eine zeitabhängige Schätzung ist, die mithilfe einer datengestützten Phasenregelschleife erhalten wird, welche die Kenntnis der die Nutzdaten exprimierenden binären Sequenz der zu regenerierenden Replik nutzt, die auf der Grundlage der entsprechenden, nicht von Kollisionen betroffenen Replik akquiriert wird.

**38.** Verfahren nach Anspruch 37, bei dem die datengestützte Phasenregelschleife durch eine zeitunabhängige Schätzung des gemäß Anspruch 35 oder Anspruch 36 erhaltenen Parameters der Phase initialisiert wird.

**39.** Verfahren nach einem der Ansprüche 26 bis 38, bei dem der Schritt des Lokalisierens in der Zeit (554) und/oder Frequenz das Extrahieren einer Signalisierungsinformation, die repräsentativ für das Vorzeichen des Zeit- und/oder Frequenzabstandes zwischen jeder identifizierten Replik und der anderen Replik oder den anderen Repliken des gleichen Paketes, und die Bestimmung des Absolutwertes des Abstandes mithilfe einer pseudozufälligen Funktion von zumindest einem Teil der in dem Paket enthaltenen Nutzdaten umfasst.

**40.** Verfahren nach einem der Ansprüche 26 bis 39, bei dem die Schritte des Lokalisierens in der Zeit (554) und/oder in der Frequenz der anderen Replik(en) des gleichen Paketes unter Verwendung der aus den identifizierten Repliken extrahierten Siqnalisierungsinformation, des Löschens (556) im komplexen Basisband der anderen Replik(en) durch einen Interferenzunterdrückungsalgorithmus, und des Identifizierens (557) weiterer Pakete, die nach dem Schritt des Löschens nicht mehr von destruktiven Kollisionen betroffen sind, und des Extrahierens der darin enthaltenen information iterativ wiederholt werden, bis die in allen empfangenen Paketen enthaltene Information extrahiert wurde oder eine maximale Anzahl ($N_{max}$) von Iterationen erreicht ist.

**41.** Vorrichtung zum Übertragen von Datenpaketen über einen von einer Mehrzahl von Anwendern ($RU_1$, $RU_2$) gemeinsam genutzten Sendekanal, welche aufweist:

    - eine Einrichtung (800, 803) zum Erzeugen von mindestens zwei Repliken von jedem zu übertragenden Paket mit einem zufälligen Zeit- und/oder Frequenzabstand zwischen ihnen; und
    - eine Einrichtung zum Senden (811a, 811b, 812) der Repliken über den Sendekanal;

**dadurch gekennzeichnet, dass** sie ferner aufweist:

    - eine Einrichtung (804) zum Erzeugen einer Signalisierungsinformation für jede Replik, welche es ermöglicht, die andere Replik oder die anderen Repliken des gleichen Paketes in der Zeit und/oder Frequenz zu lokalisieren; und
    - einen ersten Multiplexer (805), der es ermöglicht, jede Replik und die entsprechende Signalisierungsinformation zusammen zu stellen, um sie gemeinsam zu übertragen.

**42.** Vorrichtung nach Anspruch 41, welche ferner aufweist:

    - eine Einrichtung (807) zum Erzeugen einer gleichen binären Akquisitionssequenz für jede Replik eines gleichen Paketes; und
    - einen zweiten Multiplexer (808), der es ermöglicht, jede Replik und die entsprechende binäre Akquisitionssequenz zusammen zu stellen, um sie gemeinsam zu übertragen.

**43.** Vorrichtung nach Anspruch 42, bei der die pseudozufällige binäre Akquisitionssequenz eine Präambel ist.

**44.** Vorrichtung nach Anspruch 42 oder 43, bei der die Einrichtung (807) zum Erzeugen einer binären Akquisitionssequenz eine Einrichtung zum Erzeugen einer pseudozufälligen binären Sequenz ist, die auf zufällige Weise innerhalb einer Familie von quasi-orthogonalen binären Sequenzen ausgewählt wurde.

**45.** Vorrichtung nach Anspruch 42 oder 43, bei der die Einrichtung (807) zum Erzeugen einer binären Akquisitionssequenz eine Einrichtung zum Erzeugen einer gleichen binären Akquisitionssequenz für alle zu übertragenden Pakete ist.

**46.** Vorrichtung nach einem der Ansprüche 41 bis 45, welche ferner eine Flusssteuervorrichtung (800) zum Empfangen einer Information über den Belastungszustand (G) des gemeinsam genutzten Sendekanals und zum Modifizieren einer Sende-Periodizität ($N_i$) in Abhängigkeit von der Information über den Belastungszustand des gemeinsam genutzten Sendekanals aufweist.

**47.** Vorrichtung nach Anspruch 46, bei der die Flusssteuervorrichtung (800) eine Einrichtung ist, um die Sende-Peri-

odizität ($N_i$) mit einer ersten Wahrscheinlichkeit ($P_i^{up}$) zu erhöhen, falls der Belastungszustand (G) des gemeinsam genutzten Sendekanals einen Schwellwert ($G_{th}$) übersteigt, und um die Sende-Periodizität ($N_i$) mit einer zweiten Wahrscheinlichkeit ($P_i^{down}$) zu verringern, falls der Belastungszustand (G) des gemeinsam genutzten Sendekanals den Schwellwert ($G_{th}$) unterschreitet.

48. Vorrichtung nach einem der Ansprüche 41 bis 47, welche ferner eine Einrichtung (800) zum Empfangen einer Rückinformation, die anzeigt, dass das Paket von seinem Adressaten ordnungsgemäß empfangen wurde, und zum erneuten Senden des Paketes bei nicht erfolgtem Empfang der Rückinformation innerhalb einer vorgegebenen Verzögerung aufweist.

49. Vorrichtung nach einem der Ansprüche 41 bis 48, bei der die Einrichtung (800, 803) zum Erzeugen von mindestens zwei Repliken jedes Paketes ein Mittel zum Bestimmen des Absolutwertes des Zeit- und/oder Frequenzabstandes mithilfe einer pseudozufälligen Funktion von zumindest einem Teil der in jedem Paket enthaltenen Nutzdaten aufweist.

50. Vorrichtung zur Wiedergewinnung beim Empfang von Datenpaketen, die mit einem Verfahren nach einem der Ansprüche 1 bis 25 über einen durch eine Mehrzahl von Anwendern ($RU_1$, $RU_2$) gemeinsam genutzten Sendekanal übertragen werden, wobei die Vorrichtung aufweist:

   - eine Einrichtung (910) zum Identifizieren der Repliken, die nicht von destruktiven Kollisionen mit Repliken anderer Pakete betroffen sind;
   - eine Einrichtung (909, 911) zum Extrahieren der in den identifizierten Repliken enthaltenen Information;

   **dadurch gekennzeichnet, dass** sie ferner aufweist:

   - eine Einrichtung zum Verwenden (907) der extrahierten Signalisierungsinformation, um die andere(n) Replik(en) des gleichen Paketes in der Zeit und/oder Frequenz zu lokalisieren; und
   - eine Einrichtung zum Löschen (906) der anderen Replik(en) im komplexen Basisband durch einen Interferenzunterdrückungsalgorithmus, wenn sie von destruktiven Kollisionen mit Repliken anderer Pakete betroffen ist bzw. sind.

51. Vorrichtung nach Anspruch 50, bei der die Einrichtung (910) zum Identifizieren der Repliken, die nicht von destruktiven Kollisionen mit Repliken anderer Pakete betroffen sind, eine Einrichtung für .die parallele Suche nach pseudozufälligen binären Akquisitionssequenzen ist, die einer Familie von quasi-orthogonalen binären Sequenzen angehören.

52. Vorrichtung nach Anspruch 50, bei der die Einrichtung (910) zum Identifizieren der Repliken, die nicht von destruktiven Kollisionen mit Repliken anderer Pakete betroffen sind, eine Einrichtung zum Suchen einer einzelnen binären Akquisitionssequenz für alle Pakete ist.

53. Vorrichtung nach Anspruch 51 oder 52, bei der die binäre(n) Sequenz(en) eine Präambel ist bzw. Präambeln sind.

54. Vorrichtung nach einem der Ansprüche 51 bis 53, bei der die Einrichtung (909, 911) zum Extrahieren der Information, die in jeder identifizierten Replik enthalten ist, eine Einrichtung (909) zum Schätzen der Parameter des Kanals auf der Grundlage einer binären Akquisitionssequenz der Replik zum Demodulieren der Replik unter Verwendung der Schätzungen aufweist.

55. Vorrichtung nach Anspruch 54, bei der die Einrichtung (909) zum Schätzen der Parameter des Kanals eine Einrichtung zum Schätzen der Parameter der Amplitude, der Frequenz, der Phase und der Verzögerung der Repliken ist.

56. Vorrichtung nach einem der Ansprüche 50. bis 55, welche ferner eine Einrichtung (914) zum Regenerieren im komplexen Basisband der zu löschenden anderen Replik(en) ist, wobei die im komplexen Basisband regenerierte(n) Replik(en) am Eingang der Löschvorrichtung (906) zur Verfügung gestellt wird bzw. werden.

57. Vorrichtung nach Anspruch 56, welche ferner eine Einrichtung (907) zum Schätzen eines Parameters der Phase der zu löschenden Replik auf der Grundlage des die zu löschende Replik enthaltenden Abschnitts des Empfangssignals aufweist, wobei der Parameter der Phase am Eingang der Einrichtung (914) zum Regenerieren im komplexen Basisband zur Verfügung gestellt wird.

**58.** Vorrichtung nach Anspruch 57, bei der die Einrichtung (907) zum Schätzen eines Parameters der Phase dazu ausgelegt ist, den Parameter der Phase auf der Grundlage des Abschnitts des Empfangssignals, der eine binäre Akquisitionssequenz der zu löschenden Replik enthält, unter Nutzung der Kenntnis der binären Akquisitionssequenz zu schätzen.

**59.** Vorrichtung nach Anspruch 57, bei der die Einrichtung (907) zum Schätzen eines Parameters der Phase dazu ausgelegt ist, den Parameter der Phase auf der Grundlage mindestens eines Bruchteils des Abschnitts des Empfangssignals, der die Nutzdaten der zu regenerierenden Replik enthält, unter Nutzung der Kenntnis der die Nutzdaten exprimierenden binären Sequenz zu schätzen, die auf der Grundlage der entsprechenden, nicht von Kollisionen betroffenen Replik akquiriert wird.

**60.** Vorrichtung nach Anspruch 57, bei der die Einrichtung (907) zum Schätzen eines Parameters der Phase eine datengestützte Phasenregelschleife aufweist für die Durchführung einer zeitabhängigen Schätzung des Parameters der Phase unter Nutzung der Kenntnis der die Nutzdaten der zu regenerierenden Replik exprimierenden binären Sequenz, die auf der Grundlage der entsprechenden, nicht von Kollisionen betroffenen Replik akquiriert wird.

**61.** Vorrichtung nach Anspruch 60, bei der die Einrichtung (907) zum Schätzen eines Parameters der Phase eine Einheit zum Initialisieren der Phasenregelschleife durch eine zeitunabhängige Schätzung auf der Grundlage desjenigen Abschnitts des Empfangssignals, der eine binäre Akquisitionssequenz der zu löschenden Replik enthält; unter Nutzung der Kenntnis der binären Sequenz aufweist.

**62.** Vorrichtung nach Anspruch 60, bei der die Einrichtung (907) zum Schätzen eines Parameters der Phase eine Einheit zum Initialisieren der Phasenregelschleife durch eine zeitunabhängige Schätzung aufweist, die auf der Grundlage mindestens eines Bruchteils des die Nutzdaten der zu regenerierenden Replik enthaltenden Abschnitts des Empfangssignals, unter Nutzung der Kenntnis der die Nutzdaten exprimierenden binären Sequenz, die auf der Grundlage der entsprechenden, nicht von Kollisionen betroffenen Replik akquiriert wurde, erhalten wird.

**63.** Vorrichtung nach einem der Ansprüche 50 bis 62, bei der die Einrichtung zum Verwenden (907) der extrahierten Signalisierungsinformation ein Mittel zum Bestimmen des Absolutwertes des Zeit- und/oder Frequenzabstandes zwischen jeder identifizierten Replik und der anderen Replik oder den anderen Repliken des gleichen Paketes mithilfe einer pseudozufälligen Funktion von mindestens einem Teil der in dem Paket enthaltenen Nutzdaten, und des Vorzeichens der Verschiebung mithilfe der Signalisierungsinformation aufweist.

FIG. 1

EP 1 686 746 B1

EP 1 686 746 B1

| L_K | DA | DA | DA | DA | | DA |
|-----|----|----|----|----|--|----|

| 4 | DA | DA | DA | DA | | DA |
|---|----|----|----|----|--|----|
| 3 | DA | DA | DA | DA | | DA |
| 2 | DA | DA | DA | DA | | DA |
| 1 | DA | DA | RA | RA | | RA |

$\qquad$ 1 $\qquad$ 2 $\qquad$ 3 $\qquad$ 4 $\qquad$ $L_F$

$T_F$

$T_{SF}$

FIG. 2A

$N_{pre-a}$

$N_{guard}$ $\quad$ $N_{pay}$

| PK1a | | | | | | | | PK4b |
|------|--|--|--|--|--|--|--|------|
| | | | | | | | | PK1b |

| PK2a | | | | PK2b | PK3a | | PK4a | | PK3b | |
|------|--|--|--|------|------|--|------|--|------|--|

1 $\quad$ 2 $\quad$ 3 $\quad$ 4 $\quad$ 5 $\qquad$ $M_{Slot}$-3 $\quad$ $M_{Slot}$-2 $\quad$ $M_{Slot}$-1 $\quad$ $M_{Slot}$

$T_{Slot}$

$T_F$

FIG. 2B

FIG.3A

FIG.3B

FIG.3C

FIG.3D

FIG.3E

FIG.3F

FIG.3G

FIG.3H

FIG.3I

FIG.3J

FIG.3K

FIG.3L

FIG.3M

FIG.3N

FIG.3O

FIG.3P

EP 1 686 746 B1

PK4a

| PK1a | | | PK3a | PK4b | ∘ ∘ ∘ | | | | |
| PK2a | | | PK2b | PK3b | ∘ ∘ ∘ | | | | |

FIG. 4B

| PK1a | | | PK3a | PK1b | ∘ ∘ ∘ | | | | |
| PK2a | | | PK2b | PK3b | ∘ ∘ ∘ | | | | |

FIG. 4A

DEBUT

510 — SEGMENTATION

511 — GENERATION DES REPLIQUES

512 — GENERATION ET INSERTION DE L'INFORMATION DE SIGNALISATION

513 — CODAGE ET MODULATION

514 — GENERATION ET INSERTION DU PREAMBULE

515 — EMISSION

516 — INFORMATION DE RETOUR REÇUE DANS UN DELAI DETERMINE ?

OUI

NON

517 — (DOUBLE) RETRANSMISSION

FIN

FIG.5A

DEBUT

550 — CONVERSION DE
FREQUENCE
ECHANTILLONNAGE
QUANTIFICATIO N
STOCKAGE

551 — $N_{iter}=1$

552 — IDENTIFICATION
DES REPLIQUES
PROPRES

553 — ESTIMATION PARAMETRES
DEMODULATION,
EXTRACTION INFORMATION

554 — LOCALISATION
REPLIQUES JUMELLES

555 — REGENERATION EN
BANDE DE BASE
COMPLEXE

556 — EFFACEMENT DES
INTERFERENCES

557 — IDENTIFICATION DES
REPLIQUES PROPRES
ET EXTRACTION
DE L'INFORMATION
Y CONTENUE

558 — $N_{iter}=N_{max}$    NON

OUI

FIN

FIG.5B

FIG.6

FIG.7

FIG. 8

FIG. 9

EP 1 686 746 B1

## FIG. 10A

Débit T vs Chargement normalisé G

1005, 1004, 1003, 1002, 1001, 1000

## FIG. 10B

Taux de perte de paquets (PLR) vs Chargement normalisé G

CRDSA
SA
DSA

1012, 1011, 1010, 2% PLR

FIG. 10C

FIG. 10D

FIG. 10E

FIG. 10F

FIG. 10G

FIG. 10H

FIG. 10I

FIG. 10J

FIG. 10K

FIG. 10L

Retard de transmission (s)

FIG. 10M          Retard de transmission (s)

FIG.11        Fréquence (Hz)

FIG.12        Symbole

FIG.13

FIG.14

FIG.15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0117171 A

**Littérature non-brevet citée dans la description**

- Digital Video Broadcasting Return Channel via Satellite (DVB-RCS) Background Book. la société Nera Broadband Satellites AS, 15 Novembre 2002
- **N. ABRAMSON.** The Aloha System - another Alternative for Computer Communications. *AFIPS Conf. Proc.,* 1970, vol. 37, 281-285
- **L. G. ROBERTS.** LOHA Packet Systems with and without Slots and Capture. *ARPANET System note,* Juin 1972, vol. 8
- **GAGAN L. CHOULDHURY ; STEPHEN S. RAPPAPORT.** Diversity ALOHA - A Random Access Scheme for Satellite Communications. *IEEE Transactions on Communications,* Mars 1983, vol. COM-31 (3
- **D. RAYCHAUDHURI ; K. JOSEPH.** Channel Access Protocols for Ku-band VSAT networks : A Comparative Evaluation. *IEEE Comm. Magazine,* Mai 1998, vol. 26 (5), 34-44
- **R. GOLD.** Optimal Binary Sequences for Spread Spectrum Multiplexing. *IEEE Trans. on Inf. Theory,* Octobre 1967, vol. 13 (4), 796-807
- **J.A.L. INCIO ; F. CERCAS ; J.A.B. GERALD ; M.D. ORTIGUEIRA.** Performance Analysis of TCH Codes and other New PN Even Balanced (PN-EB) Codes Suitable for High Processing Gain DS-SS Systems. *Actas da II Conferencia de Telecomunicaes, Conftele99,* Avril 1999, 342-346
- **R. DE GAUDENZI ; F. GIANNETTI ; M. LUISE.** Signal Recognition and Signature Code Acquisition in CDMA receivers for Mobile Communications. *IEEE Trans. on Veich. Tech.,* Février 1998, vol. 47 (1